# EUROPEAN PATENT APPLICATION

(11) **EP 4 753 301 A1**
(43) Date of publication of application: **03.06.2026**
(21) Application number: 23946215.3
(22) Date of filing: 26.07.2023
(51) Int. Cl.: H04W 8/00, H04W 36/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); GUO, Yali, Dongguan, Guangdong 523860 (CN)
(74) Representative: RGTH
(86) International application number: PCT/CN2023/109327
(87) International publication number: WO 2025/020128

(57) **Abstract**

Provided are a wireless communication method and a device. The method comprises: a first device receives first information sent by a second device, the first information being used for enabling or activating a first behavior, or the first information being used for configuring parameters of first data, or the first information being used for determining a transmission resource of the first data, wherein the first data is data having an association relationship, and the first behavior is related to the first data. In embodiments of the present application, a resource for transmitting the first data can be scheduled on the basis of the first information, facilitating the implementation of the coordinated/synchronous transmission of the first data. For example, on the basis of the first information, more transmission resources can be allocated to data that need to be synchronously transmitted, facilitating the arrival of said data at a peer end as soon as possible, and reducing the transmission time delay of said data.

## Description

### TECHNICAL FIELD

The present disclosure relates to the field of communication technologies, and in particular, to a wireless communication method and a device.

### BACKGROUND

Data with an association relationship usually requires coordinated/synchronous transmission. For example, in extended reality (XR) video streaming services, data flows in multiple modes, such as voice, video, text, and control information, usually are required to be displayed to a user synchronously. However, how to achieve coordinated/synchronous transmission of data with an association relationship is an urgent problem to be solved.

### SUMMARY

The present disclosure provides a wireless communication method and a device. Various aspects involved in the present disclosure are described below.

In a first aspect, there is provided a wireless communication method, where the method includes: receiving, by a first device, first information sent from a second device. The first information is used to enable or activate a first behavior, or to configure a parameter of first data, or to determine a transmission resource of the first data. The first data is data with an association relationship, and the first behavior is related to the first data.

In a second aspect, there is provided a wireless communication method, where the method includes: sending, by a second device, first information to a first device. The first information is used to enable or activate a first behavior, or to configure a parameter of first data, or to determine a transmission resource of the first data. The first data is data with an association relationship, and the first behavior is related to the first data.

In a third aspect, there is provided a wireless communication method, where the method includes: receiving, by a terminal device, tenth information sent from a network device. The tenth information is used to indicate configuration information for packet-based packet data convergence protocol (PDCP) data duplication transmission.

In a fourth aspect, there is provided a wireless communication method, where the method includes: sending, by a network device, tenth information to a terminal device. The tenth information is used to indicate configuration information for packet-based packet data convergence protocol (PDCP) data duplication transmission.

In a fifth aspect, there is provided a wireless communication method, where the method includes: sending, by a first network device, a cell handover request to a second network device, to perform a cell handover process of a terminal device. The cell handover process is determined based on thirteenth information. The thirteenth information is related to transmission of first data. The first data is data with an association relationship. The first network device is a source network device of the terminal device, and the second network device is a candidate target network device of the terminal device.

In a sixth aspect, there is provided a wireless communication method, where the method includes: receiving, by a second network device, a cell handover request sent from a first network device, to perform a cell handover process of a terminal device. The cell handover process is determined based on thirteenth information, and the thirteenth information is related to transmission of data with an association relationship. The first network device is a source network device of the terminal device, and the second network device is a candidate target network device of the terminal device.

In a seventh aspect, there is provided a wireless communication method, where the method includes: performing, by a terminal device, a cell handover. The cell handover process is determined based on thirteenth information. The thirteenth information is related to transmission of first data, and the first data is data with an association relationship.

In an eighth aspect, there is provided a communication device, where the device is a first device, and the device includes a receiving unit, configured to receive first information sent from a second device. The first information is used to enable or activate a first behavior, or to configure a parameter of first data, or to determine a transmission resource of the first data. The first data is data with an association relationship, and the first behavior is related to the first data.

In a ninth aspect, there is provided a communication device, where the device is a second device, and the device includes a sending unit, configured to send first information to a first device. The first information is used to enable or activate a first behavior, or to configure a parameter of first data, or to determine a transmission resource of the first data. The first data is data with an association relationship, and the first behavior is related to the first data.

In a tenth aspect, there is provided a terminal device, where the terminal device includes a receiving unit, configured to receive tenth information sent from a network device. The tenth information is used to indicate configuration information for packet-based packet data convergence protocol (PDCP) data duplication transmission.

In an eleventh aspect, there is provided a network device, where the network device includes a sending unit, configured to send tenth information to a terminal device. The tenth information is used to indicate configuration information for packet-based packet data convergence protocol (PDCP) data duplication transmission.

In a twelfth aspect, there is provided a network device, where the network device is a first network device, and the network device includes a sending unit, configured to send a cell handover request to a second network device, to perform a cell handover process of a terminal device. The cell handover process is determined based on thirteenth information. The thirteenth information is related to transmission of first data, and the first data is data with an association relationship. The first network device is a source network device of the terminal device, and the second network device is a candidate target network device of the terminal device.

In a thirteenth aspect, there is provided a network device, where the network device is a second network device, and the network device includes a receiving unit, configured to receive a cell handover request sent from a first network device, to perform a cell handover process of a terminal device. The cell handover process is determined based on thirteenth information. The thirteenth information is related to transmission of data with an association relationship. The first network device is a source network device of the terminal device, and the second network device is a candidate target network device of the terminal device.

In a fourteenth aspect, there is provided a terminal device, where the terminal device includes an execution unit, configured to perform a cell handover. The cell handover process is determined based on thirteenth information. The thirteenth information is related to transmission of first data, and the first data is data with an association relationship.

In a fifteenth aspect, there is provided a terminal device, where the terminal device includes a processor and a memory. The memory is configured to store a program, and the processor is configured to call the program in the memory to execute the method in any one of the first aspect, the second aspect, the third aspect and the seventh aspect.

In a sixteenth aspect, there is provided a network device, where the network device includes a processor and a memory. The memory is configured to store a program, and the processor is configured to call the program in the memory to execute the method in any one of the first aspect, the second aspect, the fourth aspect, the fifth aspect and the sixth aspect.

In a seventeenth aspect, there is provided a terminal device, where the terminal device includes a processor and a memory. The memory is configured to store a program, and the processor is configured to call a program in the memory to execute the method in any one of the first aspect, the second aspect, the third aspect and the seventh aspect.

In an eighteenth aspect, there is provided a network device, where the network device includes a processor and a memory. The memory is configured to store a program, and the processor is configured to call a program in the memory to execute the method in any one of the first aspect, the second aspect, the fourth aspect, the fifth aspect and the sixth aspect.

In a nineteenth aspect, there is provided a chip, where the chip includes a processor configured to call a program in a memory, so that a device equipped with the chip executes the method in any one of the first aspect, the second aspect, the third aspect and the seventh aspect.

In a twentieth aspect, there is provided a chip, where the chip includes a processor configured to call a program in a memory, so that a device equipped with the chip executes the method in any one of the first aspect, the second aspect, the fourth aspect, the fifth aspect and sixth aspect.

In a twenty-first aspect, there is provided a communication system, where the system includes the above terminal device and/or network device. In another possible design, the system may further include other devices that interact with the terminal device and/or network device in the solutions provided in the embodiments of the present disclosure.

In a twenty-second aspect, there is provided a computer-readable storage medium stored a program thereon. The program enables a computer to execute the method in any one of the first aspect, the second aspect, the third aspect and the seventh aspect.

In a twenty-third aspect, there is provided a computer-readable storage medium stored a program thereon. The program enables a computer to execute the method in any one of the first aspect, the second aspect, the fourth aspect, the fifth aspect and the sixth aspect.

In a twenty-fourth aspect, there is provided a computer program product containing a program. The program enables a computer to execute the method in any one of the first aspect, the second aspect, the third aspect and the seventh aspect.

In a twenty-fifth aspect, there is provided a computer program product containing a program. The program enables a computer to execute the method in any one of the first aspect, the second aspect, the fourth aspect, the fifth aspect and the sixth aspect.

In a twenty-sixth aspect, there is provided a computer program, where the computer program enables a computer to execute the method in any one of the first aspect, the second aspect, the third aspect and the seventh aspect.

In a twenty-seventh aspect, there is provided a computer program, where the computer program enables a computer to execute the method in any one of the first aspect, the second aspect, the fourth aspect, the fifth aspect and the sixth aspect.

In the embodiments of the present disclosure, a resource for transmitting the first data may be scheduled based on the first information, which is conducive to achieving coordinated/synchronous transmission of the first data. For example, more transmission resources may be allocated to the data that needs to be transmitted synchronously based on the first information, which helps the data that needs to be transmitted synchronously reach a peer end as quickly as possible, thereby reducing a transmission latency of the data that needs to be transmitted synchronously.

### BRIEF DESCRIPTION OF THE DRAWINGS

FIG. 1 is a wireless communication system applied in embodiments of the present disclosure.
FIG. 2 is a schematic flowchart of a cell handover.
FIG. 3 is a schematic flowchart of a wireless communication method provided in an embodiment of the present disclosure.
FIG. 4 is a schematic flowchart of a wireless communication method provided in another embodiment of the present disclosure.
FIG. 5 is a schematic flowchart of a wireless communication method provided in yet another embodiment of the present disclosure.
FIG. 6 is a schematic structural diagram of a communication device provided in embodiments of the present disclosure.
FIG. 7 is a schematic structural diagram of another communication device provided in the embodiments of the present disclosure.
FIG. 8 is a schematic structural diagram of a terminal device provided in the embodiments of the present disclosure.
FIG. 9 is a schematic structural diagram of a network device provided in the embodiments of the present disclosure.
FIG. 10 is a schematic structural diagram of another network device provided in the embodiments of the present disclosure.
FIG. 11 is a schematic structural diagram of yet another network device provided in the embodiments of the present disclosure.
FIG. 12 is a schematic structural diagram of another terminal device provided in the embodiments of the present disclosure.
FIG. 13 is a schematic structural diagram of a communication apparatus in the embodiments of the present disclosure.

### DETAILED DESCRIPTION

Technical solutions in the present disclosure will be described below with reference to the accompanying drawings.

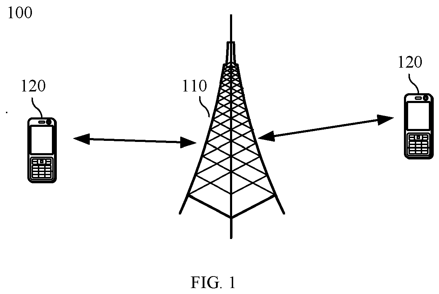

FIG. 1 is a wireless communication system 100 applied in embodiments of the present disclosure. The wireless communication system 100 may include a network device 110 and a terminal device 120. The network device 110 may be a device that communicates with the terminal device 120. The network device 110 may provide communication coverage for a specific geographical region and may communicate with the terminal device 120 located within the coverage area.

FIG. 1 exemplarily shows a network device and two terminal devices. Optionally, the wireless communication system 100 may include multiple network devices, and there may be other numbers of terminal devices within a coverage area of each network device, which is limited in the embodiments of the present disclosure.

Optionally, the wireless communication system 100 may further include other network entities such as a network controller and a mobility management entity, which is limited in the embodiments of the present disclosure.

It should be understood that the technical solutions in the embodiments of the present disclosure may be applied to various communication systems, such as a 5th generation (5G) system or new radio (NR), a long term evolution (LTE) system, an LTE frequency division duplex (FDD) system, or an LTE time division duplex (TDD) system. The technical solutions provided in the present disclosure may also be applied to future communication systems, such as a 6th generation mobile communication system or satellite communication system.

The terminal device in the embodiments of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present disclosure may be a device that provides voice and/or data connectivity to users and may be used to connect people, objects and machines, such as a handheld device or an in-vehicle device with a wireless connection function. The terminal device in the embodiments of the present disclosure may be a mobile phone, a pad, a laptop, a palmtop, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home. Optionally, the UE may be configured to act as a base station. For example, a UE may act as a scheduling entity that provides sidelink signals between UEs in vehicle-to-everything (V2X) or device-to-device (D2D). For example, a cellular phone and a vehicle communicate with each other by using a sidelink signal. A cellular phone and a smart home device communicate with each other without relaying a communication signal through a base station.

The network device in the embodiments of the present disclosure may be a device for communicating with a terminal device. The network device may also be referred to as an access network device or a wireless access network device. For example, the network device may be a base station. The network device in the embodiments of the present disclosure may refer to a radio access network (RAN) node (or device) that connects a terminal device to a wireless network. A Base station may broadly cover various names as follows, or be replaced with the following names, such as: a NodeB, an evolved NodeB (eNB), a next generation NodeB (gNB), a relay station, an access point, a transmitting and receiving point (TRP), a transmitting point (TP), a master evolved NodeB (MeNB), a secondary evolved NodeB (SeNB), a multi-standard radio (MSR) node, a home base station, a network controller, an access node, a wireless node, an access point (AP), a transmission node, a transceiving node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, modem or chip disposed in the above device or apparatus. The base station may also be a mobile switching center, a device that performs base station functions in device-to-device (D2D), vehicle-to-everything (V2X), and machine-to-machine (M2M) communications, a network-side device in a 6G network, or a device that performs base station functions in future communication systems, etc. The base station may support networks of the same or different access technologies. The embodiments of the present disclosure do not limit the specific technology and specific device form adopted by the network device.

The Base station may be fixed or mobile. For example, a helicopter or a drone may be configured to act as a mobile base station, and one or more cells may move according to the location of the mobile base station. In other examples, a helicopter or a drone may be configured to function as a device communicating with another base station.

In some deployments, the network device in the embodiments of the present disclosure may refer to a CU or a DU, or the network device includes a CU and a DU. The gNB may also include an AAU.

The network device and the terminal device may be deployed on land, including indoors or outdoors, handheld or vehicle-mounted; may also be deployed on the water; and may also be deployed in the air on aircraft, balloons and satellites. The embodiments of the present disclosure do not limit the scenarios in which the network devices and terminal devices are located.

It should be understood that the communication device involved in the present disclosure may be a network device or a terminal device. For example, the first communication device is a network device, and the second communication device is a terminal device. For another example, the first communication device is a terminal device, and the second communication device is a network device. For another example, the first communication device and the second communication device are both network devices, or both are terminal devices.

It should also be understood that all or some of functions of the communication device in the present disclosure may also be achieved through software functions running on hardware, or through virtualization functions instantiated on a platform (e.g., a cloud platform).

Currently, with people's pursuit of speed, delay, high-speed mobility, energy efficiency, and the diversity and complexity of services in future life, the 3GPP international standard organization has begun to develop 5G. The main application scenarios of 5G are: enhanced mobile broadband (eMBB), ultra reliability and low latency communication (URLLC), and massive machine type communications (mMTC).

eMBB still aims for users to obtain multimedia content, services and data, and the demand for eMBB is growing rapidly. In another aspect, eMBB may be deployed in different scenarios, such as indoors, in urban areas, and in rural areas, etc., and capabilities and requirements of eMBB vary greatly. Therefore, eMBB cannot be generalized and must be analyzed in detail in combination with specific deployment scenarios. Typical applications of URLLC include industrial automation, power automation, remote medical operations (surgery), and traffic safety assurance, etc. Typical features of mMTC include: high connection density, small data volume, latency-insensitive services, low cost of modules and long service life, etc.

NR may also be deployed independently. In the 5G network environment, in order to reduce air interface signaling and quickly restore wireless connections and data services, a new radio resource control (RRC) state is defined, namely an RRC_INACTIVE state. This RRC_INACTIVE state is different from an RRC_IDLE state and an RRC_ACTIVE state. These three states are described below.

The RRC connected state may refer to a state in which the terminal device is located after completing the random access process and before performing RRC release. There is an RRC connection between a terminal device and a network device (e.g., an access network device). In the RRC connected state, the terminal device may transmit data with the network device, for example perform downlink data transmission and/or uplink data transmission. Alternatively, the terminal device may also perform transmission of specific data channels and/or control channels of the terminal device with the network device, so as to transmit specific information or unicast information of the terminal device.

In the RRC connected state, the network device may determine a cell-level location information of the terminal device. That is to say, the network device may determine the cell to which the terminal device belongs. In the RRC connected state, the network device may control the terminal device to perform a cell handover after the terminal device moves, such as moving from one cell to another cell. Thus, the mobility management of the terminal device in the RRC connected state may include a cell handover. In addition, the mobility management of the terminal device in the RRC connected state may be controlled by the network device, and accordingly, the terminal device may be handed over to a specified cell according to instructions issued by the network device.

The RRC_IDLE state refers to a state in which the terminal device is located when the terminal device is camped on the cell but has not performed random access. The terminal device usually enters the RRC_IDLE state after being powered on or after RRC is released. In the RRC_IDLE state, there is no RRC connection between the terminal device and the network device (e.g., a camped network device), the network device does not store the context of the terminal device, and no connection for the terminal device is established between the network device and a core network. If the terminal device needs to enter the RRC connected state from the RRC_IDLE state, it needs to initiate an RRC connection establishment process.

In the RRC_IDLE state, the core network (CN) may send a paging message to the terminal device. That is to say, the paging process may be triggered by the CN. Optionally, a paging area may also be configured by the CN. In some cases, for a terminal device in the RRC_IDLE state, when the terminal device moves (e.g., moving from one cell to another cell), the terminal device may initiate a cell reselection process. In some other cases, for a terminal device in the RRC_IDLE state, when the terminal device needs to access a cell, the terminal device may initiate a cell selection process. That is to say, the mobility management of the terminal device in the RRC_IDLE state may include cell reselection and/or cell selection.

The RRC_INACTIVE state is a state defined to reduce air interface signaling and quickly restore wireless connections and data services. The RRC_INACTIVE state is a state between the RRC connected state and the RRC_IDLE state. The terminal device has already entered the RRC connected state and then released the RRC connection with the network device, but the network device has saved the context of the terminal device. In addition, the connection established between the network device and the core network for the terminal device is not released. That is to say, a data radio bearer and a control plane bearer between the RAN and the CN are still maintained, that is, there is a CN-NR connection.

In the RRC_INACTIVE state, the RAN may send a paging message to the terminal device. That is to say, the paging process may be triggered by the RAN. The RAN-based paging area is managed by the RAN, and the network device may know that the location of the terminal device is based on the RAN-based paging area level.

In some cases, for a terminal device in the RRC_INACTIVE state, the terminal device may initiate a cell reselection process after the terminal device moves (e.g., moving from one cell to another cell). In some other cases, for a terminal device in the RRC_INACTIVE state, when the terminal device needs to access a cell, the terminal device may initiate a cell selection process. That is to say, the mobility management of the terminal device in the RRC_INACTIVE state may include cell reselection and/or cell selection.

### Cell handover

Cell handover (HO) aims to improve the continuity of services provided by the communication system to terminal devices. In the wireless communication system, a terminal device may move from one cell (also referred to as a "source cell") to another cell (also referred to as a "target cell").

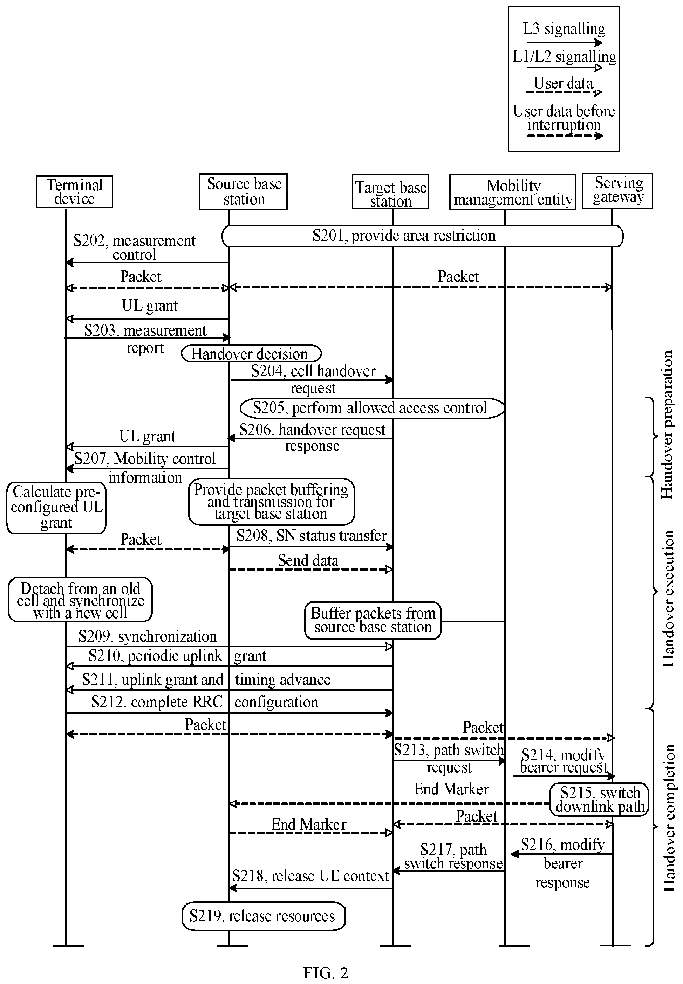

FIG. 2 is a schematic flowchart of a cell handover. The process shown in FIG. 2 involves interactions among a terminal device, a source base station, a target base station, a mobility management entity, and a serving gateway. The schematic flowchart shown in FIG. 2 may include steps S201 to S219.

In step S201, area restriction is provided.

In step S202, a source base station sends a measurement control to a terminal device.

In step S203, the terminal device reports a measurement report to the source base station.

The source base station may make a handover decision according to the reporting result of the UE.

In step S204, the source base station sends a cell handover request to a target base station.

The source base station sends a handover request to the target base station according to the reporting result of the terminal device. The handover request message carries related information of the packet data unit (PDU) session. Related information of the PDU session includes slice information and quality of service (QoS) profile information (e.g., 5G QoS Identifier (5QI), corresponding to QoS parameters) at the QoS flow level.

In step S205, the target base station performs allowed access control (admission control).

When the slice information is sent to the target base station, the target base station performs slice-aware access control. In a case where the PDU session in the handover request corresponds to a slice not supported by the target base station, the target base station will reject this PDU session. When the target base station agrees handover request, an RRC message mobilityControlInformation for the terminal device will be configured, which includes a resource for random access channel (RACH), a cell-radio network temporary identifier (C-RNTI), a security algorithm of the target base station, and a system message of the target base station.

In step S206, a handover request response.

In step S207, mobility control information (mobilityControlInformation) is forwarded.

The source base station forwards the mobilityControlInformation to the terminal device. The terminal device initiates a random access procedure to the target base station after receiving a handover command.

In step S208, the source base station sends a secondary node (SN) STATUS TRANSFER to the target base station.

The source base station sends the SN STATUS TRANSFER to the target base station, so as to inform the target base station of an uplink packet data convergence protocol (PDCP) SN reception status and a downlink PDCP SN transmission status.

In step S209, synchronization.

In step S210, periodic uplink grant (periodic UL allocation).

In step S211, uplink grant (UL allocation) and timing advance.

In step S212, RRC configuration is completed.

Steps S209 to S212 are the random access performed by the terminal device and the target base station.

In step S213, the target base station sends a path switch request (PATH SWITCH REQUEST) to a mobility management entity.

The target base station sends the PATH SWITCH REQUEST to request the mobility management entity to switch the downlink path after the terminal device successfully accesses the target base station (random access is successful).

In step S214, the mobility management entity sends a modify bearer request to a serving gateway.

In step S215, the serving gateway switches the downlink path.

In step S216, the mobility management entity receives the modify bearer response sent from the serving gateway.

In step S217, the target base station receives the PATH SWITCH response (Path Switch Request Ack) sent from the mobility management entity.

In step S218, the target base station instructs the source base station to release the context of the terminal device.

The target base station instructs the source base station to release the UE context after the path switch is completed, and the cell handover is completed.

In step S219, the source base station releases resources.

### XR

A research project titled "eXtended reality (XR) and cloud game (CG) evaluations for NR" was approved at the 3GPP RAN #88e meeting. Services researched in the project include augmented reality (AR), virtual reality (VR), or cloud gaming, etc. A key service of the XR/CG is a video streaming service, whose arrival rates (measured in fps (i.e., frame per second)) can be 30 fps, 60 fps, 90 fps, and 120 fps, and therefore, the corresponding periods of the video stream are {33.33 ms, 16.67 ms, 11.11 ms, and 8.33 ms}.

Characteristics of XR data include variable packet sizes and a large average. Taking AR/VR with a data rate of 100 Mbps as an example, an average uplink packet size is 20833 bytes, the maximum is 31250 bytes, and the minimum is 10,417 bytes. That is to say, the size of the packet to be transmitted in each period is within a range of [10417 bytes, 31250 bytes]. In an actual system with 100M bandwidth, transmission resources in approximately four time slots are occupied to transmit a packet of 20833 bytes.

Currently, 3GPP has determined to support configuring multiple physical uplink shared channel (PUSCH) occasions within a CG period for transmitting large packets of the XR. In addition, the large packets of the XR may also be transmitted by configuring multiple sets of CGs. In a case where a data volume in a certain data transmission is small and there is no need to occupy multiple pre-configured PUSCH occasions, the terminal device may inform the base station of unused PUSCH occasions. The base station may reallocate the unused PUSCH occasions to other terminal devices for data transmission, thereby improving system efficiency.

Application layer data exchanged between a terminal device and an application server or a peer terminal device, such as AR/VR/CG/live video streaming, etc., usually includes data flows in multiple modes (or modalities), such as voice, video, text, and control information (these types of data flows may also be referred to as a multi-modality data flow). These data flows usually require synchronization between data flows. For example, data such as voice, video, subtitles, and other data are required to be displayed synchronously to the user. The current practice for video playback is to synchronize multiple data flows through the application layer. For example, multiple received data flows are buffered, data frames corresponding to the multiple data flows are extracted according to time stamps for playing data flows and are synchronously displayed to the user.

Data with an association relationship, such as the multi-modality data mentioned above, usually has a coordinated/synchronous transmission requirement. In the related art, the coordinated/synchronous transmission requirement of data with an association relationship is supported by buffering data with an association relationship through the application layer. However, how to support and enhance the coordinated/synchronous transmission requirement of data with an association relationship is an urgent problem to be solved.

Data with an association relationship may involve one or multiple terminal devices. For example, a sending end and receiving end of data with an association relationship may involve one terminal device or multiple terminal devices. Therefore, how to support and enhance the coordinated/synchronous transmission requirement for data with an association relationship may include how to support coordinated transmission for multi-modality flows with a single UE, and how to enable application synchronization and QoS policy coordination for multi-modality data flows among multiple UEs.

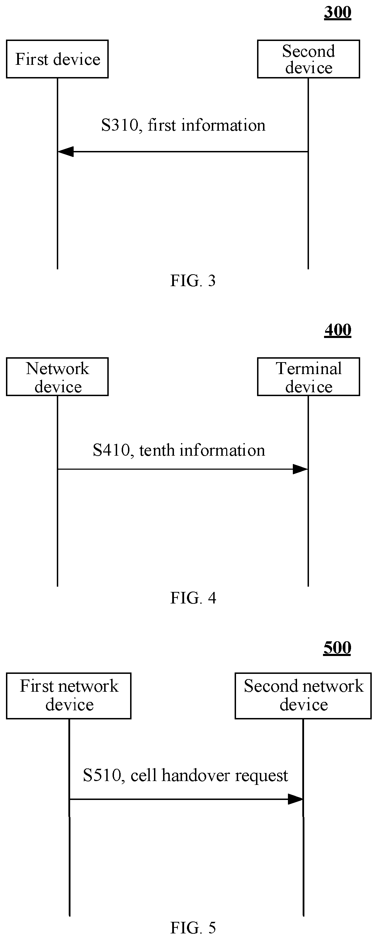

FIG. 3 is a schematic flowchart of a wireless communication method provided in an embodiment of the present disclosure, so as to solve the problem mentioned above.

The method shown in FIG. 3 is described from the perspective of interaction between a first device and a second device. The first device and the second device may be any type of network device and terminal device mentioned above.

In the embodiments of the present disclosure, the first device may be a sending end of data (i.e., first data) with an association relationship, and the second device may be a receiving end of data with an association relationship. For example, the first device is a first terminal device, and the second device may be a network device or a second terminal device. For another example, the first device is a first network device, and the second device may be a terminal device or a second network device. That is to say, the method provided in the embodiments of the present disclosure may be applied to coordination/synchronization of the first data between terminal devices, and may also be applied to coordination/synchronization of the first data between a terminal device and a network device. Alternatively, the sending end of the first data may be a terminal device or a network device, and the receiving end of the first data may be a terminal device or a network device.

The method shown in FIG. 3 may include step S310.

In step S310, a first device receives first information sent from a second device. Alternatively, the second device sends the first information to the first device.

Herein, the first information may be used to enable or activate a first behavior, or the first information may be used to configure a parameter of first data, or the first information may be used to determine a transmission resource of the first data.

The first data may be data with an association relationship, such as the data in the multi-modality data flows mentioned above. The association relationship mentioned herein may include but are not limited to synchronization, coordination, and dependency relationships. For example, data with an association relationship may refer to data that has a requirement for synchronous transmission, coordinated/synchronous transmission, or synchronous or collaborative transmission. For another example, the first data may refer to data required to be displayed to the user simultaneously, or data that can only be performed data processing by depending on other data.

The association relationship may be an association relationship of data in a terminal device, or an association relationship of data between multiple terminal devices, or an association relationship of data in a packet data unit set (PDU set), or an association relationship of data between multiple PDU sets, or an association relationship of data between multiple QoS flows.

In some embodiments, the first information may be used to enable or activate the first behavior, and the first behavior may be related to the first data. For example, the first behavior may be an associated processing behavior of the first data, or a collaborative processing behavior. For example, the first behavior may include one or more of: data packet discarding, a request for transmission resources, duplication transmission, parameter configuration, and priority processing. Data packet discarding may, for example, include discarding other data packets in the first data in a case where some packets in the first data are discarded, or discarding second data associated with the first data in a case where the first data is discarded. The request for transmission resources may, for example, include requesting more transmission resources for the first data, or making the first data have a high priority in the process of allocating transmission resources. The duplication transmission may, for example, include activating duplication transmission for the first data, or adjusting a duplication transmission strategy of the first data. The parameter configuration may, for example, refer to configuring different parameters for the first data and other data. The priority processing may, for example, include increasing a priority of a logical channel (LCH) or a data radio bearer (DRB) corresponding to the first data. For another example, the first behavior may be a behavior supporting coordinated/synchronous transmission of the first data, such as a behavior that supports coordinated/synchronous transmission of the first data and is associated with a logical channel/logical channel prioritization (LCP), a behavior that supports coordinated/synchronous transmission of the first data and is associated with a packet data convergence protocol (PDCP), and a behavior that supports coordinated/synchronous transmission of the first data and is associated with allocating or scheduling transmission resources (e.g., a configured grant, a dynamic grant).

The first information may include an enable or activation indication information to indicate that multiple behaviors included in the first behavior are enabled or activated. The first information may also include multiple enable or activation indication information, and different enable or activation indication information is used for different content of the first behavior.

In some embodiments, the first information may be used to configure the parameter of the first data. For example, the first information may be used to configure or indicate that one or more DRBs, LCHs, PDCPs, configured grants (CGs), and dynamic grants (DGs) associated with the first data have an associated transmission requirement. For example, the first information may be used to configure or indicate an association relationship between one or more DRBs, LCHs, PDCPs, CGs, and DGs associated with the first data.

In some embodiments, the first information may be used to determine the transmission resource for the first data. For example, the first information may be used to configure transmission parameters of the first data, such as parameters associated with one or more of the DRB, LCH, PDCP, CG, DG, and duplication transmission.

In the embodiments of the present disclosure, resources for transmitting the first data may be scheduled based on the first information, which is conducive to achieving coordinated/synchronous transmission of the first data. For example, more transmission resources may be allocated to the data required to be transmitted synchronously based on the first information, which helps the data required to be transmitted synchronously reach a peer end as quickly as possible, thus a transmission latency of the data required to be transmitted synchronously is reduced.

In some embodiments, the first information may include first configuration information. The first configuration information may be used to configure parameters of the DRB/LCH or the first configuration information may be used to parameters of one or multiple terminal devices. The first data has a mapping relationship with the DRB/LCH, and/or the first data has a mapping relationship with one or multiple terminal devices.

For example, in a case where one or more DRBs/LCHs are used to transmit first data, the first configuration information may be used to configure parameters of one or more DRBs/LCHs. For example, the first configuration information may be used to indicate that the DRBs/LCHs have a synchronous or collaborative transmission requirement, or the first configuration information may be used to identify the DRBs/LCHs having an associated, synchronous or collaborative transmission requirement. For another example, the first configuration information may be used to indicate an association relationship between the DRBs/LCHs with a synchronous or collaborative transmission requirement.

For another example, in a case where the first data has a mapping relationship with one or multiple terminal devices, that is, the sending end and receiving end of the first data involve one or multiple terminal devices, the first configuration information may be used to configure one or multiple terminal devices. For example, the first configuration information may be used to identify multiple terminal devices having an associated, synchronous or collaborative transmission requirement. For another example, the first configuration information may be used to indicate an association relationship between terminal devices having a synchronous or collaborative transmission requirement.

In some embodiments, the first configuration information may indicate or identify that the DRBs/LCHs have a synchronous or collaborative transmission requirement through associated flags. For example, if an association identification bit in the first configuration information corresponding to the DRB/LCH (or the first configuration information used to configure the DRB/LCH) is "1", it may indicate that the DRBs/LCHs have an associated, synchronous or collaborative transmission requirement; if the association identification bit in the first configuration information corresponding to the DRB/LCH is "0", it may indicate that the DRBs/LCHs do not have an associated, synchronous or collaborative transmission requirement. For another example, if the association identification bit in the first configuration information corresponding to the DRB/LCH is "0", it may indicate that the DRBs/LCHs have an associated, synchronous or collaborative transmission requirement; if the association identification bit in the first configuration information corresponding to the DRB/LCH is "1", it may indicate that the DRBs/LCHs do not have an associated, synchronous or collaborative transmission requirement.

The association relationship between the DRBs/LCHs and/or the terminal devices may be indicated explicitly or implicitly.

For example, the association relationship may be indicated by an association identification. For example, a same association identification may be configured in the first configuration information corresponding to the DRBs/LCHs and/or the terminal devices that have an association relationship. For example, if a first terminal device and a second terminal device have an associated, synchronous or collaborative transmission requirement, association identifications of the first terminal device and the second terminal device may both be X; if a first LCH and a second LCH have an associated, synchronous or collaborative transmission requirement, association identifications of the first LCH and the second LCH may both be Y. For another example, the first configuration information may include identifications of the DRBs/LCHs and/or the terminal devices that have an association relationship. If the first configuration information includes the identifications of the first terminal device and the second terminal device, the first terminal device and the second terminal device have an associated, synchronous or collaborative transmission requirement.

For another example, the association relationship between the DRBs/LCHs and/or the terminal devices may be implicitly indicated by priority. For example, if a first LCH and a second LCH have an associated, synchronous or collaborative transmission requirement, the first LCH and the second LCH may be configured with the same priority. That is to say, the association relationship between the DRBs/LCHs and/or the terminal devices is implicitly indicated by a same priority.

The first LCH and the second LCH may be LCHs corresponding to a same terminal device, or may be LCHs corresponding to different terminal devices.

In the embodiments of the present disclosure, the first information may configure the DRBs/LCHs and/or the terminal devices that have an association relationship, so that the system may identify the DRBs/LCHs and/or the terminal devices that have an association relationship. In this way, the system may schedule resources based on the association relationship, thereby facilitating synchronous or collaborative transmission of the first data.

As mentioned above, the first information may be used to determine the transmission resource of the first data. In some embodiments, the first information may include a transmission parameter, where the transmission parameter may be related to a transmission process of the first data.

The first information may include a set of transmission parameters for determining the transmission resource of the first data. Taking LCH as an example, the transmission resource of the first data may be determined based on parameters such as the LCH priority included in the first information.

The first information may include multiple sets of transmission parameters. For example, the multiple sets of transmission parameters may include a set of transmission parameters for data that has no association relationship, or a set of default transmission parameters. For another example, the multiple sets of transmission parameters may include one or more sets of transmission parameters for the first data.

For example, the first information may include a first transmission parameter and a second transmission parameter, and the first transmission parameter is different from the second transmission parameter. The first transmission parameter and the second transmission parameter mentioned herein are different, which may refer to that at least one parameter of multiple parameters included in the first transmission parameter and the second transmission parameter is different.

In some embodiments, the first transmission parameter and/or the second transmission parameter may be for a DRB/LCH or a terminal device; alternatively the first transmission parameter and/or the second transmission parameter may be for multiple DRBs/LCHs; alternatively the first transmission parameter and/or the second transmission parameter may be for multiple terminal devices. That is to say, a configuration granularity of the first transmission parameter and/or the second transmission parameter may be a DRB/LCH, a terminal device, multiple DRBs/LCHs, or multiple terminal devices.

In some embodiments, the first transmission parameter and/or the second transmission parameter may be configured for PDCP/radio link control (RLC)/media access control (MAC)/physical layer (PHY).

In some embodiments, the first transmission parameter may be used for a case where synchronous transmission is not activated/not indicated or a case where a first condition is met, and/or the second transmission parameter may be used for a case where synchronous transmission is activated/indicated or a case where a second condition is met.

The case where synchronous transmission is activated/indicated may refer to a case where the first device is activated and may perform synchronous transmission, or a case where the first device receives indication information for performing synchronous transmission. The case where synchronous transmission is not activated/not indicated may refer to a case where the first device is not activated and may perform synchronous transmission, or a case where the first device has not received indication information for performing synchronous transmission.

In some embodiments, the second condition may include that at least one of at least one terminal device of multiple associated terminal devices, a terminal device enabling the first behavior, or a terminal device identified as synchronous or associated is configured or exists. That is to say, the second condition may include at least one of: there is one or multiple terminal devices associated with the first data; at least one terminal device of one or multiple terminal devices associated with the first data is configured with a synchronous or collaborative transmission requirement and/or is configured with an association relationship with a synchronous or collaborative transmission requirement; there is a terminal device enabling the first behavior; and there is a terminal device identified as synchronous or associated, or there are terminal devices with an association relationship and configured with a synchronous or collaborative transmission requirement.

In some embodiments, the second condition may include that at least one of at least one LCHs/logical channel groups (LCGs) of multiple associated LCHs/LCGs, an LCH/LCG enabling the first behavior, or an LCH/LCG identified as synchronous or associated is configured or exists. That is to say, the second condition may include at least one of: there is one or more LCHs/LCGs associated with the first data; at least one LCH/LCG of one or more LCHs/LCGs associated with the first data is configured with a synchronous or collaborative transmission requirement and/or is configured with an association relationship with a synchronous or collaborative transmission requirement; there is an LCH/LCG enabling the first behavior; and there is an LCH/LCG identified as synchronous or associated, or there are LCHs/LCGs with an association relationship and configured with a synchronous or collaborative transmission requirement.

In some embodiments, the second condition may be that the first transmission parameter is used for a first duration.

In some embodiments, the second condition may be associated with a transmission latency of the first data.

For example, the second condition may be that a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a first threshold.

For another example, the second condition may be that a transmission latency of one of associated terminal devices, at least one terminal device of multiple associated terminal devices, a terminal device enabling the first behavior, and a terminal device identified as synchronous or associated meets a fourth threshold.

Herein, the transmission latency may include one or more of a remaining transmission latency, a transmission latency of data to be transmitted, or a tolerable transmission latency. For another example, the transmission latency may be one or more of a minimum transmission latency, a maximum transmission latency, a transmission latency of each data packet, and an average transmission latency of multiple data packets. For yet another example, the transmission latency may also be a combination of the multiple transmission latencies mentioned above, such as the maximum tolerable transmission latency or the minimum tolerable transmission latency.

It should be noted that the transmission latencies mentioned in the embodiments of the present disclosure may be one or more of the transmission latencies mentioned above, which will not be repeated below for brevity.

In some embodiments, the second condition may be associated with a total data volume of the first data.

For example, the second condition may be that a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets a second threshold.

For another example, the second condition may be that a total data volume of one of associated terminal devices, at least one terminal device of multiple associated terminal devices, a terminal device enabling the first behavior, and a terminal device identified as synchronous or associated meets a fifth threshold.

In some embodiments, the second condition may be associated with a to-be-transmitted data volume of the first data.

For example, the second condition may be that a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a third threshold.

For another example, the second condition may be that a remaining to-be-transmitted data volume of one of associated terminal devices, at least one terminal device of multiple associated terminal devices, a terminal device enabling the first behavior, and a terminal device identified as synchronous or associated meets a sixth threshold.

In some embodiments, the second condition may be that a network device indicates that the first behavior is enabled or activated. For example, the second condition may be that the network device indicates that the first behavior associated with one or multiple terminal devices/DRBs/LCHs is enabled or activated.

In some embodiments, the second condition may be that the network device indicates to use the second transmission parameter.

In some embodiments, the second condition may be associated with feedback, such as negative acknowledgement (NACK), from the network device. For example, associated terminal devices or at least one terminal device of multiple associated terminal devices receives feedback from a network device, or receives feedback from a network device involving one of associated DRBs/LCHs, at least one DRB/LCH of multiple associated DRBs/LCHs, a DRB/LCH of a terminal device enabling the first behavior, and a DRB/LCH identified as synchronous or associated. For another example, the number of times in which associated terminal devices or at least one terminal device of multiple associated terminal devices receives feedback from the network device is greater than or equal to a threshold, or the number of times in which associated terminal devices or at least one terminal device of multiple associated terminal devices receives feedback from the network device involving one of associated DRBs/LCHs, at least one DRB/LCH of multiple associated DRBs/LCHs, a DRB/LCH of a terminal device enabling the first behavior, and a DRB/LCH identified as synchronous or associated is greater than or equal to a threshold.

In some embodiments, the phrase "meet a threshold" or variations thereof associated with the second condition may refer to being greater than or equal to the threshold, or may refer to being less than or equal to the threshold. For example, if a transmission rate of the DRB/LCH using the second transmission parameter is greater than a transmission rate of the DRB/LCH using the first transmission parameter, then the remaining to-be-transmitted data volume meeting the third threshold may mean that the remaining to-be-transmitted data volume is greater than or equal to the third threshold. That is to say, a transmission parameter with a fast transmission rate may be used in a case where the remaining to-be-transmitted data volume of the first data is large, which is conducive to meeting the synchronous or collaborative transmission requirement of the first data. For another example, if the transmission rate of the DRB/LCH using the second transmission parameter is less than the transmission rate of the DRB/LCH using the first transmission parameter, then the remaining to-be-transmitted data volume meeting the third threshold may mean that the remaining to-be-transmitted data volume is less than or equal to the third threshold. That is to say, in a case where the remaining to-be-transmitted data volume of the first data is small, a transmission parameter with a slow transmission rate may be used to allocate more transmission resources to other data or to allocate transmission resources with a higher priority to other data, which is conducive to improving the overall performance of the system.

In some embodiments, the first condition may be that at least one of at least one terminal device of multiple associated terminal devices, a terminal device enabling the first behavior, and a terminal device identified as synchronous or associated is not configured or does not exist. For example, the first condition may include: there are no terminal devices associated with the first data, or one or multiple terminal devices are not involved in transmission of associated data. The first condition may also include: at least one or all of one or multiple terminal devices associated with the first data are not configured with a synchronous or collaborative transmission requirement, and/or are not configured with an association relationship with a synchronous or collaborative transmission requirement. For another example, the first condition may include: there are no terminal devices that have enabled the first behavior, or one or multiple terminal devices have all not enabled the first behavior. For another example, the first condition may include: there are no terminal devices identified as synchronous or associated, or there are no terminal devices configured with an association relationship with a synchronous or collaborative transmission requirement.

In some embodiments, the first condition may include that at least one of at least one LCH/LCG of multiple associated LCHs/LCGs, an LCH/LCG enabling the first behavior, and an LCH/LCG identified as synchronous or associated is not configured or does not exist. That is to say, the first condition may include at least one of: there are no LCHs/LCGs associated with the first data; at least one or all of one or more LCHs/LCGs associated with the first data are not configured with a synchronous or collaborative transmission requirement and/or are not configured with an association relationship with a synchronous or collaborative transmission requirement; there are no LCHs/LCGs enabling the first behavior, or all LCHs/LCGs do not enable the first behavior; and there are no LCHs/LCGs identified as synchronous or associated, or there are no LCHs/LCGs with an association relationship configured with a synchronous or collaborative transmission requirement.

In some embodiments, the first condition may be that the second transmission parameter is used for a second duration.

In some embodiments, the first condition may be associated with a transmission latency of the first data.

For example, the first condition may be that a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a seventh threshold.

For another example, the first condition may be that a transmission latency of one of associated terminal devices, at least one terminal device of multiple associated terminal devices, a terminal device enabling the first behavior, and a terminal device identified as synchronous or associated meets a tenth threshold.

In some embodiments, the first condition may be associated with a total data volume of the first data.

For example, the first condition may be that a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets an eighth threshold.

For another example, the first condition may be that a total data volume of one of associated terminal devices, at least one terminal device of multiple associated terminal devices, a terminal device enabling the first behavior, and a terminal device identified as synchronous or associated meets an eleventh threshold.

In some embodiments, the first condition may be associated with a to-be-transmitted data volume of the first data.

For example, the first condition may be that a remaining to-be-transmitted data volume of one of associated DRBs/LCHs, at least one of multiple associated DRBs/LCHs, a DRB/LCH of a terminal device enabling the first behavior, and a DRB/LCH identified as synchronous or associated meets a ninth threshold.

For another example, the first condition may be that a remaining to-be-transmitted data volume of one of associated terminal devices, at least one terminal device of multiple associated terminal devices, a terminal device enabling the first behavior, and a terminal device identified as synchronous or associated meets a twelfth threshold.

In some embodiments, the first condition may be that a network device indicates that the first behavior is not enabled or deactivated. For example, the first condition may be that the network device indicates that the first behavior associated with one or multiple terminal devices/DRBs/LCHs is not enabled or deactivated.

In some embodiments, the first condition may be that the network device indicates to use the first transmission parameter.

In some embodiments, the first condition may be associated with feedback, such as NACK, from the network device. For example, associated terminal devices or at least one or all of multiple associated terminal devices do not receive feedback from a network device, or do not receive feedback from a network device involving one of associated DRBs/LCHs, at least one DRB/LCH of multiple associated DRBs/LCHs, a DRB/LCH of a terminal device enabling the first behavior, and a DRB/LCH identified as synchronous or associated. For another example, the number of times in which associated terminal devices, at least one or all of multiple associated terminal devices receive feedback from the network device is less than or equal to a threshold, or the number of times in which associated terminal devices, at least one or all of multiple associated terminal devices receive feedback from the network device involving one of associated DRBs/LCHs, at least one DRB/LCH of multiple associated DRBs/LCHs, a DRB/LCH of a terminal device enabling the first behavior, and a DRB/LCH identified as synchronous or associated is less than or equal to a threshold.

In some embodiments, the phrase "meet a threshold" or variations thereof associated with the first condition may refer to being greater than or equal to the threshold, or may refer to being less than or equal to the threshold. For example, if a transmission rate of the DRB/LCH using the second transmission parameter is greater than a transmission rate of the DRB/LCH using the first transmission parameter, then the total data volume meeting the eighth threshold may mean that the total data volume is less than or equal to the eighth threshold. That is to say, in a case where the total data volume of the first data is small, a transmission parameter with a slow transmission rate may be used to allocate more transmission resources to other data or to allocate transmission resources with a higher priority to other data, which is conducive to improving the overall performance of the system. For another example, if the transmission rate of the DRB/LCH using the second transmission parameter is less than the transmission rate of the DRB/LCH using the first transmission parameter, then the total data volume meeting the eighth threshold may mean that the total data volume is greater than or equal to the eighth threshold. That is to say, a transmission parameter with a fast transmission rate may be used in a case where the total data volume of the first data is large, which is conducive to meeting the synchronous or collaborative transmission requirement of the first data.

In some embodiments, the first transmission parameter and/or the second transmission parameter may include one or more of: a logical channel prioritization (LCH priority), a priority bit rate (prioritisedBitRate), an allowed uplink grant (UL grant) or dynamic grant, an allowed-configured grant list (allowed-CG list), duplication transmission; repetition transmission, logical channel duplication transmission (LCH of duplication), retransmission, a tolerated transmission latency, and a modulation and coding scheme (MCS).

In some embodiments, the uplink grant or dynamic grant allowed by the first transmission parameter and/or the second transmission parameter is indicated by an identification of the uplink grant or dynamic grant, or an identification of the DRB/LCH corresponding to the uplink grant or dynamic grant, or matching information between the uplink grant or dynamic grant and the DRB/LCH, or a correspondence between the uplink grant or dynamic grant and the DRB/LCH.

For example, indication signaling or configuration parameters of the uplink grant or dynamic grant may indicate or include a flag/sign of the DG or UL grant, or indicate or include an identification of the DRB/LCH (i.e., the DRB/LCH corresponding to the uplink grant or dynamic grant) that may be used for transmission. If the flag/sign of one or more DRBs/LCHs is the same as the flag/sign of the DRB/LCH indicated or included in the indication signaling or configuration parameters of the uplink grant or dynamic grant, the DG/UL grant may be used to transmit the corresponding DRB/LCH, or the corresponding DRB/LCH may be transmitted on the DG/UL grant. For another example, only the DRB/LCH that may be used for transmission indicated in the indication signaling or configuration parameters of the uplink grant or dynamic grant may be transmitted in the DG/UL grant. For another example, the indication signaling or configuration parameters may include or indicate a DG/UL grant and a DRB/LCH corresponding to the DG/UL grant, or may include or indicate multiple DGs/UL grants, multiple DRBs/LCHs, and a matching relationship between multiple DGs/UL grants and multiple DRBs/LCHs. For example, if the matching relationship indicated or included in the indication signaling or configuration parameters indicates that a first DG/UL grant is matched with a second DRB/LCH, the first DG/UL grant may be used to transmit the second DRB/LCH, or the second DRB/LCH may be transmitted on the first DG/UL grant.

In some embodiments, the first transmission parameter and the second transmission parameter meet one or more of: a logical channel priority in the second transmission parameter is higher than a logical channel priority in the first transmission parameter; a priority bit rate in the second transmission parameter is greater than a priority bit rate in the first transmission parameter; the logical channel priority in the second transmission parameter is lower than the logical channel priority in the first transmission parameter, and a tolerated transmission latency in the second transmission parameter is less than a tolerated transmission latency in the first transmission parameter, and allowed-CG list in the second transmission parameter contains more items than that of allowed-CG list in the first transmission parameter; the second transmission parameter includes an activation indication of the packet data convergence protocol (PDCP); the number of duplication transmissions in the second transmission parameter is greater than the number of duplication transmissions in the first transmission parameter; the number of repetition transmissions in the second transmission parameter is greater than the number of repetition transmissions in the first transmission parameter; and an order of the modulation and coding scheme in the second transmission parameter is less than an order of the modulation and coding scheme in the first transmission parameter.

In the embodiments of the present disclosure, it is conducive to improving the transmission rate and transmission success rate of the first data by setting the second transmission parameter. For example, compared with the first transmission parameter, the second transmission parameter lets the LCH, associated with the first data, with a higher LCH priority, a greater priority bit rate, and more allowed-CG list, so that the transmission rate of the LCH associated with the first data is faster than those of other LCHs. For another example, compared with the first transmission parameter, the second transmission parameter lets the LCH associated with the first data, being activated PDCP retransmission or with more duplication transmission times, and with lower order of the modulation and coding scheme, so that compared with data of other LCHs, the first data may be successfully transmitted or have a higher transmission success rate.

In some embodiments, the method shown in FIG. 3 may further include step S320.

In step S320, if the first device is a terminal device and the second device is a network device, the first device sends second information to the second device. Alternatively, the second device receives the second information sent from the first device. Herein, the second information may be used to request a transmission resource, or the second information may be used to request to transmit the first data, or the second information may be used to indicate a transmission requirement of the first data.

For example, if there is transmission of associated data, or related parameters for transmission of associated data are configured, the terminal device may send the second information to the network device. For another example, during transmission of the first data, if the synchronous or collaborative transmission requirement of the first data may not be met when the first data is transmitted on the currently allocated resources, in this case, the terminal device may send the second information to the network device to request a transmission resource, or request an additional transmission resource.

In some embodiments, in a case where a third condition is met, the first device may send the second information to the second device. The third condition includes one or more of: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; a first transmission parameter is used for a first duration; a second transmission parameter is configured or used; data of one of associated DRBs/LCHs, at least one DRB/LCH of multiple associated DRBs/LCHs, a DRB/LCH of the terminal device enabling the first behavior, and a DRB/LCH identified as synchronous or associated arrives; a transmission latency of one of associated DRBs/LCHs, at least one DRB/LCH of multiple associated DRBs/LCHs, a DRB/LCH of the terminal device enabling the first behavior, and a DRB/LCH identified as synchronous or associated meets a thirteenth threshold; a data volume of one of associated DRBs/LCHs, at least one DRB/LCH of multiple associated DRBs/LCHs, a DRB/LCH of the terminal device enabling the first behavior, and a DRB/LCH identified as synchronous or associated meets a fourteenth threshold; data of one of associated terminal devices, at least one terminal device of multiple associated terminal devices, a terminal device enabling the first behavior, and a terminal device identified as synchronous or associated arrives; to-be-transmitted data or information from the associated terminal devices is received; the first device receives third information, and the third information is used for the terminal device associated with the first device to request the first device to send the second information; a transmission latency of one of associated terminal devices, at least one terminal device of multiple associated terminal devices, a terminal device enabling the first behavior, and a terminal device identified as synchronous or associated meets a fifteenth threshold; a data volume of one of associated terminal devices, at least one terminal device of multiple associated terminal devices, a terminal device enabling the first behavior, and a terminal device identified as synchronous or associated meets a sixteenth threshold; and a network device indicates that the first behavior is enabled or activated.

For example, the phrase "meet a threshold" or variations thereof associated with the third condition may refer to being greater than or equal to the threshold, or may refer to being less than or equal to the threshold. For example, the transmission latency meeting the fifteenth threshold may mean that the remaining transmission latency is greater than or equal to the fifteenth threshold, or may mean that the tolerated transmission latency is less than or equal to the fifteenth threshold. It should be noted that different types of transmission latencies may correspond to same or different fifteenth thresholds.

In some embodiments, when the terminal device requests a resource from the network device, the terminal device may directly initiate a resource request, or may report the status of the first data, such as a buffer and/or transmission status, so as to indicate resource requirements of the terminal device. In some other embodiments, when the terminal device requests a resource from the network device, the terminal device may also simultaneously report the status of the first data, such as a buffer and/or transmission status, so as to provide reference information for resource allocation of the network device.

For example, the first device may send fourth information to the second device, where the fourth information is used to indicate a buffer status or a transmission status of the first data. As mentioned above, the first device mentioned herein may be a terminal device, and the second device mentioned herein may be a network device.

If the logical channels associated with the first data or the associated logical channels include a first LCH and a second LCH, then the fourth information may be used to indicate one or more of: an association relationship between the first LCH and the second LCH; an identification of the first LCH or the corresponding DRB; an identification of the second LCH or the corresponding DRB; a transmission latency and/or a data volume of the first LCH; and a transmission latency and/or a data volume of the second LCH. Herein, the first LCH and the second LCH are associated logical channels.

If the first data is associated with multiple terminal devices, or the associated terminal devices include a first terminal device and a second terminal device, or the associated logical channels correspond to the first terminal device and the second terminal device, the fourth information may be used to indicate one or more of: an association relationship between the first terminal device and the second terminal device; an identification of the first terminal device; an identification of the second terminal device; identifications of the DRBs/LCHs with an association relationship of the first terminal device; identifications of the DRBs/LCHs with an association relationship of the second terminal device; a transmission latency and/or a data volume size of the first terminal device; a transmission latency and/or a data volume size of the second terminal device; transmission latencies and/or data volume sizes of the logical channels with an association relationship of the first terminal device; and transmission latencies and/or data volume sizes of the logical channels with an association relationship of the second terminal device.

In some embodiments, the transmission latency and/or data volume size of the first terminal device and the transmission latency and/or data volume size of the second terminal device may be a transmission latency and/or data volume size for each terminal device, or a transmission latency and/or data volume size for each LCH in the terminal device, or a transmission latency and/or data volume size for each data packet in the terminal device.

In some other embodiments, the transmission latency and/or data volume size of the first terminal device may include transmission latencies and/or data volume sizes of the LCHs with an association relationship in the first terminal device, or transmission latencies and/or data volume sizes of the LCHs without an association relationship in the first terminal device. The transmission latency and/or data volume size of the second terminal device may include transmission latencies and/or data volume sizes of the LCHs with an association relationship in the second terminal device, or transmission latencies and/or data volume sizes of the LCHs without an association relationship in the second terminal device.

In some embodiments, the fourth information may be used to indicate information associated with a specific LCH, and the specific LCH may be some important LCHs in the multiple LCHs associated with the first data. The reported data volume may be reduced by reporting related information of the specific LCH, which is conducive to saving resource overhead.

In some embodiments, the second information and/or the fourth information may be carried in a medium access control control element (MAC CE), uplink control information (UCI) or a scheduling request (SR).

In some cases, such as a case where some or all of the first data may not be transmitted, or a case where some or all of the first data are useless or invalid, the first device and/or the second device is required to discard some or all of the first data. The case where some or all of the first data are useless or invalid may be, for example, retransmission data of the first data when the receiving end has received the first data.

In some embodiments, the first device discards some or all of the first data, or the first device discards some or all of the first data based on the first information, or the first device discards some or all of the first data in a case where the first behavior is enabled or activated.

If the first device discards some or all of the first data, the second device is also required to discard the related data. In some embodiments, the first device may send fifth information to the second device, to indicate data discarded by the first device, data associated with the data discarded by the first device, or data that the second device is required to discard. For example, the fifth information may be used for one or more of: indicating an identification of a data packet that is lost or delayed; indicating a data packet that is not required to be transmitted or is considered to have been received; indicating that some or all of the first data cannot be transmitted; requesting that the second device discards some or all of the first data; indicating an identification of data that cannot be transmitted in the first data; and indicating an identification of data to be discarded in the first data. If transmission of the first data involves the first terminal device and the second terminal device, the second device may be a first network device corresponding to the first terminal device, or a second network device corresponding to the second terminal device.

The synchronous or collaborative transmission method of the first data based on the DRB/LCH/LCP is described above. The synchronous or collaborative transmission method of the first data based on the DRB/PDCP is described below.

In some embodiments, the first information may include second configuration information, where the second configuration information is used to configure the DRB/PDCP, or to configure one or multiple terminal devices. There is a mapping relationship between the DRB/PDCP and the first data, and/or there is a mapping relationship between the multiple terminal devices and the first data. That is to say, the second configuration information may be used to configure the DRBs/PDCPs/terminal devices associated with the first data.

For example, the second configuration information may be used to indicate or identify that the DRBs/PDCPs/terminal devices associated with the first data have a synchronous or collaborative transmission requirement. For example, the second configuration information may be used to indicate that the DRBs/PDCPs have a synchronous or collaborative transmission requirement, or the second configuration information may be used to identify the DRBs/PDCPs with an associated or synchronous or collaborative transmission requirement, or the second configuration information may be used to identify multiple terminal devices with an associated or synchronous or collaborative transmission requirement.

For another example, the second configuration information may be used to enable or activate the discarding of data packets based on an association relationship, or the second configuration information may be used to enable or activate sending/triggering behavior of the first information.

For another example, the second configuration information may be used to indicate or identify an association relationship of the DRBs/PDCPs associated with the first data. The association relationship may be explicitly indicated or identified, or implicitly indicated or identified. For example, the explicit indication or identification of the association relationship may refer to identifying the associated flags and/or the associated DRBs/PDCPs, and the implicit indication or identification of the association relationship may refer to configuring the same or similar underlying parameters, such as LCH parameters, for the DRBs/PDCPs with an association relationship.

In some cases, or in a case where a certain condition is met (For example, the first data is transmitted successfully, or transmission of the first data fails, or the first data is no longer needed, or some or all of the first data are discarded), , it is necessary to discard some or all of the first data in the first device and/or the second device. If the first device discards some or all of the first data, the first device may, for example, send first indication information to the second device to indicate information associated with the discarded data.

In some embodiments, in a case where a fourth condition is met, the first device may send the first indication information to the second device. Herein, the fourth condition includes one or more conditions as follows: an associated data packet is discarded; a transmission failure indication is received from the second device; N transmission failure indications are received from the second device; a transmission failure indication is received from the second device within a third duration; the successfully transmitted PDU/PDU set meets a first ratio; the number of successfully transmitted PDUs/PDU sets meets a seventeenth threshold; the PDU/PDU set at a specific position is not transmitted or is not transmitted successfully; or the PDU/PDU set of a specific type is not transmitted or is not transmitted successfully.

The above transmission failure indication may be a transmission failure indication for a data packet, or a transmission failure indication for any data packet in the PDCP/RLC/terminal device buffer, or a transmission failure indication for a data packet with a specific identification in the PDCP/RLC/terminal device buffer.

The above transmission failure indication may be, for example, carried in a PDCP/RLC status report. Alternatively the above transmission failure may be indicated by a hybrid automatic repeat-request (HARQ) or a negative acknowledgement (NACK).

In some embodiments, the first indication information may indicate data discarding information of the first device, or the first indication information may indicate data information required to be discarded by the second device, or the first indication information may indicate data discarding information of the first device and data information associated with the discarded data.

For example, if the associated DRBs/PDCPs include a first data packet and a second data packet, the first indication information may be used for one or more of: indicating identifications of associated terminal devices; indicating identifications of associated DRB/PDCPs; indicating an identification of a data packet that is lost or delayed; indicating an identification of the first data packet; indicating an identification of a data packet associated with the first data packet; indicating an identification of a DRB/PDCP/LCH or a DRB/PDCP/LCH corresponding to the first data packet; indicating an identification of a DRB/PDCP/LCH or a DRB/PDCP/LCH of a data packet associated with the first data packet; indicating an identification of a terminal device associated with the first data packet; indicating an identification of a terminal device corresponding to a data packet associated with the first data packet; indicating that the first data packet is not required; indicating that the first data packet and the second data packet are not required; indicating discarding information of the first data packet; indicating that the network device discards the first data packet; or indicating that the network device discards the first data packet and the second data packet. The identification of the data packet mentioned herein may be, for example, a serial number of the data packet.

It should be noted that the association relationship between the first data packet and the second data packet may be indicated in the first indication information, or may be carried in the PDU or a packet header of the data packet.

For another example, if some of the first data are discarded, other data in the first data may be discarded, or the first data may be discarded. For example, if the PDU set or PDU to which the first data packet belongs is discarded, the first device may discard the second data packet.

In some embodiments, the first indication information may be discarding indication information for a specific data packet, a terminal device, or a quality of service flow (QoS flow)/DRB/PDCP/RLC, or a data packet buffered by the terminal device. The specific data packet mentioned herein may be a data packet with a specific identification, or a data packet with a specific priority.

In order to improve the transmission performance of the first data, the method shown in FIG. 3 may further include step S330.

In step S330, the first device activates or deactivates data packet-based duplication transmission, or the first device activates or deactivates data packet-based duplication according to first information.

In some embodiments, the first device may activate or deactivate duplication of the associated packets, or the first device may activate or deactivate duplication transmission of the associated packets according to the first information.

For example, if the transmission latency of the first data meets a threshold, for example, the remaining transmission latency is greater than or equal to the threshold, or the tolerated transmission latency is less than or equal to the threshold, then the first device may activate duplication transmission, to improve the transmission success rate of the first data and reduce the transmission latency of the first data. For another example, if the transmission latency of the first data meets a threshold, for example, the remaining transmission latency is less than or equal to the threshold, or the tolerated transmission latency is greater than or equal to the threshold, then the first device may deactivate duplication transmission. In this way, the overall performance of the system may be improved while a synchronous or collaborative transmission requirement of the first data is met. For another example, in a case where a behavior (such as the first behavior mentioned above) supporting transmission of associated data is enabled or activated, duplication transmission may be activated to improve the synchronous or collaborative transmission performance of the first data.

For example, the first device activates duplication transmission in a case where one or more of the following conditions are met: a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets an eighteenth threshold; a transmission latency of one of associated terminal devices, at least one terminal device of multiple associated terminal devices, a terminal device enabling the first behavior, and a terminal device identified as synchronous or associated meets a nineteenth threshold; and the network device indicates to enable or activate the first behavior.

In order to reduce system overhead, the first device may deactivate duplication transmission of the associated data packets after activating duplication transmission of the associated data packets for the fourth duration.

The above duplication transmission may be configured for one or more of: all data packets; a specific data packet; each PDU; and each PDU set.

A solution for supporting synchronous or collaborative transmission of first data is described below in terms of network scheduling, allocation or configuration of transmission resources.

In some embodiments, the first information mentioned above may further include sixth information, where the sixth information may be used to indicate a first transmission resource of the terminal device. The first transmission resource is used to transmit the first data. For example, the sixth information may include an identification of the first transmission resource or an identification of a specific DRB/LCH/terminal device.

In some embodiments, the sixth information may be carried in Radio Resource Control (RRC) configuration and/or downlink control information (DCI) signaling.

In some embodiments, the first transmission resource may be a configured grant resource or a dynamic grant resource.

In some embodiments, the first transmission resource may include one or more transmission resources. For example, the CG may include one or more uplink or downlink transmission resources within a period. If the first transmission resource includes multiple transmission resources, the multiple transmission resources may be continuous or discontinuous resources, such as resources with unequal intervals within a period.

In some embodiments, configuration information of the associated DRBs/PDCPs/LCHs may include a synchronous or collaborative transmission requirement identification, or an association relationship of synchronous or collaborative transmission. The associated DRBs/PDCPs/LCHs may have same or different LCH mapping restrictions. For example, the LCH priorities are same, available DGs are same, and available CGs are same.

For example, the association relationship of synchronous or collaborative transmission may be explicitly indicated or identified, or implicitly indicated or identified. For example, the explicit indication or identification of the association relationship may refer to identifying the associated flags and/or the associated DRBs/PDCPs, and the implicit indication or identification of the association relationship may refer to configuring the same or similar underlying parameters, such as LCH parameters, for the DRBs/PDCPs with an association relationship.

In some embodiments, a specific configured grant resource and/or a specific dynamic grant resource may be used to transmit data of a specific DRB/LCH/terminal device, or to transmit data of the associated DRBs/PDCPs/LCHs.

In some embodiments, the terminal device may request an additional transmission resource from the network device to support synchronous or collaborative transmission of the first data. For example, the method shown in FIG. 3 may further include step S340.

In step S340, if the first device is a terminal device and the second device is a network device, the first device sends second indication information to the second device. Alternatively, the second device receives the second indication information sent from the first device. Herein, the second indication information may be used to request a second transmission resource, and the second transmission resource is used to transmit the first data.

In some embodiments, the second indication information may further indicate a transmission status of the first data, or information associated with transmission of the first data. For example, the second indication information may be used to indicate one or more of: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; at least one of the associated DRBs/LCHs, at least one DRB/LCH of multiple associated DRBs/LCHs, a DRB/LCH of a terminal device enabling the first behavior, and a DRB/LCH identified as synchronous or associated is not transmitted or is not transmitted successfully; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated; a to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated; an identification of a DRB/LCH that is not transmitted or is not transmitted successfully in associated DRBs/LCHs; or an identification of the DRB/LCH associated with the DRB/LCH that is not transmitted or is not transmitted successfully.

The second indication information may be an overall indication, that is, indication information for all associated DRBs/LCHs, or indication information for a DRB.

In some embodiments, the second indication information may be carried in MAC CE signaling or UCI, such as an unused transmission occasion (UTO).

In some embodiments, if the transmission resource of the first DRB/LCH/terminal device includes multiple transmission occasions, such as multiple transmission occasions of a configured grant or dynamic grant, a usage strategy of the multiple transmission occasions may be adjusted to support the synchronous or collaborative transmission of the first data.

For example, the transmission resource of the first DRB/LCH/terminal device may be used to transmit information or data of the second DRB/LCH/terminal device, where the first DRB/LCH is associated with the second DRB/LCH.

For example, if the first DRB/LCH/terminal device has no data to be transmitted and the second DRB/LCH/terminal device has data to be transmitted, one or more transmission occasions in the transmission resource of the first DRB/LCH/terminal device are used to transmit information or data of the second DRB/LCH/terminal device.

For another example, if the first DRB/LCH/terminal device has data to be transmitted, and the second DRB/LCH/terminal device has data to be transmitted, and one or more transmission occasions in the transmission resource of the first DRB/LCH/terminal device include a remaining resource, then the remaining resource is used to transmit information or data of the second DRB/LCH/terminal device.

For yet another example, if the first DRB/LCH/terminal device has data to be transmitted, and the second DRB/LCH/terminal device has data to be transmitted, and one or more transmission occasions in the transmission resource of the first DRB/LCH/terminal device include a remaining resource, no padding is added, and/or, the remaining resource is used to transmit information or data of the second DRB/LCH/terminal device.

In some embodiments, a priority of the transmission resource or a priority of the grant may be determined based on the association relationship of the DRBs/LCHs/terminal devices, so as to support synchronous or collaborative transmission of the first data. For example, the grant corresponding to the associated DRBs/LCHs/terminal devices may be transmitted preferentially. For another example, the priorities of the transmission resources corresponding to the associated DRBs/LCHs may be higher than the priorities of the transmission resources corresponding to the unassociated DRBs/LCHs. For yet another example, in the process of determining a priority of a transmission resource, the synchronous or collaborative transmission requirement of associated data is considered, such as a tolerable transmission latency, a remaining transmission latency, or the data volume of associated data.

For example, the priority of the transmission resource or a priority of the grant may be determined based on one or more of: whether at least one of at least one terminal device of multiple associated terminal devices, a terminal device enabling the first behavior, or a terminal device identified as synchronous or associated is configured or exists; whether at least one of at least one LCH/LCG of multiple associated LCHs/LCGs, an LCH/LCG enabling the first behavior, or an LCH/LCG identified as synchronous or associated is configured or exists; whether the second transmission parameter is configured or used; whether the transmission resource carries the first data; whether the priority of the transmission resource is higher than a twentieth threshold; whether the transmission resource is a specific transmission resource; whether the transmission latency of the first data is less than or equal to a twenty-first threshold; whether a data volume of the first data is greater than or equal to a twenty-second threshold; whether data that can be carried on the transmission resource has an association relationship; whether the transmission latency of data that can be carried on the transmission resource meets a twenty-third threshold; or whether a to-be-transmitted data volume of data that can be carried on the transmission resource meets a twenty-fourth threshold.

The above specific transmission resource may refer to a transmission resource with a specific identification, or a transmission resource with a specific priority.

In some embodiments, the priority of the HARQ process may be determined based on the association relationship of the DRBs/LCHs/terminal devices, or the associated HARQ processes may be transmitted by using transmission resources based on the association relationship of the DRBs/LCHs/terminal devices. For example, HARQ processes corresponding to the associated DRBs/LCHs may be transmitted preferentially. For another example, the priorities of the HARQ processes corresponding to the associated DRBs/LCHs may be higher than the priorities of the HARQ processes corresponding to the unassociated DRBs/LCHs. For yet another example, in the process of determining the priority of the HARQ process, the synchronous or collaborative transmission requirement of associated data is considered, such as a tolerable transmission latency, a remaining transmission latency, or a data volume of associated data.

For example, the priority of the HARQ process may be determined based on one or more of: whether at least one of at least one terminal device of multiple associated terminal devices, a terminal device enabling the first behavior, or a terminal device identified as synchronous or associated is configured or exists; whether the second transmission parameter is configured or used; whether the HARQ process corresponds to at least one of at least one terminal device of multiple associated terminal devices, a terminal device enabling the first behavior, and a terminal device identified as synchronous or associated; whether the HARQ process corresponds to at least one of at least one LCH/LCG of multiple associated LCHs/LCGs, an LCH/LCG enabling the first behavior, and an LCH/LCG identified as synchronous or associated; whether the HARQ process corresponds to an LCH/LCG configured with or using the second transmission parameter; whether the HARQ process corresponds to a terminal device configured with or using the second transmission parameter; whether the transmission resource carries the first data; whether the priority of the transmission resource is higher than a twenty-fifth threshold; whether the transmission resource is a specific transmission resource; whether the HARQ process corresponds to the first data; whether the transmission latency of data corresponding to the HARQ process is less than or equal to a twenty-sixth threshold; whether a data volume corresponding to the HARQ process is greater than or equal to a twenty-seventh threshold; whether data that can be carried in the HARQ process has an association relationship; whether the transmission latency of data that can be carried in the HARQ process meets a twenty-eighth threshold; or whether a to-be-transmitted data volume of data that can be carried in the HARQ process meets a twenty-ninth threshold.

In some embodiments, if there are associated DRBs/LCHs, the sending end or the receiving end may buffer associated data, and send associated data to a peer end or a high-layer in a case where associated data all arrive.

For example, the first device may buffer the first data. In a case where the first data all arrive, the first device sends the first data to the second device.

For another example, the second device receives the first data sent from the first device, and the second device buffers the first data. In a case where the first data all arrive, the second device sends the first data to a high-layer, such as an RLC entity.

As mentioned above, transmission of the first data may involve one or multiple terminal devices. In a case where transmission of the first data involves multiple terminal devices, the multiple terminal devices may correspond to a same network device or may correspond to different network devices. An interaction method of information associated with the first data is described below for the multiple cases mentioned herein.

In some embodiments, the information associated with the first data may include an association relationship, such as an association relationship (i.e., seventh information) between the terminal devices, the quality of service flows, and the DRBs/PDCPs/RLCs/PDUs. Alternatively, the information associated with the first data may include configuration information of the associated DRBs/LCHs or update information of the configuration information of the associated DRBs/LCHs (i.e., eighth information). Alternatively, if transmission of the first data involves a first terminal device and a second terminal device, the information associated with the first data may include information (i.e., ninth information) associated with the first terminal device and/or the second terminal device, such as configuration information and/or allocated or scheduled resource information.

For example, the first device may send the seventh information to the second device, where the seventh information may be used to indicate an association relationship between the terminal devices, the quality of service flows, and the DRBs/PDCPs/RLCs/PDUs, or to indicate requirements having an association relationship.

For example, the seventh information may be used to indicate one or more of: an associated transmission/a collaborative transmission/a synchronous or collaborative transmission requirement between the terminal devices; an associated transmission requirement/a collaborative transmission requirement/a synchronous or collaborative transmission requirement of the quality of service flows; an associated transmission requirement/a collaborative transmission requirement/a synchronous or collaborative transmission requirement between the DRBs/PDCPs/RLCs; and an associated transmission requirement/a collaborative transmission requirement/a synchronous or collaborative transmission requirement of the packet data unit (PDU) sessions.

Optionally, the first device may send the seventh information to the second device in a specific case. For example, if the seventh information changes, and/or the seventh information has not been reported, and/or the seventh information is obtained, then the first device may send the seventh information to the second device. Optionally, the first device may periodically send the seventh information to the second device.

For another example, the first device may send the eighth information to the second device, where the eighth information may be used to indicate configuration information of the associated DRBs/LCHs or update information of the configuration information of the associated DRBs/LCHs.

For yet another example, the first device may send the ninth information to the second device, where the ninth information may be related to the first terminal device and/or the second terminal device. Herein, the first terminal device and the second terminal device have a mapping relationship with the associated DRBs/LCHs, the first device is a first network device corresponding to the first terminal device, and the second device is a second network device corresponding to the second terminal device.

Optionally, the ninth information may include one or more of: resource information allocated or scheduled by the first network device for the first terminal device; suggestion information for the second network device to allocate or schedule a resource for the second terminal device; RRC signaling configured by a first network device for the first terminal device; suggestion information for the second network device to configure RRC for the second terminal device; a mapping relationship between the QoS flow and the DRB/LCH/PDCP configured by a first network device for the first terminal device; suggestion information for a second network device to configure the mapping relationship between the QoS flow and the DRB/LCH/PDCP for the second terminal device; at least one of time information, time stamp information and association information of the first terminal device; or at least one of time information, time stamp information and association information of the second terminal device.

In some embodiments, the second device may determine one or more of the following information of the second terminal device based on the ninth information: whether the first behavior is enabled; resource scheduling or allocation information; configured RRC signaling; a mapping relationship between the QoS flow and the DRB/LCH/PDCP; and association information of the second terminal device.

In some embodiments, the first device may obtain the ninth information from a core network node, a network device, or a high-layer of a terminal device.

In some embodiments, the ninth information may be information for associated DRBs/LCHs/PDCPs, associated terminal devices, or associated QoS flows, or associated PDU sessions.

In some embodiments, the ninth information may be exchanged through an N2 interface.

If transmission of the first data involves a first terminal device, and the first terminal device corresponds to a first network device, then the first device may be the first terminal device, and the second device may be the first network device. That is to say, the first terminal device may exchange one or more types of information mentioned above with the first network device.

If transmission of the first data involves a first terminal device and a second terminal device, and the first terminal device and the second terminal device correspond to a first network device and a second network device, respectively, the first device may be the first network device, and the second device may be the second network device. That is to say, the first network device may exchange one or more types of information mentioned above with the second network device.

If transmission of the first data involves a first terminal device and a second terminal device, and the first terminal device and the second terminal device both correspond to a first network device, the first device may be the first terminal device and/or the first network device, and the second device may be the first network device and/or the second terminal device. That is to say, the first terminal device and the second terminal device may exchange one or more types of information mentioned above with each other through the first network device.

The configuration and scheduling strategy of the first data may be determined based on the association relationship by exchanging the configuration, resource scheduling information, or the association relationship of the first terminal device and/or the second terminal device, between the first network device and the second network device. For example, the first network device may determine the resource scheduling and allocation manner of the first terminal device based on the resources allocated by the second network device for the second terminal device, which is conducive to reducing the complexity of the synchronous or collaborative transmission method for the first data.

It should be noted that the CN or the base station may control whether the first device and/or the second device performs the first behavior, whether/how to identify the association or synchronization information, and whether/how to report or exchange the association or synchronization information.

The embodiments of the present disclosure provide another wireless communication method, which facilitates synchronous or collaborative transmission of first data through data packet-based PDCP data duplication transmission.

FIG. 4 is a schematic flowchart of a wireless communication method provided in another embodiment of the present disclosure. The method shown in FIG. 4 is described from the perspective of interaction between a terminal device and a network device. The method may include step S410.

In step S410, a terminal device receives tenth information sent from a network device. Alternatively, the network device receives the tenth information sent from the terminal device. Herein, the tenth information may be used to indicate configuration information of data packet-based PDCP data duplication transmission.

In some embodiments, the tenth information may indicate a data packet for which data packet-based PDCP data duplication transmission method may be configured, activated, or used, or may indicate a data packet for which data packet-based PDCP data duplication transmission method may not be configured, activated, or used.

In some embodiments, whether a data packet for which data packet-based PDCP data duplication transmission may be configured, activated, or used may be determined based on an importance level of the data packet. The level mentioned herein may be an index of the level, a grade or an indication of the high or low level. The importance mentioned herein may be priority or reliability. The importance level mentioned herein may be, for example, an importance level for a PDU set or a data packet.

In some embodiments, the tenth information may further indicate an initial state, such as an importance level of activatable data packet-based PDCP data duplication transmission corresponding to the initial state.

In some embodiments, the tenth information may be used to indicate one or more of: an importance level of activatable data packet-based PDCP data duplication transmission corresponding to the initial state; a PDU set importance level using configuration information; an importance level of a data packet using data packet-based PDCP data duplication transmission; indicating that a data packet meeting a specific PDU set importance level uses data packet-based PDCP data duplication transmission; indicating that a data packet or PDU set greater than or equal to a first importance level uses data packet-based PDCP data duplication transmission.

If the tenth information includes configuration information of data packet-based PDCP data duplication transmission, the tenth information may be used to indicate whether data packet-based/PDU set-based PDCP data duplication transmission is enabled, or the tenth information may be used to indicate the initial state (such as activation or deactivation) of data packet-based/PDU set-based PDCP data duplication.

In some embodiments, the tenth information may be configuration information for the terminal device, and/or configuration information for a data radio bearer (DRB)/PDCP.

In some embodiments, the tenth information may be carried in radio resource control (RRC) signaling, and/or PDCP configuration information.

In some embodiments, the method shown in FIG. 4 may further include step S420.

In step S420, the terminal device receives eleventh information sent from the network device. Alternatively, the network device sends the eleventh information to the terminal device. Herein, the eleventh information is used to indicate activation or deactivation of data packet-based PDCP data duplication transmission.

In some embodiments, the eleventh information may be carried in DCI, MAC CE, or RRC signaling.

In some embodiments, the eleventh information may be control signaling for the terminal device, all DRBs, or one or more DRBs. For example, the eleventh information may be for one DRB, several DRBs, or one or more specific DRBs. For another example, if the DRBs associated with the first data include a first DRB and a second DRB, the eleventh information may be control signaling for the first DRB, or control signaling for the first DRB and the second DRB.

In some embodiments, the eleventh information may include a logical channel identification (LCID), and the LCID may be used to identify or recognize the eleventh information. For example, the eleventh information is carried in MAC CE signaling, and the LCID may be an identification carried in a header of the MAC CE.

In some embodiments, the eleventh information may include PDCP duplication transmission activation/deactivation indication information for a PDU set, or PDCP activation/deactivation indication information for a data packet, or PDCP duplication transmission activation/deactivation indication information for a PDU.

In some embodiments, the method shown in FIG. 4 may further include step S430.

In step S430, the terminal device receives twelfth information sent from the network device. Alternatively, the network device sends the twelfth information to the terminal device. Herein, the twelfth information may be used to indicate activation or deactivation of DRB-based or RLC-based PDCP data duplication transmission.

If the terminal device receives the eleventh information and the twelfth information, the terminal device may use data packet-based PDCP data duplication transmission (i.e., determining the duplication transmission strategy according to the eleventh information) or DRB-based or RLC-based PDCP data duplication transmission (i.e., determining the duplication transmission strategy according to the twelfth information). Alternatively, the terminal device determines the duplication transmission strategy to be used based on the importance level of the data packet.

For example, the terminal device determining the duplication transmission strategy to be used based on the importance level of the data packet may include: a data packet greater than or equal to a second importance level uses all first transmission resources for duplication transmission, and a data packet less than or equal to the second importance level uses some of the first transmission resources for duplication transmission; or, a data packet greater than or equal to a third importance level uses all first transmission resources for duplication transmission, and a data packet less than or equal to the third importance level does not perform duplication transmission; or, a data packet greater than or equal to a fourth importance level uses some of the first transmission resources for duplication transmission, and a data packet less than or equal to the fourth importance level does not perform duplication transmission; or, a data packet greater than or equal to the second importance level determines a duplication transmission strategy of the data packet based on the eleventh information, and a data packet less than or equal to the second importance level does not perform duplication transmission; or, a data packet greater than or equal to the third importance level determines a duplication transmission strategy of the data packet based on the eleventh information, and a data packet less than or equal to the third importance level does not perform duplication transmission; or, a data packet greater than or equal to the fourth importance level determines a duplication transmission strategy of the data packet based on the eleventh information, and a data packet less than or equal to the fourth importance level does not perform duplication transmission; or, a data packet greater than or equal to the second importance level determines a duplication transmission strategy of the data packet based on the eleventh information, and a data packet less than or equal to the second importance level determines a duplication transmission strategy of the data packet based on the twelfth information; or, a data packet greater than or equal to the third importance level determines a duplication transmission strategy of the data packet based on the eleventh information, and a data packet less than or equal to the third importance level determines a duplication transmission strategy of the data packet based on the twelfth information; or, a data packet greater than or equal to the fourth importance level determines a duplication transmission strategy of the data packet based on the eleventh information, and a data packet less than or equal to the fourth importance level determines a duplication transmission strategy of the data packet based on the twelfth information; or, a data packet greater than or equal to the second importance level determines a duplication transmission strategy of the data packet based on the twelfth information, and a data packet less than or equal to the second importance level determines a duplication transmission strategy of the data packet based on the eleventh information; or, a data packet greater than or equal to the third importance level determines a duplication transmission strategy of the data packet based on the twelfth information, and a data packet less than or equal to the third importance level determines a duplication transmission strategy of the data packet based on the eleventh information; or, a data packet greater than or equal to the fourth importance level determines a duplication transmission strategy of the data packet based on the twelfth information, and a data packet less than or equal to the fourth importance level determines a duplication transmission strategy of the data packet based on the eleventh information.

In some embodiments, the eleventh information may include one or more of: a DRB identification; an LCH identification; an importance level of a data packet; and an identification of the LCH used by a data packet of a specific importance level.

It should be noted that the first duration, second duration, third duration and fourth duration in the embodiments of the present disclosure may all be achieved through corresponding timers.

In a case where a terminal device moves from one cell to another cell, in order to ensure the communication quality of the terminal device, the terminal device may perform a cell handover. FIG. 5 is a schematic flowchart of a wireless communication method provided in yet another embodiment of the present disclosure, so as to solve the support for synchronous or collaborative transmission of the first data during cell handover process.

The method shown in FIG. 5 is described from the perspective of interaction among a first network device, a second network device and a terminal device. Herein, the first network device is a source network device of the terminal device, and the second network device is a candidate target network device of the terminal device. In other words, the first network device is a network device corresponding to a serving cell of the terminal device, and the second network device is a network device corresponding to the candidate target cell of the terminal device.

The method shown in FIG. 5 may include step S510.

In step S510, the first network device sends a cell handover request to the second network device. Alternatively, the second network device receives the cell handover request sent from the first network device. A cell handover process of the terminal device is performed through the exchange of the cell handover request, and the cell handover process may be determined based on thirteenth information. The thirteenth information is related to transmission of the first data, and the first data is data with an association relationship.

In some embodiments, the thirteenth information may include one or more of the following information: an association relationship of QoS flows; an association relationship between multiple terminal devices; or whether a PDU set is enabled. Herein, the multiple terminal devices are receivers and/or senders of the first data.

In the embodiments of the present disclosure, the cell handover process, such as determining the target cell, or determining the transmission strategy of the first data after the cell handover, is determined according to the thirteenth information associated with the first data, so that the processing of related data may be considered in the cell handover process, thereby facilitating the synchronous or collaborative transmission of the first data.

In some embodiments, the thirteenth information may be obtained by the first network device or the second network device. A method for the first network device to obtain the thirteenth information and a method for the second network device to obtain the thirteenth information are described below.

In some embodiments, the first network device may obtain the thirteenth information before sending the cell handover request. For example, the method shown in FIG. 5 may further include step S520.

In step S520, the first network device receives the thirteenth information sent from the terminal device or the core network node. Alternatively, the terminal device sends the thirteenth information to the first network device.

Step S520 may be performed before step S510. That is to say, step S520 is performed before the first network device sends the cell handover request to the second network device.

For example, the terminal device may use a UEassistanceInformation message to send the thirteenth information to the first network device. In other words, the thirteenth information may be carried in the UEassistanceInformation message.

In some embodiments, the core network node may be one or more of: an application function network element; a user plane function network element; a mobility management function network element; and a session management function network element.

In some embodiments, the thirteenth information may be sent/received periodically. In some other embodiments, the thirteenth information may be sent/received in a specific case, so as to save overhead. For example, the first network device receives the thirteenth information sent from the terminal device in a case where one or more of the following cases are met: the terminal device has not sent the thirteenth information to the first network device; the terminal device establishes or modifies part or all of content of the thirteenth information; the terminal device initiates a service request; a prohibit timer being not running is reported; and part or all of content of the thirteenth information changes.

In some embodiments, a cell handover request message may include the thirteenth information. Herein, the thirteenth information is associated with the terminal device. For example, the thirteenth information includes related information of the first data associated with the terminal device. For example, the first data is associated with multiple QoS flows, and the thirteenth information may include a QoS flow associated with the terminal device and in the multiple QoS flows. For another example, if the first data involves multiple terminal devices, the thirteenth information may include information of other terminal devices associated with the terminal device.

In some embodiments, the first network device may receive fourteenth information sent from the second network device. Alternatively, the second network device sends the fourteenth information to the first network device. Herein, the fourteenth information is a response message for the handover request message, and the fourteenth information is determined based on the thirteenth information.

For example, the fourteenth information may include whether the second network device supports access of the terminal device. For another example, if the second network device does not support access of the terminal device, the fourteenth information may further include the reason why the second network device does not support access of the terminal device, such as the second network device not supporting PDU set, and/or the second network device not supporting transmission of the first data. For example, the fourteenth information may include one or more of: whether the second network device supports access of the terminal device; whether the second network device supports PDU set; and whether the second network device supports transmission of the first data.

In some embodiments, the first network device may determine whether the second network device is a target network device of the terminal device based on the fourteenth information.

In order to reduce the interaction between the first network device and the second network device and reduce overhead, the first network device may initiate a cell handover request based on a transmission capability of the second network device for supporting related data.

In some embodiments, the first network device may obtain the thirteenth information before the first network device sends the cell handover request to the second network device. The thirteenth information may be information associated with the second network device, for example, whether the second network device supports transmission of associated data, or whether the second network device supports PDU set.

For example, the thirteenth information may include one or more of the following information: an association relationship of quality of service (QoS) flows; an association relationship between multiple terminal devices; and whether a PDU set is enabled. Herein, the multiple terminal devices are receivers and/or senders of the first data.

In some embodiments, the first network device may obtain the thirteenth information from a core network node, an operation administration and maintenance (OAM), a network device adjacent to the first network device, or the second network device.

The above core network node may be, for example, one or more of the following: an application function network element; a user plane function network element; a mobility management function network element; and a session management function network element.

In some embodiments, the first network device may obtain the thirteenth information in response to one or more of the following cases: a request from the first network device; an update of the thirteenth information; a periodic update time; establishment of an interface between the second network device and the first network device; an interface between the second network device and the core network node is established; or obtainment of the thirteenth information.

In some embodiments, the first network device may send a cell handover request to the second network device based on the thirteenth information. For example, if there are multiple second network devices, the first network device does not select a network device that does not support transmission of the first data and/or does not support PDU set; or the first network device selects or preferentially selects a network device that supports transmission of the first data and/or supports PDU set.

In some embodiments, the first data may include associated multi-modality data flows and/or associated data packets.

In order to facilitate the processing of the first data by the target network device (such as processing of the first data transmitted before the cell handover), the first network device may send information associated with the first data to the second network device. For example, the first network device may send a transmission latency of the first data to the second network device; or, the first network device may send a transmission latency of the PDU set to which the first data belongs to the second network device; or, the first network device may send a transmission latency of data, a data packet or a PDU set associated with the first data to the second network device. For another example, the first network device may send an identification of a PDU set that does not meet the latency requirement to the second network device.

A method for the second network device to obtain the thirteenth information is described below.

In some embodiments, the second network device may obtain thirteenth information, where the thirteenth information is associated with the terminal device. For example, the thirteenth information may include one or more of the following information: an association relationship of quantity of service (QoS) flows; an association relationship between multiple terminal devices; and whether a PDU set is enabled. Herein, the multiple terminal devices are receivers and/or senders of associated data.

The second network device may obtain the thirteenth information before receiving the cell handover request sent from the first network device is received, or when the cell handover request sent from the first network device is received, or after the cell handover request sent from the first network device is received.

In some embodiments, the second network device may obtain the thirteenth information from a core network node or operation administration and maintenance (OAM), or from the first network device. For example, the core network node may be one or more of: an application function network element; a user plane function network element; a mobility management function network element; and a session management function network element.

In some embodiments, the second network device obtains the thirteenth information in response to one or more of the following cases: a request from the second network device; an update of the thirteenth information; a periodic update time; establishment of an interface between the second network device and the first network device; establishment of an interface between the second network device and the core network node; and obtainment of the thirteenth information.

In some embodiments, the second network device may send fourteenth information to the first network device. The fourteenth information is a response message for the handover request message, and the fourteenth information is determined based on the thirteenth information.

In some embodiments, the fourteenth information may include one or more of: whether the second network device supports access of the terminal device; whether the second network device supports PDU set; and whether the second network device supports transmission of the first data.

In a case where the terminal device is handed over to the second network device, the terminal device may report to the second network device, for example, report the thirteenth information through the UEassistanceInformation message. Alternatively, the second network device may obtain the thirteenth information from the terminal device. Herein, the thirteenth information is associated with the terminal device. For example, the thirteenth information includes whether the terminal device supports the PDU set and association relationship information.

In some embodiments, the second network device may receive or obtain the thirteenth information sent from the terminal device in a case where one or more of the following conditions are met: the terminal device receives a cell handover command; the terminal device has not reported the thirteenth information to the first network device; the terminal device has not reported the thirteenth information; the terminal device reports the thirteenth information within a first time (e.g., the last 1 second) before the cell handover; the second network device requests the terminal device to send the thirteenth information; or the terminal device is configured to report the thirteenth information to a target network device after the cell handover.

The second network device may adjust resource configuration or DRB parameters to support transmission of the first data based on the thirteenth information reported by the terminal device.

The second network device is required to perform related processing on the first data to support the continuity of synchronous or collaborative transmission of the first data after the terminal device is handed over to the second network device.

If the first network device does not support transmission of associated data, or does not support operation of the PDU set, the second network device may add related information of the PDU set to the first data/data packet, or the second network device may add packet header information to the first data/data packet. The first data/data packet is some of the first data transmitted by the first network device before the terminal device performs a cell handover. The packet header information indicates related information of the PDU set or indicates the PDU set to which the data packet belongs.

If the first data/data packet is successfully transmitted or fails to be transmitted, or no first data/data packet is required, the second network device may discard the first data/data packet, or data associated with the first data. For example, if the transmission latency of the first data/data packet is greater than or equal to a first threshold, the second network device discards the first data/data packet. For another example, if the transmission latency of the first data/data packet is greater than or equal to the first threshold, the second network device discards all data packets in the PDU set to which the first data/data packet belongs, or discards the data, data packet or PDU set that is associated with the first data/data packet.

Before performing related processing on the first data, the second network device is required to obtain related information of the first data, such as a transmission latency and a association relationship.

For example, as mentioned above, the first network device may send information associated with the first data to the second network device. That is to say, the second network device may obtain information associated with the first data from the first network device.

For another example, the terminal device may send information associated with the first data to the second network device, or the second network device may obtain information associated with the first data from the terminal device. For example, the terminal device sends the transmission latency of the first data to the second network device; or, the terminal device sends the transmission latency of the PDU set to which the first data belongs to the second network device; or, the terminal device sends the transmission latency of the data, data packet or PDU set associated with the first data to the second network device.

In some embodiments, in a case where the target cell or the target network device is determined, the terminal device may perform a cell handover. For example, the first network device may indicate, to the terminal device, the target network device, and/or indicate to perform cell handover.

The cell handover process mentioned above may be determined based on the thirteenth information. Herein, the thirteenth information is related to transmission of the first data, and the first data is data with an association relationship.

In the embodiments of the present disclosure, by considering transmission of associated data during the cell handover process, it is conducive to ensuring the service continuity related to the first data and the synchronous or collaborative transmission of the first data during the handover process.

It should be noted that the multiple methods for supporting synchronous or collaborative transmission of the first data provided in the embodiments of the present disclosure may be used individually or in combination.

It should be noted that the phrase "A/B" mentioned in the embodiments of the present disclosure may refer to A or B.

The method provided in the embodiments of the present disclosure is described below by considering an example in which the first data is data in multiple modes.

### Embodiment 1

Embodiment 1 is a method for supporting transmission of data with an association relationship provided in the embodiments of the present disclosure in a cell handover scenario.

In an implementation, a source base station or a target base station obtains multi-modality related information (e.g., association information of the QoS flows, or association information between UEs), or obtains PDU set enable information and selects a suitable target cell for handover, or selects the received or rejected QoS flow/UE.

In an implementation, in a case where the UE is handed over to the target base station, the UE reports multi-modality related information (e.g., association information of the QoS flows, or association information between UEs) or PDU set enable information to the target base station. Optionally, UEassistanceinformation may be used for reporting. Optionally, the reporting is used for the target base station to adjust resource configuration or DRB parameters.

In an implementation, if the source base station does not support multi-modality or PDU set handling, but the target base station supports multi-modality or PDU set handling, optionally, on one hand, the target base station requests the UE to report the information, or the target base station obtains the information from the CN; on the other hand, the target base station will add PDU set related information to the data/data packet forwarded by the source base station.

In an implementation, if the target base station supports multi-modality or PDU set handling, and the transmission latency of the data/data packet forwarded from the source base station is greater than or equal to a threshold (e.g., the first duration or PSDB), the target base station discards the data/data packet. Furthermore, the target base station discards other data packets in the PDU set to which the data/data packet belongs, and/or discards other data/data packets/PDU sets having associated/dependency/coordinated transmission with the data/data packet. Optionally, the other data/data packet/PDU set corresponds to the same or different UE as the data/data packet, or corresponds to the same or different QoS flows/DRBs/LCHs as the data/data packet. Optionally, the source base station may notify the target network device that PDUs in PDU-set-1 have failed to reach latency requirement *(source notify target that PDUs in PDU-set-1 has failed to reach latency requirement),* or notify the target base station of remaining allowed transmission latency information.

A possible implementation of the embodiment 1 is as follows.

In some embodiments, the source base station sends a handover request message to a candidate target base station or cell. The handover request message further includes multi-modality related information (e.g., association information of the QoS flow, or association information between UEs), and/or information on whether a PDU set is enabled (e.g., RAN performing a PDU set enable operation).

Optionally, the source base station obtains the information through the CN (such as one of AF/UPF/access and mobility management function (AMF)/SMF).

Optionally, the source base station obtains the information through the reporting of the UE. For example, the UE uses the UEassistanceInformation message to report the information. For example, the case in which the UE reports the information includes at least one of the following: the UE has not reported the information, the UE establishes or modifies the related QoS flow/PDU session, the UE requests a service request, a prohibit timer being not running is reported, or the information that the UE is required to report is different from the information previously reported.

In some embodiments, the candidate target base station or cell determines whether the candidate target base station or cell may receive the UE handover, or may receive/reject the QoS flow, based on the handover information (including multi-modality related information and/or information on whether a PDU set is enabled).

Optionally, if the candidate target base station or cell does not support PDU set operation, the target cell or base station rejects the UE handover, or rejects the related QoS flow. For example, the target cell or base station informs the source base station of the rejection reason (for example, through a handover response message or a handover request acknowledgement (ACK); for another example, the reason may be that the PDU set is not supported, or associated access is not supported).

In some embodiments, the source base station selects a suitable target cell and hands over the UE to the suitable cell based on feedback information of the target base station.

Optionally, the source base station preferentially selects a target cell capable of supporting multi-modality and/or PDU set enable operation (in particular, in a case where there are multiple candidate target cells).

Optionally, the source base station does not select a target cell that does not support multi-modality and/or PDU set enable operation (in particular, in a case where there are multiple candidate target cells).

Another possible implementation of the embodiment 1 is as follows.

In some embodiments, the source base station sends a handover request message to a candidate target base station or cell.

In some embodiments, the target base station obtains multi-modality related information (e.g., association information of the QoS flow, or association information between UEs) of the UE for which the source base station requests to hand over, and/or information on whether PDU set is enabled (e.g., RAN performing PDU set enable operation), from the core network node or OAM. Optionally, the core network node may be one of SMF/UPF/AMF.

Optionally, the information is sent upon request by the target base station, or is exchanged upon update, or is exchanged periodically, or is exchanged upon obtainment, or is exchanged during interface establishment.

In some embodiments, the candidate target base station or cell determines whether the UE handover may be received, or whether the QoS flow may be received/rejected, based on the handover information, as well as multi-modality related information and/or information on whether the PDU set is enabled.

Optionally, if the candidate target base station or cell does not support PDU set operation, the target cell or base station rejects the UE handover, or rejects the related QoS flow. Optionally, the target cell or base station informs the source base station of the rejection reason (for example, through a handover response message or a handover request ACK; for another example, the reason may be that the PDU set is not supported, or that associated access is not supported).

In some embodiments, the source base station selects a suitable target cell and hands over the UE to the suitable cell based on feedback information of the target base station.

Optionally, the source base station preferentially selects a target cell capable of supporting multi-modality and/or PDU set enable operation (in particular, in a case where there are multiple candidate target cells).

Optionally, the source base station does not select a target cell that does not support multi-modality and/or PDU set enable operation (in particular, in a case where there are multiple candidate target cells).

Yet another possible implementation of the embodiment 1 is as follows.

In some embodiments, the source base station obtains support information (e.g., whether it is supported, support capability) of the target base station for multi-modality related information (e.g., association information of the QoS flow, or association information between UEs), and/or information on whether PDU set is enabled (e.g., RAN performing PDU set enable operation) from the core network node or the OAM or the candidate target base station or neighboring base station. For example, the core network node may be one of SMF/UPF/AMF.

Optionally, the information is sent upon requested by the source base station, or is exchanged upon update, or is exchanged periodically, or is exchanged upon obtainment, or is exchanged during interface establishment.

In some embodiments, the source base station sends the handover request message to the candidate target base station or cell.

Optionally, the source base station preferentially selects a target cell capable of supporting multi-modality and/or PDU set enable operation as a candidate handover target cell, and sends the handover request message to the cell (in particular, in a case where there are multiple candidate target cells).

Optionally, the source base station does not select a target cell that does not support multi-modality and/or does not support PDU set enable operation. Correspondingly, the source base station does not send the handover request message to the cell or base station (in particular, in a case where there are multiple candidate target cells).

In some embodiments, the candidate target base station or cell determines whether the candidate target base station or cell may receive the UE handover or whether the candidate target base station or cell may receive/reject the QoS flow based on the handover information.

In some embodiments, the source base station selects a suitable target cell and hands over the UE to the suitable cell based on feedback information of the target base station.

Yet another possible implementation of the embodiment 1 is as follows.

In some embodiments, in a case where the UE is handed over to the target base station, the UE reports multi-modality related information (e.g., association information of the QoS flow, or association information between UEs) or information on whether PDU set is enabled to the target base station.

Optionally, UEassistanceinformation may be used for reporting.

Optionally, the reporting is used for the target base station to adjust resource configuration or DRB parameters, or to allow or reject handover or access of the associated UEs, or to request the associated UEs to be handed over to the cell of this base station.

Optionally, the UE reports the information in a case where at least one of the following conditions is met. The conditions include: the UE receives a handover (HO) command, the UE has not reported the information in the source cell, the UE has not reported the information before, the UE reports the information within a period of time (e.g., the last 1 second) before the HO (e.g., using UEassistanceinformation to report the information), and the UE is configured to report the information in the cell or target cell after handover.

Optionally, in a case where the UE reports the information, or after the UE reports the information, the UE enables or restarts a prohibit timer. The prohibit timer is used to prohibit the UE from reporting the information again while the timer is running.

The HO method, supporting multi-modality or PDU set awareness, provided in the embodiments of the present disclosure, ensures service continuity or collaborative transmission during the handover process.

### Embodiment 2

Embodiment 2 is a method for supporting synchronous or collaborative transmission of associated data provided in the embodiments of the present disclosure during data transmission.

The method provided in the embodiments of the present disclosure may support synchronous or collaborative transmission of associated data based on one or more of the LCH/LCP, the PDCP, the grant, obtainment of association or synchronization information within UE, and obtainment of association or synchronization information between UEs.

For the multiple implementations mentioned above, whether the sending end, the receiving end, or the UE of associated data performs the behavior (such as at least one of an LCH/LCP behavior, a PDCP behavior, and a grant behavior), , whether/how to identify the association or synchronization information, whether/how to report or exchange the association or synchronization information, may be controlled by the CN or the base station. For example, if the base station or CN indicate the UE to enable the function or behavior, or the base station or CN configures specific parameters, the sending end, the receiving end, or the UE performs at least one optional scheme of at least one of the following multiple implementations/embodiments. It should be noted that each optional solution in each of the following implementations may be used independently or in combination with each other.

A method for supporting synchronous or collaborative transmission of associated data based on LCH/LCP is described below.

In some embodiments, a DRB/LCH with a coordinated/synchronous requirement is configured, or a DRB/LCH with a coordinated/synchronous requirement is associated. The association relationship may be explicit (e.g., identifying the associated flags and/or identifications of the associated DRBs/LCHs) or implicit (e.g., configured with the same priority). Optionally, in a case where the gNB is informed of the association relationship, the gNB performs the related configuration or configuration update (e.g., the gNB determines the associated QoS flows based on UE reporting or CN indication).

Optionally, the associated DRBs/LCHs involve one UE, but multiple DRBs/LCHs.

Optionally, in a case where the associated DRBs/LCHs involve multiple UEs, for example, the associated DRBs/LCHs include a DRB1 and a DRB2 corresponding to a UE1 and a UE2, if the UE1 and the UE2 correspond to different base stations, the base stations may exchange configuration information of the DRBs/LCHs with each other, or configuration update.

Optionally, in a case where the associated DRBs/LCHs involve multiple UEs, for example, the associated DRBs/LCHs include a DRB1 and a DRB2 corresponding to a UE1 and a UE2, if the UE1 and the UE2 correspond to different base stations, the base stations may exchange second information with each other. The second information includes at least one of: resource information allocated or scheduled for the UE of this base station, resource information recommended by the base station of the associated UE to allocate or schedule for the associated UE, RRC information (e.g., LCH configuration, MAC configuration, or PDCP configuration) configured for the UE of this base station, RRC information (e.g., LCH configuration, MAC configuration, or PDCP configuration) recommended by the base station of the associated UE to configure for the associated UE, a mapping relationship between the QoS flow and the DRB/LCH/PDCP configured for the UE of this base station, a mapping relationship between the QoS flow and the DRB/LCH/PDCP recommended by the base station of the associated UE to configure for the associated UE, at least one of the time information, the time stamp information, and the association information of the associated UE obtained by this base station, and at least one of the time information, the time stamp information, and the association information of the UEs under this base station with an existing association relationship obtained by this base station. For example, the interaction may be performed through the N2 interface.

Optionally, in a case where the associated DRBs/LCHs involve multiple UEs, for example, the associated DRBs/LCHs include a DRB1 and a DRB2 corresponding to a UE1 and a UE2, if the UE1 and the UE2 correspond to a same base station, configuration information of UE1 and UE2 may be coordinated.

In some embodiments, a transmission resource (e.g., CG/DG) are allocated or scheduled for transmission of associated data. For example, in a case where DCI schedules a resource or RRC configures a resource, a specific identification is indicated, or the resource may carry the LCH identification information. Correspondingly, the data of the LCH with the specific identification or the LCH identification may be mapped to the resource for transmission. Optionally, the resource may be CG and/or DG. Optionally, a new LCH mapping restriction is introduced for the LCH to identify the specific identification or specific resource.

Optionally, the associated DRBs/LCHs involve one UE, but multiple DRBs/LCHs.

Optionally, in a case where the associated DRBs/LCHs involve multiple UEs, for example, the associated DRBs/LCHs include a DRB1 and a DRB2 corresponding to a UE1 and a UE2, if the UE1 and the UE2 correspond to different base stations, the base stations may exchange configuration information of the DRB/LCH with each other, or configuration update.

Optionally, in a case where the associated DRBs/LCHs involve multiple UEs, for example, the associated DRBs/LCHs include a DRB1 and a DRB2 corresponding to a UE1 and a UE2, if the UE1 and the UE2 correspond to different base stations, the base stations may exchange second information with each other. The second information includes at least one of: resource information allocated or scheduled for the UE of this base station, resource information recommended by the base station of the associated UEs to allocate or schedule for the associated UEs, RRC information (e.g., LCH configuration, MAC configuration, or PDCP configuration) configured for the UE of this base station, RRC information (e.g., LCH configuration, MAC configuration, or PDCP configuration) recommended by the base station of the associated UEs to configure for the associated UEs, a mapping relationship between the QoS flow and the DRB/LCH/PDCP configured for the UE of this base station, a mapping relationship between the QoS flow and the DRB/LCH/PDCP recommended by the base station of the associated UEs to configure for the associated UEs, at least one of the time information, the time stamp information, and the association information of the associated UEs obtained by this base station, and at least one of the time information, the time stamp information, and the association information of the UEs under this base station with an existing association relationship obtained by this base station. For example, the interaction may be performed through the N2 interface.

Optionally, in a case where the associated DRBs/LCHs involve multiple UEs, for example, the associated DRBs/LCHs include a DRB1 and a DRB2 corresponding to a UE1 and a UE2, if the base stations of the UE1 and the UE2 correspond to a same base station, configuration information of UE1 and UE2 may be coordinated.

In some embodiments, multiple sets of LCH parameters are configured. If the transmission latency or data volume size of the associated DRBs/LCHs meets a threshold, or according to NW indication, or NW feedback (e.g., feedback involving NACK for the associated DRB/LCH, or M times of NACKs), the UE uses a second set of LCH parameters for the DRB/LCH. The second set of parameters may be used for associated DRB/LCH or for the DRBs/LCHs. The UE falls back to normal transmission for the DRB/LCH after the first duration, or in a case where the transmission latency or data volume of the associated DRBs/LCHs meets a threshold, or in a case where the NW indicates to modify the LCH parameters. Optionally, the benefit of the second set of parameters is to ensure that the data of the associated DRBs/LCHs may be preferentially packaged/transmitted to the peer end, or to ensure that the data of the associated DRBs/LCHs may be transmitted to the peer end within a period of time, or to ensure that a time difference of the data of the associated DRBs/LCHs transmitted to the peer end is within a certain range. In another implementation, the second set of parameters enables other associated DRBs/LCHs to be transmitted first (e.g., the first LCH priority is high, but the non-associated LCH priority is low, or the first LCH priority is high, but the tolerable latency is long; the second set of parameters may also be used to enable other associated DRBs/LCHs to be transmitted with priority).

Optionally, the associated DRBs/LCHs involve one UE, but multiple DRBs/LCHs.

Optionally, in a case where the associated DRBs/LCHs involve multiple UEs, for example, the associated DRBs/LCHs include a DRB1 and a DRB2 corresponding to a UE1 and a UE2, if the base stations of the UE1 and the UE2 correspond to different base stations, the base stations may exchange configuration information or configuration update of the DRBs/LCHs with each other.

Optionally, in a case where the associated DRBs/LCHs involve multiple UEs, for example, the associated DRBs/LCHs include a DRB1 and a DRB2 corresponding to a UE1 and a UE2, if the base stations of the UE1 and the UE2 correspond to different base stations, the base stations may exchange second information with each other. The second information includes at least one of: resource information allocated or scheduled for the UE of this base station, resource information recommended by the base station of the associated UEs to allocate or schedule for the associated UEs, RRC information (e.g., LCH configuration, MAC configuration, or PDCP configuration) configured for the UE of this base station, RRC information (e.g., LCH configuration, MAC configuration, or PDCP configuration) recommended by the base station of the associated UEs to configure for the associated UEs, a mapping relationship between the QoS flow and the DRB/LCH/PDCP configured for the UE of this base station, a mapping relationship between the QoS flow and the DRB/LCH/PDCP recommended by the base station of the associated UEs to configure for the associated UEs, at least one of the time information, the time stamp information, and the association information of the associated UE obtained by this base station, and at least one of the time information, the time stamp information, and the association information of the UEs under this base station with an existing association relationship obtained by this base station. Optionally, the interaction may be performed through the N2 interface.

Optionally, in a case where the associated DRBs/LCHs involve multiple UEs, for example, the associated DRBs/LCHs include a DRB1 and a DRB2 corresponding to a UE1 and a UE2, if the base stations of the UE1 and the UE2 correspond to a same base station, configuration information of UE1 and UE2 may be coordinated.

In some embodiments, new indication information, such as a new MAC CE or UCI or SR, is introduced to request a resource from the network to transmit the associated DRBs/LCHs or perform retransmission on the associated DRBs/LCHs in a case where the transmission latencies or data volume size of the associated DRBs/LCHs meet a threshold. Alternatively, the remaining latencies/data volumes of this LCH and the associated LCHs are reported. Alternatively, the NW is indicated that the associated DRBs/LCHs cannot be transmitted, or the NW is requested to discard data of the associated DRBs/LCHs that has been received (e.g., the UE is notified of the LCH/SN of the discarded packet).

Optionally, in a case where a specific condition is met, the new indication information is reported to the base station. For example, new indication information may be reported, in a case where associated data arrive, or in a case where the remaining latency of the associated data is less than a first threshold, or in a case where the data volume of the associated data is greater than a second threshold, or in a case where the associated data is discarded/no longer needed.

In some embodiments, if there are associated DRBs/LCHs, the sending end or the receiving end may buffer the associated data and send the associated data to the peer end or the high-layer in a case where associated data all arrive.

A method for supporting synchronous or collaborative transmission of associated data based on PDCP is described below.

In some embodiments, if the associated DRBs/LCHs include a DRB1 and a DRB2, in a case where the PDU set or PDU of the DRB1 is discarded, the sending end also discards the data packet of the DRB2. Optionally, the sending end PDCP indicate the RLC entity to discard the discarded PDCP SDU/PDU. Optionally, the PDCP entities of the DRB1 and DRB2 exchange the discard packet information.

In some embodiments, the associated DRBs/LCHs include a DRB1 and a DRB2. In a case where the PDU set or PDU of the DRB1 is discarded, the sending end indicate the receiving end to discard which SNs data packets of the DRB1/DRB2, or indicates which SN data packets have a gaps; alternatively, the receiving end discards the data packet of the SN of the DRB1 and the data packet of the DRB2 associated with the DRB1 according to the indication of the discarded DRB1 (for the data packet level, the UE and/or network needs to know the association relationship of the data packet levels). Optionally, the indication is performed or packet discarding of the receiving end in one of the following conditions: the successfully transmitted PDU/PDU set meets a predefined/configured ratio, the number of successfully transmitted PDUs/PDU sets meets a predefined/configured threshold, the PDU/PDU set at a specific position (e.g., the first position) is not transmitted or is not transmitted successfully, and the PDU/PDU set of a specific type (e.g., importance, priority) is not transmitted or is not transmitted successfully.

In some embodiments, if the transmission latencies of the associated DRBs/LCHs meet a threshold, the UE enables duplication for the associated DRBs/LCHs, and the UE falls back to normal transmission after a first duration. Alternatively, if the transmission latencies of the associated DRBs/LCHs meet a threshold 2, the UE deactivates duplication for the associated DRBs/LCHs, and the UE falls back to normal transmission after the second duration.

In some embodiments, if there are associated DRBs/LCHs, the sending end or the receiving end may buffer the associated data, and send the buffered data to the peer end or the high-layer in a case where associated data all arrive.

In some embodiments, the associated DRBs/LCHs include a DRB1 and a DRB2. In a case where the PDU set or PDU of the DRB1 does not meet a condition such as a latency, the receiving end indicate the sending end to discard the data packets of the DRB1 and the associated DRB2 (the corresponding SN and/or DRB/LCH index may be indicated for the data packets).

In some embodiments, the associated DRBs/LCHs include a DRB1 and a DRB2. In a case where a latency of the PDU set or PDU of the DRB1 reaches a certain threshold (optionally, the data packet of the DRB2 has been received at this time), or in a case where data of one of the DRBs arrives, or in a case where at least one of the associated data packets arrives, the receiving end indicates the sending end to send or resend the data packet of DRB1 (the corresponding SN and/or DRB/LCH index may be indicated for the data packet). (For the data packet level, the UE and/or network needs to know the association relationship of the data packet levels). Optionally, the indication information may be carried in a control PDU. For example, the indication information may be a status report (e.g., a RLC status report and/or a PDCP status report).

In some embodiments, if the associated DRBs/LCHs involve multiple UEs, for example, the associated DRBs/LCHs include a DRB1 and a DRB2 corresponding to a UE1 and a UE2, in a case where the PDU set or PDU of the DRB1 is discarded, the UE2 also discards the data packet of the DRB2. Optionally, the UE1 indicates packet discarding information to the UE2, and the packet discarding information includes at least one of: associated DRB identifications, associated packet identifications, a discarded packet identification, a packet identification to be discarded, and a UE identification. Optionally, the PDCP of the UE1 or the UE2 indicates its own RLC entity to discard the discarded PDCP SDU/PDU. Optionally, the packet discarding information may be indicated to the UE2 upon request by the UE2.

In some embodiments, if the associated DRBs/LCHs involve multiple UEs, for example, the associated DRBs/LCHs include a DRB1 and a DRB2 corresponding to a UE1 and a UE2, in a case where the PDU set or PDU of the DRB1 is discarded, the UE1 indicates the corresponding base station to discard the which SN data packets of the DRB1, or indicates which SN data packets of DRB1 have a gap. Alternatively, the UE2 indicates the corresponding base station to discard which SN data packets of the DRB1/DRB2, or indicates which SN data packets the DRB1/DRB2 have a gap (optionally, if the UE1 and the UE2 correspond to different base stations, the base station corresponding to the UE1 exchanges related information of the DRB2 to the base station corresponding to the UE2 or the base station corresponding to the DRB2). Alternatively, the UE1 indicates the corresponding base station to discard which SN data packets the DRB1, or indicates which SN data packets of the DRB1 have a gaps (optionally, if the UE1 and the UE2 correspond to different base stations, the base station corresponding to the UE1 tells the base station corresponding to the UE2 to discard which data packets of the DRB1 or to indicate which data packets of the DRB1 have a gap, and then the base station corresponding to the UE2 determines which data packets of the UE2/DRB2 are discarded). It should be noted that, for the data packet level, the UE and/or the network needs to know the association relationship of the data packet levels. Optionally, the indication or the receiving end packet discarding a packet is performed in one of the following conditions: the successfully transmitted PDU/PDU set meets a predefined/configured ratio, the number of successfully transmitted PDUs/PDU sets meets a predefined/configured threshold, the PDU/PDU set at a specific position (e.g., the first position) is not transmitted or is not transmitted successfully, and the PDU/PDU set of a specific type (e.g., importance, priority) is not transmitted or is not transmitted successfully.

In some embodiments, in a case where the associated DRBs/LCHs involve multiple UEs. The associated DRBs/LCHs include a DRB1 and a DRB2 corresponding to a UE1 and a UE2, if the transmission latency of the associated DRB1/UE1 meets a threshold, the UE1 enables duplication for the associated DRBs/LCHs, and the UE1 falls back to normal transmission after a first duration. If the transmission latency of the associated DRB1/UE1 meets a threshold 2, the UE1 deactivates duplication for the associated DRBs/LCHs, and the UE1 falls back to normal transmission after a second duration. Optionally, the UE1 and the UE2 may learn which data packets (e.g., at least one of a UE identification, a DRB identification, an LCH identification, and an SN of a data packet) are associated and/or information (e.g., a latency) of the associated data packets by exchanging information with each other.

In some embodiments, in a case where the associated DRBs/LCHs involve multiple UEs. The associated DRBs/LCHs include a DRB1 and a DRB2 corresponding to a UE1 and a UE2. Optionally, if there are associated DRBs/LCHs, UEs or base stations of the associated DRBs/LCHs, or the sending end or the receiving end may buffer associated data, and send the buffered data to the peer end or the high-layer in a case where associated data all arrive.

In some embodiments, if the associated DRBs/LCHs involve multiple UEs. The associated DRBs/LCHs include a DRB1 and a DRB2 corresponding to a UE1 and a UE2, in a case where the PDU set or PDU of the DRB1 does not meet a condition such as a latency, the receiving end of the UE1 indicates the UE1 to discard the data packets of the DRB1 and the associated DRB2 (correspondingly, the UE1 tells the UE2 to discard the related data packets); alternatively, the receiving end of the UE1 indicates the UE1 to discard the data packet of DRB1 (in addition, if the UE1 and the UE2 correspond to different base stations, the base station of the UE1 exchanges the data packet associated with the discarded DRB2 with the base station of the UE2, or the base station of the UE1 tells the base station of the UE2 which data packet of the DRB1 is discarded by the base station of the UE1; the base station of the UE2 discards the data packets associated with the DRB2 and/or indicates the UE2 which data packets of the DRB2 to discard) and the data packet of associated DRB2. Note: the corresponding SN and/or DRB/LCH index may be indicated for the data packet.

In some embodiments, if the associated DRBs/LCHs involve multiple UEs. The associated DRBs/LCHs include a DRB1 and a DRB2 corresponding to a UE1 and a UE2, in a case where the latency of the PDU set or PDU of the DRB1 is equal to a certain threshold (the data packet of the DRB2 has been received at this time), or in a case where data of one of the DRBs arrives, or in a case where at least one of the associated data packets arrives (optionally, if the UE1 and the UE2 correspond to different base stations, the base stations need to exchange packet arrival information/latency information with each other), the receiving end indicates the sending end to send or resend the data packet of the DRB1 (the corresponding SN and/or DRB/LCH index may be indicated for the data packet). For example, in a case where the associated data packet of the UE2 arrives, the base station of the UE2 notifies the base station of the UE1 of the information, and the base station of the UE1 indicates the UE1 to send the associated data packet (the indication information may be sent through a control PDU, the indication information may carry at least one of DRB information, LCH information, and packet identification information). It should be noted that, for the data packet level, the UE and/or the network needs to know the association relationship of the data packet levels. Optionally, the indication information may be carried in the control PDU. For example, the indication information may be a status report (e.g., the RLC status report and/or the PDCP status report).

A method for supporting synchronous or collaborative transmission of associated data based on grant is described below.

In some embodiments, for multiple CG occasions, even if this DRB/LCH has no data to be transmitted, but if the associated DRBs/LCHs have data to be transmitted that has not been transmitted, these CG occasions are used to transmit the data to be transmitted. Alternatively, if the associated DRBs/LCHs have data to be transmitted, a request is made to the network, such as requesting an additional UL grant via UTO-UCI.

Optionally, it applies to a case where the associated DRBs/LCHs involve one UE.

Optionally, the associated DRBs/LCHs involve multiple UEs. The associated DRBs/LCHs include a DRB1 and a DRB2 corresponding to a UE1 and a UE2. For example, the UE2 has data to be transmitted through a resource of the UE1, and the UE2 exchanges information of the data to be transmitted with the UE1. At the same time, in a case of transmission through the resource of the UE1, the identification information of the UE2 is required to be carried to indicate that the data belongs to the UE2. (Optionally, if the UE1 and the UE2 involves multiple base stations, the base station of the UE1 exchanges the data of the UE2 with the base station of the UE2).

Optionally, the associated DRBs/LCHs involve multiple UEs. The associated DRBs/LCHs include a DRB1 and a DRB2 corresponding to the UE1 and the UE2. For example, if the UE2 requests a resource through the UE1, the UE2 exchanges the to-be-transmitted data volume/latency information with the UE1, which is used by the UE1 to request a resource from the network. (Optionally, if the UE1 and the UE2 involves multiple base stations, the base station of the UE1 notifies the base station of the UE2 of the request, and the base station of the UE2 allocates or schedules a resource to the UE2).

In some embodiments, if there are associated DRBs/LCHs and the available grant has remaining resources, padding may not be added, and instead, data packets of the associated DRBs/LCHs may be transmitted.

Optionally, it applies to a case where the associated DRBs/LCHs involve one UE.

Optionally, the associated DRBs/LCHs involve multiple UEs. The associated DRBs/LCHs include a DRB1 and a DRB2 corresponding to a UE1 and a UE2. For example, the UE2 has data to be transmitted through the resource of the UE1, and the UE2 exchanges information of the data to be transmitted with the UE1. At the same time, in a case of transmission through the resource of the UE1, the identification information of the UE1 is required to be carried to indicate that the data belongs to the UE2. (Optionally, if the UE1 and the UE2 involves multiple base stations, the base station of the UE1 exchanges the data of the UE2 with the base station of the UE2).

In some embodiments, during the prioritization process, an association relationship is considered. That is to say, if the transmission latencies of the associated DRBs/LCHs meet a threshold, the grant corresponding to the data is preferentially transmitted, or the HARQ process corresponding to the data is preferentially selected.

Optionally, it applies to a case where the associated DRBs/LCHs involve one UE.

Optionally, if the associated DRBs/LCHs involve multiple UEs.

Optionally, if the associated DRBs/LCHs involve multiple UEs, the UEs may exchange a result whether a resource is prioritized or which resources are prioritized with each other.

In some embodiments, even if the data has a low priority, the terminal device may request additional transmission resources for urgent data (*for example, the terminal device requests a transmission resource through MAC CE, PUCCH (SR or UTO-UCI)*)*,* or the terminal device may preferentially transmit the data in LCH priority, HARQ-PID-selection and LCP for urgent data. (*Even if the data is of lower LCH prio, but if it becomes urgent, UE can 1) request additional grant (The request would be MAC CE, PUCCH (SR or UTO-UCI)), 2) prio it in LCH prioritization, HARQ-PID-selection, and LCP*)*.*

In some embodiments, if the data has a high LCH, but the data has not arrived or the data is not urgent, the terminal device may not preferentially transmit the data in LCH priority, HARQ-PID-selection and LCP, or reduce the corresponding priority of the data. (*if the data is of higher LCH, but if it is not urgent due to the pairing data has not arrived, UE can 1) de-prio it in LCH prioritization, HARQ-PID-selection, and LCP*)*.*

A method for supporting synchronous or collaborative transmission of associated data based on obtainment of association or synchronization information in the UE (this method is mainly for multi-modality data within UE; optionally, this method may also be used for multi-modality data between UEs).

In some embodiments, packet-level may be implemented in the following manners.

Optionally, the gNB obtains time stamp information/coordination information of each data packet and uses this information for scheduling (*gNB obtains the time stamp info*/*coordination info per packets, and use this info for scheduling*)*.* The information may be obtained from CN/AF/UE (*The info is from CN*/*AF*/*UE*)*.*

Optionally, the gNB obtains the time stamp information/coordination information of each data packet and uses this information for data packet discarding/LCH adjustment (*UE obtains the time stamp info*/*coordination info per packets, and use this info for discarding*/*LCH adjustment*)*.* This information may be obtained from the CN/AF/UE (*The info is from UE application layer*)*.*

Optionally, the time stamp information is a time when the packet is expected to arrive at the peer end, or a time when the packet is expected to be decoded, or a last time when the packet is processed, or a time when the packet is sent, or a time when the packet is packed, or a remaining packet time.

In some embodiments, QoS flow level may be implemented in the following manners.

Optionally, the gNB knows the association relationship between QoS flows and uses this information for scheduling/RRC parameter adaptation (*the gNB know the association relationship between QoS flows and use this info for scheduling*/*RRC parameter adaptation*)*.* The information may be obtained from the CN. Optionally, the CN may obtain the information from AF (*The info is from CN. Optionally, CN info is from AF*)*.*

Optionally, the UE knows the association relationship between QoS flows and uses this information for data packet discarding/LCH adjustment (*the UE know the association relationship between QoS flows and use this info for discarding*/*LCH adjustment*)*.* The information may be obtained from CN or UE application layer. Optionally, CN may obtain this information from AF (*The info is from CN or UE application layer. Optionally, CN info is from AF*)*.*

A method for supporting synchronous or collaborative transmission of associated data based on association or synchronization information between UEs is described below (the method is mainly for multi-modality data between UEs; optionally, the method may also be used for multi-modality data within a UE).

The inter-UE multi-modality involves multiple sending ends and/or multiple receiving ends. Therefore, it is necessary to perform interaction between the sending ends and/or the receiving ends; alternatively, the configuration/behavior of one sending end-receiving end affects the configuration/behavior of another sending end-receiving end.

The packet-level may include at least one of the following.

In some embodiments, for DL: the gNB obtains one of time information, time stamp information, and association information.

Optionally, the information is from CN or AF. Optionally, the information is synchronization or association information. Optionally, the information involves multiple base stations (DL transmission) or multiple UEs (DL reception). Optionally, the base station performs UE function activation control or scheduling/configuration/resource allocation based on the information.

Optionally, if the DL sending end involves one base station, or multiple UEs of the receiving end correspond to one base station, then the base station performs UE function activation control or scheduling/configuration/resource allocation on the multiple UEs based on one of the time information, time stamp information, and association information.

Optionally, if the DL sending end involves multiple base stations, or multiple UEs of the receiving end belong to different base stations, then the multiple UEs may exchange first information with each other. Optionally, the first information is determined based on one of the time information, time stamp information, and association information. The first information includes at least one of the following: resource information allocated or scheduled for the UE of this base station, resource information recommended by the base station recommended of the associated UEs to allocate or schedule for the associated UEs, RRC information (e.g., LCH configuration, MAC configuration, or PDCP configuration) configured for the UE of this base station, RRC information (e.g., LCH configuration, MAC configuration, or PDCP configuration) recommended by the base station recommended of the associated UEs to configure for the associated UEs, at least one of the time information, the time stamp information, and the association information of the associated UEs obtained by this base station, and at least one of the time information, the time stamp information, and the association information of the UEs under this base station with an existing association relationship obtained by this base station. Optionally, the interaction may be performed through the N2 interface.

In some embodiments, for UL: the UE obtains one of time information, time stamp information, and association information.

Optionally, the information is obtained through interaction of high-layers of the UEs, or is carried in a high-layer packet or a packet header of the high-layer packet.

Optionally, the UE obtains information associated with which UEs. Optionally, the association information is indicated to the UE by the CN or the base station.

Optionally, associated UEs exchange the information with each other. For example, the UE1 is associated with the UE2. The UE1 exchanges one of the time information, time stamp information, and association information of the UE1 with the UE2 or the UE1 requests the UE2 to exchange one of the time information, time stamp information, and association information of the UE2.

Optionally, the UE reports one of the time information, time stamp information, and association information to the base station. Optionally, one of the time information, time stamp information, and association information is carried in a low-layer (e.g., at least one of SDAP/PDCP/RLC/MAC) data packet or data packet header, or a low-layer control PDU. Optionally, the base station uses one of the time information, time stamp information, and association information to perform UE function activation control, or scheduling/configuration/resource allocation. Optionally, if the receiving end involves multiple base stations, or the associated UEs correspond to different base stations, the information can be also used by the base station to determine the second information, and/or the involved base stations exchange the second information with each other. The second information includes at least one of: resource information allocated or scheduled for the UE of this base station, resource information recommended by the base station recommended of the associated UEs to allocate or schedule for the associated UEs, RRC information (e.g., LCH configuration, MAC configuration, or PDCP configuration) configured for the UE of this base station, RRC information (e.g., LCH configuration, MAC configuration, or PDCP configuration) recommended by the base station recommended of the associated UEs to configure for the associated UEs, at least one of the time information, the time stamp information, and the association information of the associated UEs obtained by this base station, and at least one of the time information, the time stamp information, and the association information of the UEs under this base station with an existing association relationship obtained by this base station. Optionally, the interaction may be performed through the N2 interface.

Optionally, the time stamp information is a time when the packet is expected to arrive at the peer end, or a time when the packet is expected to be decoded, or a last time when the packet is processed, or a time when the packet is sent, or a time when the packet is packed, or a remaining packet time.

The QoS flow-level includes at least one of the following.

In some embodiments, for DL: the gNB obtains synchronization information or association information. The information is for the QoS flow.

Optionally, the information is from CN or AF. Optionally, the information is synchronization or association information. Optionally, the information involves multiple base stations (DL transmission) or multiple UEs (DL reception). Optionally, the base station performs UE function activation control, or scheduling/configuration/resource allocation, or RLC/QoS flow mapping, based on the information.

Optionally, if the DL sending end involves one base station, or multiple UEs of the receiving end correspond to one base station, then the base station performs UE function activation control, or scheduling/configuration/resource allocation, or RLC/QoS flow mapping on the multiple UEs based on one of the synchronization information or association information.

Optionally, if the DL sending end involves multiple base stations, or multiple UEs of the receiving end belong to different base stations, the multiple UEs may exchange third information with each other. For example, the third information is determined based on one of the synchronization or association information. The third information includes at least one of: resource information allocated or scheduled for the UE of this base station, resource information recommended by the base station of the associated UEs to allocate or schedule for the associated UEs, RRC information (e.g., LCH configuration, MAC configuration, or PDCP configuration) configured for the UE of this base station, RRC information (e.g., LCH configuration, MAC configuration, or PDCP configuration) recommended by the base station of the associated UEs to configure for the associated UEs, at least one (e.g., whether there is an association, which UEs are associated, which QoS flows are associated) of the synchronization or association information obtained by this base station, a mapping relationship between the QoS flow and the DRB/LCH/PDCP configured for the UE of this base station, and a mapping relationship between the QoS flow and the DRB/LCH/PDCP recommended by the base station of the associated UEs to configure for the associated UEs. For example, the interaction may be performed through the N2 interface.

In some embodiments, for UL: the UE obtains synchronization information or association information.

Optionally, the information, or which other UEs the UE is associated with, or which QoS flows of the UE are associated with which QoS flows of which other UEs, is obtained through interaction of the high-layer of the UE, or is carried in a high-layer packet or a packet header of the high-layer packet. Optionally, the high-layer is an application layer.

Optionally, the UE obtains information associated with which UEs, or which QoS flows of the UE are associated with which QoS flows of another UE. Optionally, the association information is indicated to the UE by the CN or the base station.

Optionally, the information or which other UEs the UE is associated with, is exchanged between UEs interact with each othe. For example, if the UE1 learns that the UE1 is associated with the UE2, or that the QoS flow 1 of the UE1 is associated with the QoS flow 2 of the UE2, then the UE1 exchanges the association information with the UE2.

Optionally, the UE reports the synchronization or association information to the base station. For example, the synchronization or association information is carried in an RRC message (e.g., UE assistance information), or is carried in a low-layer (e.g., at least one of SDAP/PDCP/RLC/MAC) data packet or data packet header, or a low-layer control PDU. Optionally, the synchronization or association information is used to indicate which UEs are associated and/or which QoS flows are associated. Optionally, the synchronization or association information is used by the base station to perform UE function activation control, or scheduling/configuration/resource allocation. Optionally, if the receiving end involves multiple base stations, or the associated UEs correspond to different base stations, then the information is further used by the base station to determine fourth information, and/or the fourth information is exchanged between the involved base stations. The fourth information includes at least one of: resource information allocated or scheduled for the UE of this base station, resource information recommended by the base station of the associated UEs to allocate or schedule for the associated UEs, RRC information (e.g., LCH configuration, MAC configuration, or PDCP configuration) configured for the UE of this base station, a mapping relationship between the QoS flow and the DRB/LCH/PDCP configured for the UE of this base station, a mapping relationship between the QoS flow and the DRB/LCH/PDCP recommended by the base station of the associated UEs to configure for the associated UEs, RRC information (e.g., LCH configuration, MAC configuration, or PDCP configuration) recommended by the base station of the associated UEs to configure for the associated UEs, and the synchronization or association information obtained by this base station. For example, the interaction may be performed through the N2 interface.

A possible implementation of the embodiment 2 is as follows.

In some embodiments, the network configures the DRB or LCH.

Optionally, the configuration of the DRB or LCH is configured to the UE through a dedicated signaling. For example, the configuration of the DRB or LCH may be configured to the UE through DRB-config or logicalchannelconfig.

Optionally, the configured DRB or LCH corresponds to or reflects or identifies the coordinated/synchronous requirement.

Optionally, in a case where the network configures the DRB/LCH, the DRB/LCH with the coordinated/synchronous requirement is identified or configured, or the DRB/LCH with the coordinated/synchronous requirement is associated. Optionally, the association relationship or the coordinated/synchronous requirement may be explicit (e.g., identifying the associated flags and/or identifications of the associated DRBs/LCHs), or implicit (e.g., configured with the same configured priority). Optionally, in a case where the gNB learns the coordination/association relationship, the gNB performs related configuration or configuration update (e.g., the gNB determines the associated QoS flows/DRBs/LCHs based on UE reporting or CN indication).

Optionally, the network allocates or schedules a transmission resource (e.g., CG/DG) for transmitting the associated data.

Optionally, the network configures multiple sets of configuration or transmission parameters. For example, the transmission or configuration parameters are for PDCP/RLC/MAC/PHY configuration or transmission.

For example, different sets of parameters are used in different cases or scenarios.

For example, the parameters are used for the associated DRBs/LCHs or the associated DRBs/LCHs that meet a condition.

For example, a set of parameters is a default configuration, and is used in a case where the synchronous/coordinated transmission is not activated/not indicated/does not meet a usage condition. The other sets of parameters, such as another set/multiple sets of parameters, are used in a case where the synchronization/coordinated transmission is activated/indicated/meets a usage condition.

For example, the parameters include at least one of: an LCH priority, a prioritisedBitRate, an allowed-CG list, duplication, LCH of duplication, repetition, MCS.

For example, if the transmission latency or data volume size of the associated DRBs/LCHs meets a threshold, or according to NW indication, or NW feedback (e.g., feedback involving NACK for the associated DRB/LCH, or M times of NACKs), the UE uses a second set of LCH parameters for the DRB/LCH. The second set of parameters may be used for associated DRB/LCH or the DRBs/LCHs. The UE falls back to normal transmission for the DRB/LCH after the first duration, or in a case where the transmission latency or data volume size of the associated DRBs/LCHs meets a threshold, or in a case where the NW indicates to modify the LCH parameters. Optionally, the benefit of the second set of parameters is to ensure that the data of the associated DRBs/LCHs may be preferentially packaged/transmitted to the peer end, or to ensure that the data of the associated DRBs/LCHs may be transmitted to the peer end within a period of time, or to ensure that a time difference of the data of the associated DRBs/LCHs transmitted to the opposite end is within a certain range.

For example, compared with the first transmission parameter, the second transmission parameter lets the LCH associated with the first data, with a higher LCH priority, a greater priority bit rate (prioritisedBitRate), and more allowed configured grant list, so that the transmission rate of the LCH associated with the first data is faster than that of other LCHs (*the 2nd set of parameters can let the associated LCH with higher LCH priority, higher prioritisedBitRate, more allowed-CG list. With this, the associated LCHs can be transmitted quickly than other LCHs*)*.*

For another example, compared with the first transmission parameter, the second transmission parameter lets the LCH associated with the first data, with activating PDCP repetition or more number of repetition transmissions, and lower-order modulation and coding scheme, so that compared with data of other LCHs, the first data may be successfully transmitted or have a higher transmission success rate (*the 2nd set of parameters can let the associated LCH with activating PDCP duplication*/*bigger number of repetitions, or lower MCS. With this, the retx can be avoided, then the data of this associated LCHs can be transmitted successfully(without extra retx time)*)*.*

Optionally, UE reporting, such as a new MAC CE or UCI or SR, is introduced to request a resource from the network in a case where the transmission latency or data volume size of the associated DRBs/LCHs meets a threshold. Optionally, the resource request is used by UE to transmit the associated DRBs/LCHs or to perform retransmission of the associated DRBs/LCHs.

Optionally, UE reporting, such as a new MAC CE or UCI or SR, is introduced to report the remaining latency and/or data volume size of this LCH, or to report the remaining latency and/or data volume size of this LCH and associated LCHs. For example, the LCH is a specific or associated LCH.

Optionally, UE reporting, such as a new MAC CE or UCI or SR, is introduced to indicate to the NW that the associated DRBs/LCHs cannot be transmitted or to request the NW to discard data of the associated DRBs/ data that has been received (e.g., the UE informs of the LCH/SN of the discarded packet).

Optionally, if there are associated DRBs/LCHs, the sending end or the receiving end may buffer the associated data, and send the buffered data to the peer end or high-layer in a case where associated data all arrive.

For example, the sending end may buffer the associated data, and send the buffered data to the peer end in a case where associated data all arrive.

For example, the receiving end may buffer the associated data, and send the buffered data to the high-layer in a case where associated data all arrive.

In some embodiments, the network learns the coordinated/synchronous requirement before the network configuration mentioned above.

Optionally, the coordinated/synchronous requirement is informed to the base station by the CN, such as the SMF/UPF/AMF/AF informing the base station, or the coordinated/synchronous requirement is reported to the base station by the UE.

Optionally, the coordinated/synchronous requirement is based on UE reporting, QoS flow reporting, or PDU session reporting.

Optionally, in a case where the coordinated/synchronous requirement changes, or in a case where the coordinated/synchronous requirement is learned, or in a case where the coordinated/synchronous requirement is periodic, the base station is notified of the coordinated/synchronous requirement.

Another possible implementation of the embodiment 2 is as follows.

In some embodiments, the network configures the DRB or PDCP.

Optionally, the configuration of the DRB or PDCP is configured to the UE through dedicated signaling. For example, the configuration of the DRB or PDCP may be configured to the UE through DRB-config or PDCP-config.

Optionally, the configured DRB or PDCP corresponds to or reflects or identifies the coordinated/synchronous requirement.

Optionally, in a case where the network configures the DRB/PDCP, the DRB/PDCP with the coordinated/synchronous requirement is identified or configured, or the DRB/PDCP with the coordinated/synchronous requirement is associated. Optionally, the association relationship or the coordinated/synchronous requirement may be explicit (e.g., identifying associated flags and/or identifications of the associated DRBs/PDCPs) or implicit (e.g., configuring the same or similar low-layer parameters, such as LCH parameters). Optionally, in a case where the gNB learns the coordination/association relationship, the gNB performs related configuration or configuration update (e.g., the gNB determines the associated QoS flows/DRBs/PDCPs/LCHs based on UE reporting or CN indication).

Optionally, the network allocates or schedules a transmission resource (e.g., CG/DG) for transmitting the associated data.

Optionally, if a data packet of a DRB/PDCP is discarded, the data packets of the associated DRBs/PDCPs are also discarded. For example, if the associated DRBs/LCHs include a DRB1 and a DRB2, in a case where the PDU set or PDU of the DRB1 is discarded, the sending end also discards the data packet of the DRB2. Optionally, the sending end PDCP indicates the RLC entity to discard the discarded PDCP SDU/PDU.

Optionally, if a data packet of a DRB/PDCP is discarded, the sending end indicates the discarded information to the receiving end, or the sending end indicates the receiving end to discard the packet. Optionally, if a data packet of a DRB/PDCP is discarded, the sending end indicates the discarded information (optionally, including the association relationship between the DRBs or the data packets) to the receiving end , or the sending end indicates the receiving end to discard the packet, a packet associated with the packet and data packet of the associated DRB. For example, the sending end indicates the identification, such as the sequence number, of the data packet and/or its associated packet (further including the corresponding DRB identification) that is discard or no longer needed or considered completed. For example, the associated DRBs/LCHs include a DRB1 and a DRB2, and in a case where the PDU set or PDU of the DRB1 is discarded, the sending end indicates the receiving end to discard which SN data packets of the DRB1/DRB2. For example, the receiving end discards the SN data packet of DRB 1 and the data packet of the DRB2 associated with the DRB1 according to the indication of the discarded DRB1 (for the data packet level, the UE and/or network needs to know the association relationship of the data packet levels). Optionally, discarding the packet by the sending end, or indication, or discarding the packet by the receiving end is performed in a case where one of the following conditions is met: the successfully transmitted PDU/PDU set meets a predefined/configured ratio, the number of successfully transmitted PDUs/PDU sets meets a predefined/configured threshold, the PDU/PDU set at a specific position (e.g., the first position) is not transmitted or is not transmitted successfully, or the PDU/PDU set of a specific type (e.g., importance, priority) is not transmitted or is not transmitted successfully.

Optionally, in a case where a certain condition is met, the UE activates duplication of the associated DRBs. For example, the duplication is for all data in the DRB, or for a specific data packet in the DRB, or for per-PDU duplication, or for per-PDU set duplication. For example, if the transmission latencies of the associated DRBs/LCHs meet a threshold, the UE enables duplication for the associated DRBs/LCHs, and the UE falls back to normal transmission after a first duration. For example, the first duration may be a first timer. For example, in a case where the UE activates or enables duplication, the first timer is turned on.

Optionally, if there are associated DRBs/LCHs, the sending end or the receiving end may buffer the associated data, and send the buffered data to the peer end or high-layer in a case where associated data all arrive.

For example, the sending end may buffer the associated data, and send the buffered data to the peer end in a case where associated data all arrive.

For example, the receiving end may buffer the associated data, and send the buffered data to the high-layer in a case where associated data all arrive.

In some embodiments, the UE and/or the network learns the coordinated/synchronous requirement before the network configuration.

Optionally, the coordinated/synchronous requirement is informed to the base station by the CN, such as the SMF/UPF/AMF/AF informing to the base station, or the coordinated/synchronous requirement is reported to the base station by the UE.

Optionally, the coordinated/synchronous requirement is reported based on UE reporting, QoS flow reporting, or PDU session reporting.

Optionally, the coordinated/synchronous requirement is informed to the UE by the CN, such as the SMF/UPF/AMF/AF informing to the UE. Alternatively, the coordinated/synchronous requirement is informed to the UE by the base station, or is informed to the UE AS by the high-layer of the UE (such as the NAS).

Optionally, in a case where the coordinated/synchronous requirement changes, or in a case where the coordinated/synchronous requirement is learned, or in a case where the coordinated/synchronous requirement is periodic, the base station is notified of the coordinated/synchronous requirement.

Yet another possible implementation of the embodiment 2 is as follows.

In some embodiments, the network allocates or schedules or configures a transmission resource, such as an UL/DL transmission resource, to the UE.

Optionally, the transmission resource is configured to the UE through dedicated signaling. For example, the transmission resource may include CG or DG.

Optionally, the CG may have one or more transmission resources in a period.

Optionally, the UL/DL resources may be continuous or discontinuous resources, and may be resources with unequal intervals within a pattern.

Optionally, the configured DRB or PDCP or LCH corresponds to or reflects or identifies the coordinated/synchronous requirement. Optionally, the associated DRBs/PDCPs/LCHs have same or different LCH mapping restrictions. For example, the LCH priorities are same, available DGs are same, and available CGs are same.

Optionally, a specific CG/DG may transmit the associated DRBs/PDCPs/LCHs, or the associated DRBs/PDCPs/LCHs may be transmitted on a specific CG/DG.

Optionally, in a case where the network configures the DRB/PDCP, the DRBs/PDCPs with the coordinated/synchronous requirement are identified or configured, or the DRBs/PDCPs with the coordinated/synchronous requirement are associated. For example, the association relationship or the coordinated/synchronous requirement may be explicit (e.g., identifying associated flags and/or identifications of the associated DRBs/PDCPs) or implicit (e.g., configuring the same or similar low-layer parameters, such as LCH parameters). For example, in a case where the gNB learns the coordination/association relationship, the gNB performs related configuration or configuration update (e.g., the gNB determines the associated QoS flows/DRBs/PDCPs/LCHs based on UE reporting or CN indication).

Optionally, the UE may send indication information to the network, and the indication information may be MAC CE or UCI.

For example, the indication information is used to request an additional transmission resource.

For example, the indication information is used to indicate to the network that several associated DRBs/LCHs are not transmitted/are not transmitted successfully, and/or to indicate the latencies (e.g., the remaining latency) and/or all to-be-transmitted data volume size of several associated DRBs/LCHs. Optionally, an overall indication of the indication may be a per DRB indication. Optionally, the latency may be a minimum latency.

For example, the indication information is used to indicate to the network that there are associated DRBs/LCHs that are not transmitted/are not successfully transmitted, and/or to indicate the latencies (e.g., the remaining latencies) and/or to-be-transmitted data volume size of the associated DRBs/LCHs. Optionally, the indication may be a per DRB indication. Optionally, the latency may be a minimum latency.

For example, if there is an associated DRB1, the indication information is used to indicate to the network that data of the DRB1 is not transmitted/is not been transmitted successfully, and/or to indicate the latency (e.g., the remaining latency) and/or to-be-transmitted data volume of the DRB1. Optionally, the indication may be a per DRB indication. Optionally, the latency may be a minimum latency.

For example, the UE indicates the information by using a new MAC CE or UTO-UCI.

For example, for multiple CG occasions, even if this DRB/LCH has no data to be transmitted, if the associated DRBs/LCHs have data to be transmitted that has not been transmitted, these CG occasions are used to transmit the data to be transmitted. For example, for UTO-UCI, if the associated DRBs/LCHs have data to transmit, an additional UL grant is requested from the network.

Optionally, if there are associated DRBs/LCHs and the available grant has remaining resources, padding may not be added, and instead, data packets of the associated DRBs/LCHs may be transmitted.

Optionally, during the prioritization process, an association relationship is considered. That is to say, if the transmission latencies of the associated DRBs/LCHs meet a threshold, the grant corresponding to the data is preferentially transmitted, or the HARQ process corresponding to the data is preferentially selected, or other non-associated DRBs/HARQs are considered low priority, or other associated DRBs/HARQs that do not meet a condition are considered to low priority.

In some embodiments, the UE and/or the network learns the coordinated/synchronous requirement before the network configures the information.

Optionally, the coordinated/synchronous requirement is informed to the base station by the CN, such as the SMF/UPF/AMF/AF informing to the base station, or the coordinated/synchronous requirement is informed to the base station by the UE.

Optionally, the coordinated/synchronous requirement is based on UE reporting, QoS flow reporting, or PDU session reporting.

Optionally, the coordinated/synchronous requirement is informed to the UE by the CN, such as the SMF/UPF/AMF/AF informing to the UE. Alternatively, the coordinated/synchronous requirement is informed to the UE by the base station, or is informed to the UE AS by the high-layer of the UE (such as the NAS).

Optionally, in a case where the coordinated/synchronous requirement changes, or in a case where the coordinated/synchronous requirement is learned, or in a case where the coordinated/synchronous requirement is periodic, the base station is notified of the coordinated/synchronous requirement.

### Embodiment 3

Embodiment 3 is a packet-based duplication transmission method provided in the embodiments of the present disclosure, so as to support synchronous or collaborative transmission of associated data.

In some embodiments, a packet-based PDCP data duplication transmission configuration is introduced.

Optionally, the PSI level for which the duplication transmission may be used is configured in the RRC configuration. The configuration is for the UE or the DRB. That is to say, duplication transmission is performed on data packets with a level greater than or equal to the level.

Optionally, initial level information of the PSI for which the duplication transmission may be used is configured in the RRC configuration.

In some embodiments, a packet-based PDCP duplication transmission MAC CE is introduced.

Optionally, the MAC CE is an MAC CE for all DRBs, or per DRB MAC CE.

Optionally, the MAC CE corresponds to a new LCID.

Optionally, the MAC CE is Per-PDU-set PDCP duplication (de)activation mac-ce, or Per-PDU PDCP duplication (de)activation mac-ce.

Optionally, the MAC CE may be used independently to perform duplication of DRB data packets.

For example, the UE determines which DBR performs duplication transmission for which PSI level, and which LCH to use, according to the indication of the MAC CE.

Optionally, the MAC CE may be used together with a legacy duplication MAC CE.

For example, in a case where the UE receives the legacy duplication MAC CE and a new MAC CE, the UE uses duplication of the data packet (e.g., the PSI level). Otherwise, the UE uses duplication of the DRB level.

For example, in a case where the UE receives the legacy duplication MAC CE and the new MAC CE, the UE uses different duplication for different PSIs. For example, the UE uses LCHs of all duplication for a high PSI level, and the UE uses the LCHs of duplication indicated by the (MAC CE) partially for a low PSI level. For another example, the UE uses LCHs of all duplication for a high PSI level, and the UE does not use duplication for a low PSI level. For another example, the UE uses the LCHs of duplication indicated by the (MAC CE) partially for a high PSI level, and the UE does not use duplication for a low PSI level.

Optionally, the MAC CE includes at least one of the following information: a DRB identification, an LCH identification (which LCH identifier is used for a specific PSI may be identified), and a PSI level.

It should be noted that the legacy duplication MAC CE may also refer to a duplication MAC CE supported by the R17 and earlier versions (the NR or the LTE). RAN2#122 agreed to introduce a new 8-bit BS table for XR services. Then, since there is an LCH/LCG that may be configured to use the legacy BS table (8 bit and/or 5 bit) and the new 8-bit BS table, how the UE reports the BS and how to select the BS table needs to be considered. At least one of the following methods may be considered.

Optionally, if an LCG is eligible to use both the legacy and new BS tables, the UE may choose the new BS table for encoding if the data volume the UE buffered is greater than the minimum value of the new BS table (*If an LCG is eligible to use both the legacy and new BS tables, the UE chooses the new BS table for encoding if the data volume the UE buffered is larger than the minimum value of the new BS table.*)*.*

Optionally, if an LCG is eligible to use both the legacy and new BS tables, the UE may choose the new BS table for encoding if the data volume the UE buffered is not greater or less than the minimum value of the new BS table (*If an LCG is eligible to use both the legacy and new BS tables, the UE chooses the new BS table for encoding if the data volume the UE buffered is not larger or smaller than the minimum value of the new BS table.*)*.*

Optionally, if an LCG is eligible to use both the legacy and new BS tables, the UE may choose the new BS table for encoding if the data volume the UE buffered is matched with the new BS table or is within the range of the new BS table.

Optionally, if an LCG is eligible to use both the legacy and new BS tables, the UE may choose the legacy BS table for encoding if the data volume the UE buffered is matched with the legacy BS table, or is less than or equal to the maximum value of the legacy BS table, or is within the range of the legacy BS table.

Optionally, if an LCG is eligible to use both the legacy and new BS tables, the UE chooses the BS table for encoding. The used BS table to be used is indicated by the gNB (*If an LCG is eligible to use both the legacy and new BS tables, the UE chooses the BS table for encoding. This BS table to be used is indicated by the gNB.*)*.*

Optionally, the new BS table is an 8-bit BS table.

Optionally, the legacy BS table is an 8-bit or 5-bit table.

Optionally, if an LCG is eligible to use the legacy BS table, the UE chooses the legacy BS table (*If an LCG is eligible to use the legacy BS tables, the UE chooses the legacy BS table*)*.*

Optionally, a new LCID is introduced to indicate whether it is a new MAC CE.

Optionally, the selected BS table is indicated in the new MAC CE. The BS table selected by the indication may be for the UE, the MAC CE, the LCH, the LCG, the PDU set, or the to-be-transmitted data volume information that meets a specific condition. The specific condition may be at least one of the following: a specific LCH, a specific LCG, a specific service, a specific transmission latency, and a specific remaining latency.

Optionally, a new MAC CE associated with a new extended LCID (eLCID) is introduced to contain the BS information of the XR service as well as a new field indicating the selected BS table (*A new MAC CE associated with a new eLCID is introduced to contain the BS information of the XR service as well as a new field indicating the selected BS table.*)*.*

Optionally, a new MAC CE only includes BS information of the XR service (which may further include other information, such as the latency or the remaining latency information). Alternatively, a new MAC CE only includes BS information of a specific LCH/LCG (which may further include other information, such as the latency or the remaining latency information), and the specific LCH/LCG is an LCH/LCG configured to be usable or an LCH/LCG that may use the legacy and new BS tables.

Optionally, the new MAC CE includes information of one or more LCGs, or includes information of one or more LCHs, or includes information of one or more LCHs of an LCG.

Optionally, the BS information is to-be-transmitted data volume information of an LCG, or to-be-transmitted data volume information of an LCH, or to-be-transmitted data volume information of a PDU set, or to-be-transmitted data volume information under a specific condition. The specific condition may be at least one of the following: a specific LCH, a specific LCG, a specific service, a specific transmission latency, or a specific remaining latency.

Optionally, the new MAC CE only includes an 8-bit BS table and does not support a 5-bit BS table.

Optionally, the new MAC CE includes an 8-bit BS table or a 5-bit BS table.

Optionally, the new MAC CE includes an 8-bit BS table and a 5-bit BS table.

Optionally, the new MAC CE is for a regular buffer status report (BSR)/periodic BSR.

Optionally, the new MAC CE is for padding BSR.

For example, as mentioned above, the new BS table has a different BS range from the legacy BS table. When the UE reports the data volume of the XR service, the UE needs to decide which BS table to select. Generally, the determination of the BS table depends on the data volume the UE buffered and the BS range the BS table covered. In an implementation, for the LCG configured to use the new and legacy BS tables, the UE selects the new BS table for encoding if the data volume the UE buffered is greater than the minimum value of the new BS table. Otherwise, the UE selects the legacy BS table. Therefore, the UE needs to indicate the gNB with the information that which BS table is selected. A new MAC CE associated with a new eLCID (1-8 bytes) should be introduced to contain the BS information and a new field indicating the selected BS table (*As assumed, the new BS table has a different BS range from the legacy BS tables. When the UE reports the data volume of the XR service, the UE needs to decide which BS table to be selected. Normally, the BS table determination depends on the data volume the UE buffered and the BS range the BS table covered. In one implementation, for the LCG configured to use the new and legacy BS table, the UE selects the new BS table for encoding if the data volume the UE buffered is larger than the minimum value of the new BS table. Otherwise, the UE selects the legacy BS table. Accordingly, the UE needs to indicate the gNB with the information that which BS table is selected. A new MAC CE associated with a new eLCID(one-octet) should be introduced to contain the BS information as well as a new field indicating the selected BS table.*)*.*

Optionally, the legacy BSR MAC CE only includes BS information of non-XR services, or a new MAC CE only includes BS information of non-specific LCH/LCG. The specific LCH/LCG is an LCH/LCG configured to be usable or a configurable, or configured to use the legacy and new BS tables.

Optionally, the legacy BSR MAC CE includes BS information of the LCH/LCG that meets a BSR triggering condition, or includes BS information of the LCH/LCG having to-be-transmitted data (there may be one or more LCHs/LCGs having to-be-transmitted data). Optionally, the LCH/LCG may include BS information of non-XR services, or BS information of non-specific LCH/LCG, and the specific LCH/LCG is an LCH/LCG configured to be usable or that may use the legacy and new BS tables. Optionally, the LCH/LCG may include BS information of the XR services, or BS information of a specific LCH/LCG, and the specific LCH/LCG is an LCH/LCG configured to be usable or configurable, or configured to use the legacy and new BS tables.

Optionally, in a case of legacy BSR MAC CE reporting, the legacy BS table is used for no matter which LCH/LCG, or which service (e.g., whether it is the XR).

Optionally, in a case of legacy BSR MAC CE reporting, the legacy BS table is used for the non-XR services or for the LCH/LCG that is not configured to be able to use the legacy and new BS tables.

Optionally, in a case of legacy BSR MAC CE reporting, the legacy BS table and/or the new BS table are used for the XR services or for the LCH/LCG configured to be able to use the legacy and new BS tables.

Optionally, if an LCG is eligible to use both the legacy and new BS tables, the UE chooses the new BS table for encoding if the data volume the UE buffered is greater than the minimum value of the new BS table (*If an LCG is eligible to use both the legacy and new BS tables, the UE chooses the new BS table for encoding if the data volume the UE buffered is larger than the minimum value of the new BS table.*)*.*

Optionally, if an LCG is eligible to use both the legacy and new BS tables, the UE may choose the new BS table for encoding if the data volume the UE buffered is not greater or less than the minimum value of the new BS table (*If an LCG is eligible to use both the legacy and new BS tables, the UE chooses the new BS table for encoding if the data volume the UE buffered is not larger or smaller than the minimum value of the new BS table.*)*.*

Optionally, if an LCG is eligible to use both the legacy and new BS tables, the UE may choose the new BS table for encoding if the data volume the UE buffered is matched with the new BS table or is within the range of the new BS table.

Optionally, if an LCG is eligible to use both the legacy and new BS tables, the UE may choose the legacy BS table for encoding if the data volume the UE buffered is matched with the legacy BS table, or is less than or equal to the maximum value of the legacy BS table, or is within the range of the legacy BS table.

Optionally, if an LCG is eligible to use both the legacy and new BS tables, the UE chooses the BS table for encoding. The BS table to be used is indicated by the gNB (*If an LCG is eligible to use both the legacy and new BS tables, the UE chooses the BS table for encoding. This BS table to be used is indicated by the gNB.*)*.*

Optionally, the BS table is an 8-bit BS table

Optionally, the BS table is an 8-bit or 5-bit BS table

Optionally, the BS table may be a new table or a legacy table. It should be noted that "/" represents the relationship of "and/or".

Optionally, the following is included for the regular and periodic BSR.

For the periodic BSR, the MAC entity shall (*For Regular and Periodic BSR, the MAC entity shall*):
1> if more than one LCGs have data available for transmission when the MAC PDU containing the BSR is to be built (*if more than one LCG has data available for transmission when the MAC PDU containing the BSR is to be built*):
   2> report long BSR for all LCGs which have data available for transmission (*report Long BSR for all LCGs which have data available for transmission.*)*.*
1> else (*else*):
   2> report enhanced short BSR (*report enhanced Short BSR*)*.*

Optionally, the BS table occupies 8 bits in the enhanced short BSR. Optionally, the identification of the LCH/LCG corresponding to the BS is carried in the enhanced short BSR.

Alternatively,
For the periodic BSR, the MAC entity shall (*For Regular and Periodic BSR, the MAC entity shall*):
1> if more than one LCGs have data available for transmission when the MAC PDU containing the BSR is to be built (*if more than one LCG has data available for transmission when the MAC PDU containing the BSR is to be built*):
   2> report long BSR for all LCGs which have data available for transmission (*report Long BSR for all LCGs which have data available for transmission.*)*.*
1> else (*else*):
   2> if the LCG that has data available for transmission (*the LCG has data available for transmission*) is an LCG of a XR or an LCG configured to be able to use the new and legacy BS tables, report the enhanced short BSR; otherwise, report the short BSR.

Optionally, the BS table occupies 8 bits in the enhanced short BSR. Optionally, the identification of the LCH/LCG corresponding to the BS is carried in the enhanced short BSR.

Optionally, the following is included for the regular and periodic BSR.

For padding BSR, the MAC entity shall (*For Padding BSR, the MAC entity shall*):
1> if the number of padding bits is equal to or greater than a size of the short BSR plus its subheader but less than a size of the long BSR plus its subheader (*if the number of padding bits is equal to or larger than the size of the Short BSR plus its subheader but smaller than the size of the Long BSR plus its subheader):*
   2> if more than one LCGs have data available for transmission when the BSR is to be built (*if more than one LCG has data available for transmission when the BSR is to be built*):
      3> if the number of padding bits is equal to the size of the short BSR plus its subheader (*if the number of padding bits is equal to the size of the Short BSR plus its subheader*):
         4> if the LCG that has data available for transmission (*the LCG has data available for transmission*) is an LCG of the XR or an LCG configured to be able to use the new and legacy BS tables, report enhanced short truncated BSR of the LCG with the highest priority logical channel with data available for transmission (*report enhanced Short Truncated BSR of the LCG with the highest priority logical channel with data available for transmission*); otherwise, report the short truncated BSR.
      3> else:
         4> report the long truncated BSR of the LCG(s) with the logical channels having data available for transmission following a decreasing order of the highest priority logical channel (with or without data available for transmission) in each of these LCG(s), and in case of equal priority, in increasing order of LCGID *(report Long Truncated BSR of the LCG(s) with the logical channels having data available for transmission following a decreasing order of the highest priority logical channel (with or without data available for transmission) in each of these LCG(s), and in case of equal priority, in increasing order of LCGID.*)*.*
   2> else:
      3> if the LCG that has data available for transmission is an LCG of the XR or an LCG configured to be able to use the new and legacy BS tables, report the enhanced short BSR of the LCG with the highest priority logical channel with data available for transmission (*report enhanced Short BSR of the LCG with the highest priority logical channel with data available for transmission*); otherwise, report the short BSR.
1> else if the number of padding bits is equal to or greater than a size of the long BSR plus its subheader (*else if the number of padding bits is equal to or larger than the size of the Long BSR plus its subheader*):
   2> report the long BSR for all LCGs which have data available for transmission (*report Long BSR for all LCGs which have data available for transmission.*)*.*

Optionally, the BS table occupies 8 bits in the enhanced short truncated BSR and/or the enhanced short BSR. Optionally, the identification of the LCH/LCG corresponding to the BS is carried in the enhanced short truncated BSR and/or the enhanced short BSR.

Alternatively,
For padding BSR, the MAC entity shall (*For Padding BSR, the MAC entity shall*):
1> if the number of padding bits is equal to or greater than the size of the short BSR plus its subheader but less than the size of the long BSR plus its subheader (*if the number of padding bits is equal to or larger than the size of the Short BSR plus its subheader but smaller than the size of the Long BSR plus its subheader*):
   2> if more than one LCGs have data available for transmission when the BSR is to be built (*if more than one LCG has data available for transmission when the BSR is to be built*):
      3> if the number of padding bits is equal to the size of the short BSR plus its subheader (*if the number of padding bits is equal to the size of the Short BSR plus its subheader*):
         4> report the enhanced short truncated BSR of the LCG with the highest priority logical channel with data available for transmission (*Short Truncated BSR report enhanced Short Truncated BSR of the LCG with the highest priority logical channel with data available for transmission.*)*.*
      3> else:
         4> report the long truncated BSR of the LCG(s) with the logical channels having data available for transmission following a decreasing order of the highest priority logical channel (with or without data available for transmission) in each of these LCG(s), and in case of equal priority, in increasing order of LCGID *(report Long Truncated BSR of the LCG(s) with the logical channels having data available for transmission following a decreasing order of the highest priority logical channel (with or without data available for transmission) in each of these LCG(s), and in case of equal priority, in increasing order of LCGID.* )*.*
   2> else:
      3> report the enhanced short BSR (*report enhanced Short BSR.*)*.*
1> else if the number of padding bits is equal to or greater than the size of the long BSR plus its subheader (*else if the number of padding bits is equal to or larger than the size of the Long BSR plus its subheader*):
   2> report the long BSR for all LCGs which have data available for transmission (*report Long BSR for all LCGs which have data available for transmission.*)*.*

Optionally, the BS table occupies 8 bits in the enhanced short truncated BSR and/or the enhanced short BSR. Optionally, the identification of the LCH/LCG corresponding to the BS is carried in the enhanced short truncated BSR and/or the enhanced short BSR.

It should be noted that the legacy BS table (or existing BS table) refers to the BS table supported by R17 and earlier versions (NR or LTE).

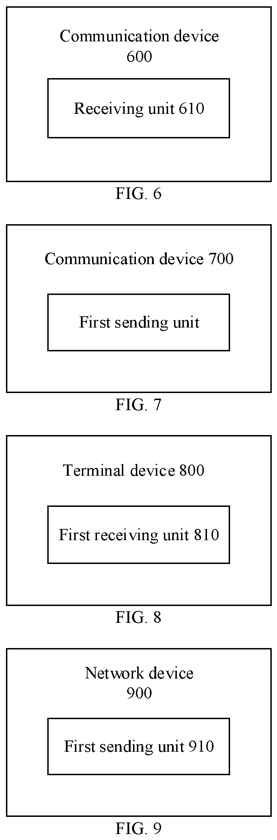

FIG. 6 is a schematic structural diagram of a communication device provided in the embodiments of the present disclosure. The communication device shown in FIG. 6 may be the first device mentioned above, and the device 600 may include a receiving unit 610.

The receiving unit 610 is configured to receive first information sent from a second device, where the first information is used to enable or activate a first behavior, or the first information is used to configure a parameter of first data, or the first information is used to determine a transmission resource of the first data, where the first data is data with an association relationship, and the first behavior is related to the first data.

In some embodiments, the first information includes first configuration information, where the first configuration information is used to configure a parameter of a data radio bearer (DRB)/logical channel (LCH), or the first configuration information is used to configure a parameter of one or multiple terminal devices.

In some embodiments, the first data has a mapping relationship with the DRB/LCH, and/or the first data has a mapping relationship with the one or multiple terminal devices.

In some embodiments, the first configuration information is used to indicate that the DRB/LCH has a synchronous or collaborative transmission requirement, or the first configuration information is used to identify DRBs/LCHs having an associated or synchronous or collaborative transmission requirement, or the first configuration information is used to identify multiple terminal devices having an associated, synchronous or collaborative transmission requirement.

In some embodiments, the first configuration information is used to indicate an association relationship among DRBs/LCHs with a synchronous or collaborative transmission requirement, or the first configuration information is used to indicate an association relationship among terminal devices with a synchronous or collaborative transmission requirement.

In some embodiments, the first information includes a transmission parameter, and the transmission parameter is related to a transmission process of the first data.

In some embodiments, the first information includes a first transmission parameter and a second transmission parameter, and the first transmission parameter is different from the second transmission parameter.

In some embodiments, the first transmission parameter uses a case where synchronous transmission is not activated/not indicated, or a case where a first condition is met; and/or the second transmission parameter uses a case where synchronous transmission is activated/indicated, or a case where a second condition is met.

In some embodiments, the second condition includes one or more conditions as follows: at least one of at least one terminal device of multiple associated terminal devices, a terminal device enabling the first behavior, or a terminal device identified as synchronous or associated is configured or exists; at least one of at least one LCH/logical channel group (LCG) of multiple associated LCHs/LCGs, an LCH/LCG enabling the first behavior, or an LCH/LCG identified as synchronous or associated is configured or exists; the first transmission parameter is used for a first duration; a transmission latency of one of associated DRBs/LCHs, at least one DRB/LCH of multiple associated DRBs/LCHs, a DRB/LCH of the terminal device enabling the first behavior, and a DRB/LCH identified as synchronous or associated meets a first threshold; a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets a second threshold; a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a third threshold; a transmission latency of one of associated terminal devices, at least one terminal device of multiple associated terminal devices, a terminal device enabling the first behavior, and a terminal device identified as synchronous or associated meets a fourth threshold; a total data volume of one of associated terminal devices, at least one terminal device of multiple associated terminal devices, a terminal device enabling the first behavior, and a terminal device identified as synchronous or associated meets a fifth threshold; a remaining to-be-transmitted data volume of one of associated terminal devices, at least one terminal device of multiple associated terminal devices, a terminal device enabling the first behavior, and a terminal device identified as synchronous or associated meets a sixth threshold; a network device indicates to enable or activate the first behavior; or the network device indicates to use the second transmission parameter.

In some embodiments, the first condition includes one or more conditions as follows: at least one of at least one terminal device of multiple associated terminal devices, a terminal device enabling the first behavior, and a terminal device identified as synchronous or associated is not configured or does not exist; at least one of at least one LCH/LCG of multiple associated LCHs/LCGs, an LCH/LCG enabling the first behavior, and an LCH/LCG identified as synchronous or associated is not configured or does not exist; the second transmission parameter is used for a second duration; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a seventh threshold; a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets an eighth threshold; a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a ninth threshold; a transmission latency of one of associated terminal devices, at least one terminal device of multiple associated terminal devices, a terminal device enabling the first behavior, and a terminal device identified as synchronous or associated meets a tenth threshold; a total data volume of one of associated terminal devices, at least one terminal device of multiple associated terminal devices, a terminal device enabling the first behavior, and a terminal device identified as synchronous or associated meets an eleventh threshold; a remaining to-be-transmitted data volume of one of associated terminal devices, at least one terminal device of multiple associated terminal devices, a terminal device enabling the first behavior, and a terminal device identified as synchronous or associated meets a twelfth threshold; a network device indicates not to enable or to deactivate the first behavior; or the network device indicates to use the first transmission parameter.

In some embodiments, the first transmission parameter and/or the second transmission parameter is for a DRB/LCH or a terminal device; or the first transmission parameter and/or the second transmission parameter is for multiple DRBs/LCHs; or the first transmission parameter and/or the second transmission parameter is for multiple terminal devices.

In some embodiments, the first transmission parameter and/or the second transmission parameter includes one or more of: a logical channel priority; a priority bit rate; an allowed uplink grant or dynamic grant; an allowed-configured grant list; duplication transmission; repetition transmission; duplication transmission of LCH; retransmission; a tolerated transmission latency; or a modulation and coding scheme.

In some embodiments, where the uplink grant or the dynamic grant allowed by the first transmission parameter and/or the second transmission parameter is indicated by an identification of the uplink grant or the dynamic grant, or an identification of a DRB/LCH corresponding to the uplink grant or the dynamic grant, or matching information between the uplink grant or dynamic grant and a DRB/LCH, or a correspondence between the uplink grant or dynamic grant and a DRB/LCH.

In some embodiments, the first transmission parameter and the second transmission parameter meet one or more conditions as follows: a logical channel priority in the second transmission parameter is higher than a logical channel priority in the first transmission parameter; a priority bit rate in the second transmission parameter is greater than a priority bit rate in the first transmission parameter; a logical channel priority in the second transmission parameter is lower than a logical channel priority in the first transmission parameter, and a tolerated transmission latency in the second transmission parameter is less than a tolerated transmission latency in the first transmission parameter, allowed-configured grant list in the second transmission parameter are more than allowed-configured grant list in the first transmission parameter; the second transmission parameter includes an activation indication of a packet data convergence protocol (PDCP); a number of duplication transmissions in the second transmission parameter is greater than a number of duplication transmissions in the first transmission parameter; a number of repetition transmissions in the second transmission parameter is greater than a number of repetition transmissions in the first transmission parameter; or an order of a modulation and coding scheme in the second transmission parameter is less than an order of a modulation and coding scheme in the first transmission parameter.

In some embodiments, in a case where the first device is a terminal device and the second device is a network device, the first device further includes a first sending unit configured to send second information to the second device, where the second information is used to request a transmission resource, or the second information is used to request transmission of the first data, or the second information is used to indicate a transmission requirement of the first data.

In some embodiments, sending, by the first device, the second information to the second device, includes: sending, by the first device, the second information to the second device in a case where a third condition is met, where the third condition includes one or more conditions as follows: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; a first transmission parameter is used for a first duration; a second transmission parameter is configured or used; data of one of associated DRBs/LCHs, at least one DRB/LCH of multiple associated DRBs/LCHs, a DRB/LCH of a terminal device enabling the first behavior, and a DRB/LCH identified as synchronous or associated arrives; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a thirteenth threshold; a data volume of one of associated DRBs/LCHs, at least one DRB/LCH of multiple associated DRBs/LCHs, a DRB/LCH of a terminal device enabling the first behavior, and a DRB/LCH identified as synchronous or associated meets a fourteenth threshold; data of one of associated terminal devices, at least one terminal device of multiple associated terminal devices, a terminal device enabling the first behavior, and a terminal device identified as synchronous or associated arrives; to-be-transmitted data or to-be-transmitted data information from the associated terminal devices is received; the first device receives third information, where the third information is used for a terminal device associated with the first device to request the first device to send the second information; a transmission latency of one of associated terminal devices, at least one terminal device of multiple associated terminal devices, a terminal device enabling the first behavior, and a terminal device identified as synchronous or associated meets a fifteenth threshold; a data volume of one of associated terminal devices, at least one terminal device of multiple associated terminal devices, a terminal device enabling the first behavior, and a terminal device identified as synchronous or associated meets a sixteenth threshold; or the network device indicates to enabled or activate the first behavior.

In some embodiments, the first device further includes a second sending unit configured to send fourth information to the second device, where the fourth information is used to indicate a buffer status or a transmission status of the first data.

In some embodiments, associated logical channels include a first LCH and a second LCH, the fourth information is used to indicate one or more of: an association relationship between the first LCH and the second LCH; an identification of the first LCH or a corresponding DRB; an identification of the second LCH or a corresponding DRB; a transmission latency and/or a data volume size of the first LCH; or a transmission latency and/or a data volume size of the second LCH.

In some embodiments, associated logical channels correspond to a first terminal device and a second terminal device, the fourth information is used to indicate one or more of: an association relationship between the first terminal device and the second terminal device; an identification of the first terminal device; an identification of the second terminal device; identifications of DRBs/LCHs with an association relationship and of the first terminal device; identifications of DRBs/LCHs with an association relationship and of the second terminal device; a transmission latency and/or a data volume size of the first terminal device; a transmission latency and/or a data volume size of the second terminal device; transmission latencies and/or data volume sizes of logical channels with an association relationship and of the first terminal device; or transmission latencies and/or data volume sizes of logical channels with an association relationship and of the second terminal device.

In some embodiments, the first device further includes a discarding unit, configured to discard some or all of the first data, or discard some or all of the first data based on the first information, or discard some or all of the first data in a case where the first behavior is enabled or activated.

In some embodiments, the first device further includes a third sending unit configured to send fifth information to the second device, where the fifth information is used for one or more of: indicating an identification of a data packet that is lost or delayed; indicating a packet that is not required to be transmitted or is considered to have been received; indicating that some or all of the first data are not be able to be transmitted; requesting that the second device discards some or all of the first data; indicating an identification of data that is not be able to be transmitted in the first data; or indicating an identification of data to be discarded in the first data.

In some embodiments, the first information includes second configuration information, and the second configuration information is used to configure a DRB/PDCP, or to configure one or multiple terminal devices.

In some embodiments, the DRB/PDCP has a mapping relationship with the first data, and/or the multiple terminal devices have a mapping relationship with the first data.

In some embodiments, the second configuration information is used to indicate that DRBs/PDCPs have a synchronous or collaborative transmission requirement; or the second configuration information is used to identify DRBs/PDCPs with an associated or synchronous or collaborative transmission requirement; or the second configuration information is used to identify the multiple terminal devices with an associated or synchronous or collaborative transmission requirement; or the second configuration information is used to enable or activate discarding of data packets having an association relationship; or the second configuration information is used to enable or activate sending/triggering behavior of the first information.

In some embodiments, the second configuration information is used to indicate an association relationship among DRBs/PDCPs with a synchronous or collaborative transmission requirement.

In some embodiments, the first device further includes a fourth sending unit. The fourth sending unit is configured to send first indication information to the second device in a case where a fourth condition is met, where the fourth condition includes one or more conditions as follows: an associated data packet is discarded; a transmission failure indication is received from the second device; N transmission failure indications are received from the second device; the transmission failure indication is received from the second device within a third duration; a successfully transmitted packet data unit (PDU)/ packet data unit set (PDU set) meets a first ratio; a number of the successfully transmitted PDUs/PDU sets meets a seventeenth threshold; a PDU/PDU set at a specific position is not transmitted or is not successfully transmitted; or a PDU/PDU set of a specific type is not transmitted or is not successfully transmitted.

In some embodiments, associated DRBs/PDCPs include a first data packet and a second data packet, the first indication information is used for one or more of: indicating identifications of associated terminal devices; indicating identifications of associated DRBs/PDCPs; indicating an identification of a data packet that is lost or delayed; indicating an identification of the first data packet; indicating an identification of a data packet associated with the first data packet; indicating an identification of a DRB/PDCP/LCH or a DRB/PDCP/LCH corresponding to the first data packet; indicating an identification of a DRB/PDCP/LCH or a DRB/PDCP/LCH of a data packet associated with the first data packet; indicating an identification of a terminal device associated with the first data packet; indicating an identification of a terminal device corresponding to a data packet associated with the first data packet; indicating that the first data packet is not required; indicating that the first data packet and the second data packet are not required; indicating discarding information of the first data packet; indicating that a network device discards the first data packet; or indicating that a network device discards the first data packet and the second data packet.

In some embodiments, in case where a PDU set or a PDU to which the first data packet belongs is discarded, the first device discards the second data packet.

In some embodiments, the transmission failure indication is for a data packet, or all data packets in a PDCP/radio link control (RLC)/buffer of a terminal device, or a data packet with a specific identification in the PDCP/RLC/buffer of the terminal device.

In some embodiments, the first indication information is discarding indication information for a specific data packet, a terminal device, or a quality of service (QoS) flow/DRB/PDCP/RLC, or a data packet buffered by the terminal device.

In some embodiments, the first device further includes a first execution unit, configured to activate or deactivate packet-based duplication transmission, or packet-based duplication transmission according to the first information.

In some embodiments, the first device activates or deactivates duplication of associated data packets, or duplication of the associated data packets according to the first information.

In some embodiments, the first device activates duplication data in a case where one or more of the following conditions are met: a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets an eighteenth threshold; a transmission latency of one of associated terminal devices, at least one terminal device of multiple associated terminal devices, a terminal device enabling the first behavior, and a terminal device identified as synchronous or associated meets a nineteenth threshold; or a network device indicates to enable or activate the first behavior.

In some embodiments, the first device further includes a second execution unit, configured to deactivate duplication transmission of associated data packets after a fourth duration of activating duplication transmission of the associated data packets for a fourth duration.

In some embodiments, duplication transmission is configured for one or more of: all data packets; a specific data packet; each PDU; or each PDU set.

In some embodiments, the first information further includes sixth information, the sixth information is used to indicate a first transmission resource of a terminal device, and the first transmission resource is used to transmit the first data.

In some embodiments, the sixth information includes an identification of the first transmission resource or an identification of a specific DRB/LCH/terminal device.

In some embodiments, the sixth information is carried in radio resource control (RRC) configuration and/or downlink control information (DCI) signaling.

In some embodiments, the first transmission resource is a configured grant resource or a dynamic grant resource.

In some embodiments, the first transmission resource includes one or more transmission resources.

In some embodiments, in case where the first transmission resource includes the multiple transmission resources, the multiple transmission resources are continuous or discontinuous.

In some embodiments, configuration information of associated DRBs/PDCPs/LCHs includes a synchronous or collaborative transmission requirement identification, or an association relationship of synchronous or collaborative transmission.

In some embodiments, a specific configured grant resource and/or a specific dynamic grant resource is used to transmit data of a specific DRB/LCH/terminal device, or to transmit data of associated DRBs/PDCPs/LCHs.

In some embodiments, in a case where the first device is a terminal device and the second device is a network device, the first device includes a fifth sending unit, configured to send second indication information to the second device, where the second indication information is used to request a second transmission resource, and the second transmission resource is used to transmit the first data.

In some embodiments, the second indication information is used to indicate one or more of: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; at least one of associated DRBs/LCHs, at least one DRB/LCH of multiple associated DRBs/LCHs, a DRB/LCH of a terminal device enabling the first behavior, and a DRB/LCH identified as synchronous or associated is not transmitted or is not transmitted successfully; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated; a to-be-transmitted data volume of one of the associated DRBs/LCHs, at least one DRB/LCH of multiple associated DRBs/LCHs, a DRB/LCH of a terminal device enabling the first behavior, and a DRB/LCH identified as synchronous or associated; an identification of a DRB/LCH that is not transmitted or is not successfully transmitted in associated DRBs/LCHs; or an identification of a DRB/LCH associated with the DRB/LCH that is not transmitted or is not successfully transmitted.

In some embodiments, the second indication information is carried in media access control signaling or uplink control information.

In some embodiments, a transmission resource of a first DRB/LCH/terminal device is used to transmit information or data of a second DRB/LCH/terminal device, where the first DRB/LCH is associated with the second DRB/LCH.

In some embodiments, the transmission resource of the first DRB/LCH/terminal device being used to transmit information or data of the second DRB/LCH/terminal device, includes: using one or more transmission occasions in the transmission resource of the first DRB/LCH/terminal device to transmit the information or data of the second DRB/LCH/terminal device in a case where the first DRB/LCH/terminal device has no data to be transmitted and the second DRB/LCH/terminal device has data to be transmitted; or using a remaining resource to transmit the information or data of the second DRB/LCH/terminal device in a case where the first DRB/LCH/terminal device has data to be transmitted, the second DRB/LCH/terminal device has data to be transmitted, and one or more transmission occasions in the transmission resource of the first DRB/LCH/terminal device include the remaining resource.

In some embodiments, in a case where the first DRB/LCH/terminal device has data to be transmitted, and the second DRB/LCH/terminal device has data to be transmitted, and the one or more transmission occasions in the transmission resource of the first DRB/LCH/terminal device include the remaining resource, padding is not added, and/or, the remaining resource is used to transmit the information or data of the second DRB/LCH/terminal device.

In some embodiments, a priority of the transmission resource or a priority of a grant is determined based on an association relationship of DRBs/LCHs/terminal devices.

In some embodiments, the priority of the transmission resource is determined based on one or more of: whether at least one of at least one terminal device of multiple associated terminal devices, a terminal device enabling the first behavior, or a terminal device identified as synchronous or associated is configured or exists; whether at least one of at least one LCH/LCG of multiple associated LCHs/LCGs, an LCH/LCG enabling the first behavior, or an LCH/LCG identified as synchronous or associated is configured or exists; whether a second transmission parameter is configured or used; whether the transmission resource carries the first data; whether the priority of the transmission resource is higher than a twentieth threshold; whether the transmission resource is a specific transmission resource; whether a transmission latency of the first data is less than or equal to a twenty-first threshold; whether a data volume of the first data is greater than or equal to a twenty-second threshold; whether data that is able to be carried on the transmission resource has an association relationship; whether a transmission latency of data that is able to be carried on the transmission resource meets a twenty-third threshold; or whether a to-be-transmitted data volume of data that is able to be carried on the transmission resource meets a twenty-fourth threshold.

In some embodiments, a priority of a hybrid automatic repeat-request (HARQ) process is determined based on an association relationship of DRBs/LCHs/terminal devices, or associated HARQ processes are transmitted by using the transmission resource based on the association relationship of the DRBs/LCHs/terminal devices.

In some embodiments, the priority of the HARQ process is determined based on one or more of: whether at least one of at least one terminal device of multiple associated terminal devices, a terminal device enabling the first behavior, or a terminal device identified as synchronous or associated is configured or exists; whether a second transmission parameter is configured or used; whether the HARQ process corresponds to at least one of at least one terminal device of multiple associated terminal devices, a terminal device enabling the first behavior, and a terminal device identified as synchronous or associated; whether the HARQ process corresponds to at least one of at least one LCH/LCG of multiple associated LCHs/LCGs, an LCH/LCG enabling the first behavior, and an LCH/LCG identified as synchronous or associated; whether the HARQ process corresponds to an LCH/LCG configured with or using the second transmission parameter; whether the HARQ process corresponds to a terminal device configured with or using the second transmission parameter; whether the transmission resource carries the first data; whether a priority of the transmission resource is higher than a twenty-fifth threshold; whether the transmission resource is a specific transmission resource; whether the HARQ process corresponds to the first data; whether a transmission latency of data corresponding to the HARQ process is less than or equal to a twenty-sixth threshold; whether a data volume corresponding to the HARQ process is greater than or equal to a twenty-seventh threshold; whether data that is able to be carried in the HARQ process has an association relationship; whether a transmission latency of data that is able to be carried in the HARQ process meets a twenty-eighth threshold; or whether a to-be-transmitted data volume of data that is able to be carried in the HARQ process meets a twenty-ninth threshold.

In some embodiments, the first device further includes: a buffer unit, configured to buffer the first data; and a sixth sending unit, configured to send the first data to the second device in a case where all of the first data arrive.

In some embodiments, the first device further includes a seventh sending unit, configured to send seventh information to the second device, where the seventh information is used to indicate an association relationship between terminal devices, quality of service flows, and DRBs/PDCPs/RLCs/PDUs, or to indicate requirements having the association relationship.

In some embodiments, where the seventh information is used to indicate one or more of: an associated transmission/a collaborative transmission/a synchronous or collaborative transmission requirement between the terminal devices; an associated transmission/a collaborative transmission/a synchronous or collaborative transmission requirement of the quality of service flows; an associated transmission/a collaborative transmission/a synchronous or collaborative transmission requirement between the DRBs/PDCPs/RLCs; or an associated transmission/a collaborative transmission/a synchronous or collaborative transmission requirement of PDU sessions.

In some embodiments, the first device sends the seventh information to the second device in a case where the seventh information changes, and/or the seventh information has not been reported, and/or the seventh information is obtained; or the first device periodically sends the seventh information to the second device.

In some embodiments, the first device further includes an eighth sending unit, configured to send eighth information to the second device, where the eighth information is used to indicate configuration information of associated DRBs/LCHs or update information of the configuration information of the associated DRBs/LCHs.

In some embodiments, the first device further includes a ninth sending unit configured to send ninth information to the second device, where the ninth information is related to a first terminal device and/or a second terminal device.

In some embodiments, the first terminal device and the second terminal device have a mapping relationship with associated DRBs/LCHs, the first device is a first network device corresponding to the first terminal device, and the second device is a second network device corresponding to the second terminal device.

In some embodiments, the ninth information includes one or more of: resource information allocated or scheduled by a first network device for the first terminal device; suggestion information for a second network device to allocate or schedule a resource for the second terminal device; RRC signaling configured by a first network device for the first terminal device; suggestion information for the second network device to configure RRC for the second terminal device; a mapping relationship between a QoS flow and a DRB/LCH/PDCP configured by a first network device for the first terminal device; suggestion information for a second network device to configure a mapping relationship between a QoS flow and a DRB/LCH/PDCP for the second terminal device; at least one of time information, time stamp information and association information of the first terminal device; or at least one of time information, time stamp information and association information of the second terminal device.

In some embodiments, the first device obtains the ninth information from a core network node, a network device, or a high-layer of a terminal device.

In some embodiments, the ninth information is information for associated DRBs/LCHs/PDCPs, associated terminal devices, or associated QoS flows, or associated PDU sessions.

FIG. 7 is a schematic structural diagram of another communication device provided in the embodiments of the present disclosure. The communication device shown in FIG. 7 may be the second device mentioned above, and the device 700 may include a first sending unit 710.

The first sending unit 710 is configured to send first information to a first device, where the first information is used to enable or activate a first behavior, or the first information is used to configure a parameter of first data, or the first information is used to determine a transmission resource of the first data, where the first data is data with an association relationship, and the first behavior is related to the first data.

In some embodiments, the first information includes first configuration information, where the first configuration information is used to configure a parameter of a DRB/LCH, or the first configuration information is used to configure a parameter of one or multiple terminal devices.

In some embodiments, the first data has a mapping relationship with the DRB/LCH, and/or the first data has a mapping relationship with the one or multiple terminal devices.

In some embodiments, the first configuration information is used to indicate that the DRB/LCH has a synchronous or collaborative transmission requirement, or the first configuration information is used to identify DRBs/LCHs having an associated or synchronous or collaborative transmission requirement, or the first configuration information is used to identify multiple terminal devices having an associated, synchronous or collaborative transmission requirement.

In some embodiments, the first configuration information is used to indicate an association relationship among DRBs/LCHs with a synchronous or collaborative transmission requirement, or the first configuration information is used to indicate an association relationship among terminal devices with a synchronous or collaborative transmission requirement.

In some embodiments, the first information includes a transmission parameter, and the transmission parameter is related to a transmission process of the first data.

In some embodiments, the first information includes a first transmission parameter and a second transmission parameter, and the first transmission parameter is different from the second transmission parameter.

In some embodiments, the first transmission parameter uses a case where synchronous transmission is not activated/not indicated, or a case where a first condition is met; and/or the second transmission parameter uses a case where synchronous transmission is activated/indicated, or a case where a second condition is met.

In some embodiments, the second condition includes one or more conditions as follows: at least one of at least one terminal device of multiple associated terminal devices, a terminal device enabling the first behavior, or a terminal device identified as synchronous or associated is configured or exists; at least one of at least one LCH/logical channel group (LCG) of multiple associated LCHs/LCGs, an LCH/LCG enabling the first behavior, or an LCH/LCG identified as synchronous or associated is configured or exists; the first transmission parameter is used for a first duration; a transmission latency of one of associated DRBs/LCHs, at least one DRB/LCH of multiple associated DRBs/LCHs, a DRB/LCH of the terminal device enabling the first behavior, and a DRB/LCH identified as synchronous or associated meets a first threshold; a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets a second threshold; a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a third threshold; a transmission latency of one of associated terminal devices, at least one terminal device of multiple associated terminal devices, a terminal device enabling the first behavior, and a terminal device identified as synchronous or associated meets a fourth threshold; a total data volume of one of associated terminal devices, at least one terminal device of multiple associated terminal devices, a terminal device enabling the first behavior, and a terminal device identified as synchronous or associated meets a fifth threshold; a remaining to-be-transmitted data volume of one of associated terminal devices, at least one terminal device of multiple associated terminal devices, a terminal device enabling the first behavior, and a terminal device identified as synchronous or associated meets a sixth threshold; a network device indicates to enable or activate the first behavior; or the network device indicates to use the second transmission parameter.

In some embodiments, the first condition includes one or more conditions as follows: at least one of at least one terminal device of multiple associated terminal devices, a terminal device enabling the first behavior, and a terminal device identified as synchronous or associated is not configured or does not exist; at least one of at least one LCH/LCG of multiple associated LCHs/LCGs, an LCH/LCG enabling the first behavior, and an LCH/LCG identified as synchronous or associated is not configured or does not exist; the second transmission parameter is used for a second duration; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a seventh threshold; a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets an eighth threshold; a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a ninth threshold; a transmission latency of one of associated terminal devices, at least one terminal device of multiple associated terminal devices, a terminal device enabling the first behavior, and a terminal device identified as synchronous or associated meets a tenth threshold; a total data volume of one of associated terminal devices, at least one terminal device of multiple associated terminal devices, a terminal device enabling the first behavior, and a terminal device identified as synchronous or associated meets an eleventh threshold; a remaining to-be-transmitted data volume of one of associated terminal devices, at least one terminal device of multiple associated terminal devices, a terminal device enabling the first behavior, and a terminal device identified as synchronous or associated meets a twelfth threshold; a network device indicates not to enable or to deactivate the first behavior; or the network device indicates to use the first transmission parameter.

In some embodiments, the second transmission parameter and/or the first transmission parameter is for a DRB/LCH or a terminal device; or the second transmission parameter and/or the first transmission parameter is for multiple DRBs/LCHs; or the second transmission parameter and/or the first transmission parameter is for multiple terminal devices.

In some embodiments, the first transmission parameter and/or the second transmission parameter includes one or more of: a logical channel priority; a priority bit rate; an allowed uplink grant or dynamic grant; an allowed-configured grant list; duplication transmission; repetition transmission; duplication transmission of LCH; retransmission; a tolerated transmission latency; or a modulation and coding scheme.

In some embodiments, the uplink grant or the dynamic grant allowed by the first transmission parameter and/or the second transmission parameter is indicated by an identification of the uplink grant or the dynamic grant, or an identification of a DRB/LCH corresponding to the uplink grant or the dynamic grant, or matching information between the uplink grant or dynamic grant and a DRB/LCH, or a correspondence between the uplink grant or dynamic grant and a DRB/LCH.

In some embodiments, the first transmission parameter and the second transmission parameter meet one or more conditions as follows: a logical channel priority in the second transmission parameter is higher than a logical channel priority in the first transmission parameter; a priority bit rate in the second transmission parameter is greater than a priority bit rate in the first transmission parameter; the a logical channel priority in the second transmission parameter is lower than the a logical channel priority in the first transmission parameter, and a tolerated transmission latency in the second transmission parameter is less than a tolerated transmission latency in the first transmission parameter, allowed-configured grant list in the second transmission parameter are more than allowed-configured grant list in the first transmission parameter; the second transmission parameter includes an activation indication of a PDCP; a number of duplication transmissions in the second transmission parameter is greater than a number of duplication transmissions in the first transmission parameter; a number of repetition transmissions in the second transmission parameter is greater than a number of repetition transmissions in the first transmission parameter; and an order of a modulation and coding scheme in the second transmission parameter is less than an order of a modulation and coding scheme in the first transmission parameter.

In some embodiments, in a case where the first device is a terminal device and the second device is a network device, the second device further includes a first receiving unit, configured to receive second information sent from the first device, where the second information is used to request a transmission resource, or to request transmission of the first data, or the second information is used to indicate a transmission requirement of the first data.

In some embodiments, the receiving, by the second device, the second information sent from the first device, includes: receiving, by the second device, the second information sent from the first device in a case where a third condition is met, where the third condition includes one or more conditions as follows: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; a first transmission parameter is used for a first duration; a second transmission parameter is configured or used; data of one of associated DRBs/LCHs, at least one DRB/LCH of multiple associated DRBs/LCHs, a DRB/LCH of a terminal device enabling the first behavior, and a DRB/LCH identified as synchronous or associated arrives; a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a thirteenth threshold; a data volume of one of associated DRBs/LCHs, at least one DRB/LCH of multiple associated DRBs/LCHs, a DRB/LCH of a terminal device enabling the first behavior, and a DRB/LCH identified as synchronous or associated meets a fourteenth threshold; data of one of associated terminal devices, at least one terminal device of multiple associated terminal devices, a terminal device enabling the first behavior, and a terminal device identified as synchronous or associated arrives; to-be-transmitted data or to-be-transmitted data information from the associated terminal devices is received; the first device receives third information, where the third information is used for a terminal device associated with the first device to request the first device to send the second information; a transmission latency of one of associated terminal devices, at least one terminal device of multiple associated terminal devices, a terminal device enabling the first behavior, and a terminal device identified as synchronous or associated meets a fifteenth threshold; a data volume of one of associated terminal devices, at least one of the plurality terminal device of associated terminal devices, a terminal device enabling the first behavior, and a terminal device identified as synchronous or associated meets a sixteenth threshold; or the network device indicates to enabled or activate the first behavior.

In some embodiments, the second device further includes a second receiving unit, configured to receive fourth information sent from the first device, where the fourth information is used to indicate a buffer status or a transmission status of the first data.

In some embodiments, associated logical channels include a first LCH and a second LCH, the fourth information is used to indicate one or more of: an association relationship between the first LCH and the second LCH; an identification of the first LCH or a corresponding DRB; an identification of the second LCH or a corresponding DRB; a transmission latency and/or a data volume size of the first LCH; or a transmission latency and/or a data volume size of the second LCH.

In some embodiments, associated logical channels correspond to a first terminal device and a second terminal device, the fourth information is used to indicate one or more of: an association relationship between the first terminal device and the second terminal device; an identification of the first terminal device; an identification of the second terminal device; identifications of DRBs/LCHs with an association relationship and of the first terminal device; identifications of DRBs/LCHs with an association relationship and of the second terminal device; a transmission latency and/or a data volume size of the first terminal device; a transmission latency and/or a data volume size of the second terminal device; transmission latencies and/or data volume sizes of logical channels with an association relationship and of the first terminal device; or transmission latencies and/or data volume sizes of the logical channels with an association relationship and of the second terminal device.

In some embodiments, the second device includes a third receiving unit, configured to receive fifth information sent from the first device, where the fifth information is used for one or more of: indicating an identification of a data packet that is lost or delayed; indicating a packet that is not required to be transmitted or is considered to have been received; indicating that some or all of the first data are not be able to be transmitted; requesting that the second device discards some or all of the first data; indicating an identification of data that is not be able to be transmitted in the first data; or indicating an identification of data to be discarded in the first data.

In some embodiments, the first information includes second configuration information, and the second configuration information is used to configure a DRB/PDCP, or to configure one or multiple terminal devices.

In some embodiments, the DRB/PDCP has a mapping relationship with the first data, and/or the multiple terminal devices have a mapping relationship with the first data.

In some embodiments, the second configuration information is used to indicate that DRBs/PDCPs have a synchronous or collaborative transmission requirement; or the second configuration information is used to identify DRBs/PDCPs with an associated or synchronous or collaborative transmission requirement; or the second configuration information is used to identify the multiple terminal devices with an associated or synchronous or collaborative transmission requirement; or the second configuration information is used to enable or activate discarding of data packets having an association relationship; or the second configuration information is used to enable or activate sending/triggering behavior of the first information.

In some embodiments, the second configuration information is used to indicate an association relationship among DRBs/PDCPs with a synchronous or collaborative transmission requirement.

In some embodiments, the second device includes a fourth receiving unit, configured to receive first indication information sent from the first device in a case where a fourth condition is met, where the fourth condition includes one or more conditions as follows: an associated data packet is discarded; a transmission failure indication is received from the second device; N transmission failure indications are received from the second device; the transmission failure indication is received from the second device within a third duration; a successfully transmitted packet data unit (PDU)/ packet data unit set (PDU set) meets a first ratio; a number of the successfully transmitted PDUs/PDU sets meets a seventeenth threshold; a PDU/PDU set at a specific position is not transmitted or is not successfully transmitted; or a PDU/PDU set of a specific type is not transmitted or is not successfully transmitted.

In some embodiments, associated DRBs/PDCPs include a first data packet and a second data packet, the first indication information is used for one or more of: indicating identifications of associated terminal devices; indicating identifications of associated DRBs/PDCPs; indicating an identification of a data packet that is lost or delayed; indicating an identification of the first data packet; indicating an identification of a data packet associated with the first data packet; indicating an identification of a DRB/PDCP/LCH or a DRB/PDCP/LCH corresponding to the first data packet; indicating an identification of a DRB/PDCP/LCH or DRB/PDCP/LCH of a data packet associated with the first data packet; indicating an identification of a terminal device associated with the first data packet; indicating an identification of a terminal device corresponding to a data packet associated with the first data packet; indicating that the first data packet is not required; indicating that the first data packet and the second data packet are not required; indicating discarding information of the first data packet; indicating that a network device discards the first data packet; or indicating that a network device discards the first data packet and the second data packet.

In some embodiments, the transmission failure indication is for a data packet, or all data packets in a PDCP/RLC/ buffer of a terminal device, or a data packet with a specific identification in the PDCP/RLC/buffer of the terminal device.

In some embodiments, the first indication information is discarding indication information for a specific data packet, a terminal device, or a QoS flow/DRB/PDCP/RLC, or a data packet buffered by the terminal device.

In some embodiments, the first information further includes sixth information, the sixth information is used to indicate a first transmission resource of a terminal device, and the first transmission resource is used to transmit the first data.

In some embodiments, the sixth information includes an identification of the first transmission resource or an identification of a specific DRB/LCH/terminal device.

In some embodiments, the sixth information is carried in radio resource control (RRC) configuration and/or DCI signaling.

In some embodiments, the first transmission resource is a configured grant resource or a dynamic grant resource.

In some embodiments, the first transmission resource includes one or more transmission resources.

In some embodiments, in case where the first transmission resource includes the multiple transmission resources, the multiple transmission resources are continuous or discontinuous.

In some embodiments, configuration information of associated DRBs/PDCPs/LCHs includes a synchronous or collaborative transmission requirement identification, or an association relationship of synchronous or collaborative transmission.

In some embodiments, a specific configured grant resource and/or a specific dynamic grant resource is used to transmit data of a specific DRB/LCH/terminal device, or to transmit data of associated DRBs/PDCPs/LCHs.

In some embodiments, the second device includes a fifth receiving unit configured to receive second indication information sent from the first device in a case where the first device is a terminal device and the second device is a network device, where the second indication information is used to request a second transmission resource, and the second transmission resource is used to transmit the first data.

In some embodiments, the second indication information is used to indicate one or more of: at least one of at least one terminal device of multiple associated terminal devices, a terminal device enabling the first behavior, or a terminal device identified as synchronous or associated is configured or exists; at least one of at least one LCH/LCG of multiple associated LCHs/LCGs, an LCH/LCG enabling the first behavior, or an LCH/LCG identified as synchronous or associated is configured or exists; at least one of associated DRBs/LCHs, at least one LCH/LCG of multiple associated DRBs/LCHs, a DRB/LCH of a terminal device enabling the first behavior, and a DRB/LCH identified as synchronous or associated is not transmitted or is not transmitted successfully; a transmission latency of one of associated DRBs/LCHs, at least one LCH/LCG of multiple associated DRBs/LCHs, a DRB/LCH of a terminal device enabling the first behavior, and a DRB/LCH identified as synchronous or associated; a to-be-transmitted data volume of one of the associated DRBs/LCHs, at least one DRB/LCH of multiple associated DRBs/LCHs, a DRB/LCH of a terminal device enabling the first behavior, and a DRB/LCH identified as synchronous or associated; an identification of a DRB/LCH that is not transmitted or is not successfully transmitted in associated DRBs/LCHs; or an identification of a DRB/LCH associated with the DRB/LCH that is not transmitted or is not successfully transmitted.

In some embodiments, the second indication information is carried in media access control signaling or uplink control information.

In some embodiments, a transmission resource of a first DRB/LCH/terminal device is used to transmit information or data of a second DRB/LCH/terminal device, where the first DRB/LCH is associated with the second DRB/LCH.

In some embodiments, the transmission resource of the first DRB/LCH/terminal device being used to transmit information or data of the second DRB/LCH/terminal device, includes: using one or more transmission occasions in the transmission resource of the first DRB/LCH/terminal device to transmit the information or data of the second DRB/LCH/terminal device in a case where the first DRB/LCH/terminal device has no data to be transmitted and the second DRB/LCH/terminal device has data to be transmitted; or using a remaining resource to transmit the information or data of the second DRB/LCH/terminal device in a case where the first DRB/LCH/terminal device has data to be transmitted, the second DRB/LCH/terminal device has data to be transmitted, and one or more transmission occasions in the transmission resource of the first DRB/LCH/terminal device include the remaining resource.

In some embodiments, in a case where the first DRB/LCH/terminal device has data to be transmitted, and the second DRB/LCH/terminal device has data to be transmitted, and the one or more transmission occasions in the transmission resource of the first DRB/LCH/terminal device include the remaining resource, padding is not added, and/or, the remaining resource is used to transmit the information or data of the second DRB/LCH/terminal device.

In some embodiments, a priority of the transmission resource or a priority of a grant is determined based on an association relationship of DRBs/LCHs/terminal devices.

In some embodiments, the priority of the transmission resource is determined based on one or more of: whether at least one of at least one terminal device of multiple associated terminal devices, a terminal device enabling the first behavior, or a terminal device identified as synchronous or associated is configured or exists; whether at least one of at least one LCH/LCG of multiple associated LCHs/LCGs, an LCH/LCG enabling the first behavior, or an LCH/LCG identified as synchronous or associated is configured or exists; whether a second transmission parameter is configured or used; whether the transmission resource carries the first data; whether the priority of the transmission resource is higher than a twentieth threshold; whether the transmission resource is a specific transmission resource; whether a transmission latency of the first data is less than or equal to a twenty-first threshold; whether a data volume of the first data is greater than or equal to a twenty-second threshold; whether data that is able to be carried on the transmission resource has an association relationship; whether a transmission latency of data that is able to be carried on the transmission resource meets a twenty-third threshold; or whether a to-be-transmitted data volume of data that is able to be carried on the transmission resource meets a twenty-fourth threshold.

In some embodiments, a priority of a HARQ process is determined based on an association relationship of DRBs/LCHs/terminal devices, or associated HARQ processes are transmitted by using the transmission resource based on the association relationship of the DRBs/LCHs/terminal devices.

In some embodiments, the priority of the HARQ process is determined based on one or more of: whether at least one of at least one terminal device of multiple associated terminal devices, a terminal device enabling the first behavior, or a terminal device identified as synchronous or associated is configured or exists; whether a second transmission parameter is configured or used; whether the HARQ process corresponds to at least one of at least one terminal device of multiple associated terminal devices, a terminal device enabling the first behavior, and a terminal device identified as synchronous or associated; whether the HARQ process corresponds to at least one of at least one LCH/LCG of multiple associated LCHs/LCGs, an LCH/LCG enabling the first behavior, and an LCH/LCG identified as synchronous or associated; whether the HARQ process corresponds to an LCH/LCG configured with or using the second transmission parameter; whether the HARQ process corresponds to a terminal device configured with or using the second transmission parameter; whether the transmission resource carries the first data; whether a priority of the transmission resource is higher than a twenty-fifth threshold; whether the transmission resource is a specific transmission resource; whether the HARQ process corresponds to the first data; whether a transmission latency of data corresponding to the HARQ process is less than or equal to a twenty-sixth threshold; whether a data volume corresponding to the HARQ process is greater than or equal to a twenty-seventh threshold; whether data that is able to be carried in the HARQ process has an association relationship; whether a transmission latency of data that is able to be carried in the HARQ process meets a twenty-eighth threshold; or whether a to-be-transmitted data volume of data that is able to be carried in the HARQ process meets a twenty-ninth threshold.

In some embodiments, the second device includes a sixth receiving unit, configured to receive the first data sent from the first device; a buffer unit, , configured to buffer the first data; and a second sending unit, configured to send the first data to a high-layer in a case where all of the first data arrive.

In some embodiments, the second device includes an eighth receiving unit, configured to receive seventh information sent from the first device, where the seventh information is used to indicate an association relationship between terminal devices, quality of service flows, and DRBs/PDCPs/RLCs/PDUs, or to indicate requirements having the association relationship.

In some embodiments, the seventh information is used to indicate one or more of: an associated transmission/a collaborative transmission /a synchronous or collaborative transmission requirement between the terminal devices; an associated transmission/a collaborative transmission/a synchronous or collaborative transmission requirement of the quality of service flows; an associated transmission/a collaborative transmission/a synchronous or collaborative transmission requirement between the DRBs/PDCPs/RLCs; or an associated transmission/a collaborative transmission/a synchronous or collaborative transmission requirement of PDU sessions.

In some embodiments, the second device receives the seventh information sent from the first device in a case where the seventh information changes, and/or the seventh information has not been reported, and/or the seventh information is obtained; or the second device periodically receives the seventh information sent from the first device.

In some embodiments, the second device includes a ninth receiving unit configured to receive eighth information sent from the first device, where the eighth information is used to indicate configuration information of associated DRBs/LCHs or update information of the configuration information of the associated DRBs/LCHs.

In some embodiments, the second device includes a tenth receiving unit configured to receive ninth information sent from the first device, where the ninth information is related to a first terminal device and/or a second terminal device.

In some embodiments, the first terminal device and the second terminal device have a mapping relationship with associated DRBs/LCHs, the first device is a first network device corresponding to the first terminal device, and the second device is a second network device corresponding to the second terminal device.

In some embodiments, the ninth information includes one or more of: resource information allocated or scheduled by a first network device for the first terminal device; suggestion information for a second network device to allocate or schedule a resource for the second terminal device; RRC signaling configured by a first network device for the first terminal device; suggestion information for the second network device to configure RRC for the second terminal device; a mapping relationship between a QoS flow and a DRB/LCH/PDCP configured by a first network device for the first terminal device; suggestion information for a second network device to configure a mapping relationship between a QoS flow and a DRB/LCH/PDCP for the second terminal device; at least one of time information, time stamp information and association information of the first terminal device; or at least one of time information, time stamp information and association information of the second terminal device.

In some embodiments, in a case where the second device is a second network device, the second device determines one or more of the following information of the second terminal device based on the ninth information: whether the first behavior is enabled; resource scheduling or allocation information; configured RRC signaling; a mapping relationship between a QoS flow and a DRB/LCH/PDCP; or association information of the second terminal device.

In some embodiments, the ninth information is information for associated DRBs/LCHs/PDCPs, associated terminal devices, or associated QoS flows, or associated PDU sessions.

FIG. 8 is a schematic structural diagram of a terminal device provided in the embodiments of the present disclosure. The terminal device 800 may include a first receiving unit 810.

The first receiving unit 810 is configured to receive tenth information sent from a network device, where the tenth information is used to indicate configuration information of packet-based packet data convergence protocol (PDCP) data duplication transmission.

In some embodiments, the tenth information is used to indicate one or more of: an importance level of activatable packet-based PDCP data duplication transmission corresponding to an initial state; a protocol data unit set (PDU set) importance level using the configuration information; an importance level of a data packet using packet-based PDCP data duplication transmission; indicating that a data packet meeting a specific PDU set importance level uses packet-based PDCP data duplication transmission; or indicating that a data packet or a PDU set greater than or equal to a first importance level uses packet-based PDCP data duplication transmission.

In some embodiments, if the tenth information includes the configuration information of packet-based PDCP data duplication transmission, the tenth information is used to indicate whether packet-based/PDU set-based PDCP data duplication transmission is enabled, or the tenth information is used to indicate an initial state of packet-based/PDU set-based PDCP data duplication transmission.

In some embodiments, the tenth information is configuration information for the terminal device, and/or the tenth information is configuration information for a data radio bearer (DRB) /PDCP.

In some embodiments, the tenth information is carried in a radio resource control (RRC) signaling, and/or the tenth information is carried in PDCP configuration information.

In some embodiments, the terminal device includes a second receiving unit configured to receive eleventh information sent from the network device, where the eleventh information is used to indicate to activate or deactivate packet-based PDCP data duplication transmission.

In some embodiments, the eleventh information is carried in downlink control information (DCI), a medium access control signaling, or a RRC signaling.

In some embodiments, the eleventh information is a control signaling for the terminal device, all DRBs, or one or more DRBs.

In some embodiments, the eleventh information includes a logical channel identification (LCID), and the LCID is used to identify or recognize the eleventh information.

In some embodiments, the eleventh information includes PDCP duplication transmission activation/deactivation indication information for a PDU set, or PDCP activation/deactivation indication information for a data packet, or PDCP duplication transmission activation/deactivation indication information for a PDU.

In some embodiments, the terminal device includes a third receiving unit configured to receive twelfth information sent from the network device, where the twelfth information is used to indicate to activate or deactivate DRB-based or RLC-based PDCP data duplication transmission.

In some embodiments, in a case where the terminal device receives the eleventh information and the twelfth information, the terminal device uses packet-based PDCP data duplication transmission or DRB-based or RLC-based PDCP data duplication transmission; or, the terminal device determines a duplication transmission strategy to be used based on an importance level of a data packet.

In some embodiments, the terminal device determining the duplication transmission strategy to be used based on the importance level of the data packet, includes: a data packet greater than or equal to a second importance level uses all first transmission resources for duplication transmission, and a data packet less than or equal to the second importance level uses some of the first transmission resources for duplication transmission; or a data packet greater than or equal to a third importance level uses all the first transmission resources for duplication transmission, and a data packet less than or equal to the third importance level does not perform duplication transmission; or a data packet greater than or equal to a fourth importance level uses some of the first transmission resources for duplication transmission, and a data packet less than or equal to the fourth importance level does not perform duplication transmission; or a data packet greater than or equal to a second importance level determines a duplication transmission strategy of the data packet based on the eleventh information, and a data packet less than or equal to the second importance level does not perform duplication transmission; or a data packet greater than or equal to a third importance level determines a duplication transmission strategy of the data packet based on the eleventh information, and the data packet less than or equal to the third importance level does not perform duplication transmission; a data packet greater than or equal to a fourth importance level determines a duplication transmission strategy of the data packet based on the eleventh information, and a data packet less than or equal to the fourth importance level does not perform duplication transmission; or a data packet greater than or equal to a second importance level determines the duplication transmission strategy of the data packet based on the eleventh information, and a data packet less than or equal to the second importance level determines a duplication transmission strategy of the data packet based on the twelfth information; or a data packet greater than or equal to a third importance level determines the duplication transmission strategy of the data packet based on the eleventh information, and a data packet less than or equal to the third importance level determines a duplication transmission strategy of the data packet based on the twelfth information; or a data packet greater than or equal to a fourth importance level determines the duplication transmission strategy of the data packet based on the eleventh information, and the data packet less than or equal to the fourth importance level determines a duplication transmission strategy of the data packet based on the twelfth information; or a data packet greater than or equal to a second importance level determines the duplication transmission strategy of the data packet based on the twelfth information, and a data packet less than or equal to the second importance level determines the duplication transmission strategy of the data packet based on the eleventh information; or a data packet greater than or equal to a third importance level determines the duplication transmission strategy of the data packet based on the twelfth information, and a data packet less than or equal to the third importance level determines the duplication transmission strategy of the data packet based on the eleventh information; or a data packet greater than or equal to a fourth importance level determines the duplication transmission strategy of the data packet based on the twelfth information, and a data packet less than or equal to the fourth importance level determines the duplication transmission strategy of the data packet based on the eleventh information.

In some embodiments, the eleventh information includes one or more of: a DRB identification; an LCH identification; an importance level of a data packet; or an identification of an LCH used by a data packet of a specific importance level.

FIG. 9 is a schematic structural diagram of a network device provided in the embodiments of the present disclosure. The network device 900 may include a first sending unit 910.

The first sending unit 910 is configured to send tenth information to a terminal device, where the tenth information is used to indicate configuration information of packet-based packet data convergence protocol (PDCP) data duplication transmission.

In some embodiments, the tenth information is used to indicate one or more of: an importance level of activatable packet-based PDCP data duplication transmission corresponding to an initial state; a protocol data unit set (PDU set) importance level using the configuration information; an importance level of a data packet using packet-based PDCP data duplication transmission; indicating that a data packet meeting a specific PDU set importance level uses packet-based PDCP data duplication transmission; or indicating that a data packet or a PDU set greater than or equal to a first importance level uses packet-based PDCP data duplication transmission.

In some embodiments, if the tenth information includes the configuration information of packet-based PDCP data duplication transmission, the tenth information is used to indicate whether packet-based/PDU set-based PDCP data duplication transmission is enabled, or the tenth information is used to indicate an initial state of packet-based/PDU set-based PDCP data duplication transmission.

In some embodiments, the tenth information is configuration information for the terminal device, and/or the tenth information is configuration information for a data radio bearer (DRB) /PDCP.

In some embodiments, the tenth information is carried in a radio resource control (RRC) signaling, and/or the tenth information is carried in PDCP configuration information.

In some embodiments, the network device includes a second sending unit, configured to send eleventh information to the terminal device, where the eleventh information is used to indicate to activate or deactivate packet-based PDCP data duplication transmission.

In some embodiments, the eleventh information is carried in downlink control information (DCI), a medium access control signaling, or a RRC signaling.

In some embodiments, the eleventh information is a control signaling for the terminal device, all DRBs, or one or more DRBs.

In some embodiments, the eleventh information includes a logical channel identification (LCID), and the LCID is used to identify or recognize the eleventh information.

In some embodiments, the eleventh information includes PDCP duplication transmission activation/deactivation indication information for a PDU set, or PDCP activation/deactivation indication information for a data packet, or PDCP duplication transmission activation/deactivation indication information for a PDU.

In some embodiments, the network device includes a third sending unit configured to send twelfth information to the terminal device, where the twelfth information is used to indicate to activate or deactivate DRB-based or RLC-based PDCP data duplication transmission.

In some embodiments, the eleventh information includes one or more of: a DRB identification; an LCH identification; an importance level of a data packet; or an identification of an LCH used by a data packet of a specific importance level.

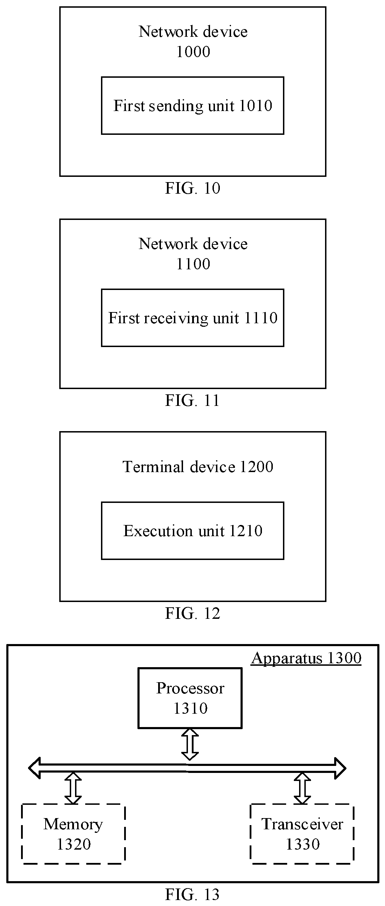

FIG. 10 is a schematic structural diagram of another network device provided in the embodiments of the present disclosure. The network device shown in FIG. 10 may be the first network device mentioned above, and the network device 1000 may include a first sending unit 1010.

The first sending unit 1010 is configured to send a cell handover request to a second network device to perform a cell handover process of a terminal device, where the cell handover process is determined based on thirteenth information, where the thirteenth information is related to transmission of first data, and the first data is data with an association relationship, the first network device is a source network device of the terminal device, and the second network device is a candidate target network device of the terminal device.

In some embodiments, a cell handover request message includes the thirteenth information, and the thirteenth information is associated with the terminal device.

In some embodiments, before sending, by the first network device, the cell handover request to the second network device, the method further includes: receiving, by the first network device, the thirteenth information sent from the terminal device or a core network node.

In some embodiments, the core network node is one or more of: an application function network element; a user plane function network element; a mobility management function network element; and a session management function network element.

In some embodiments, the first network device receives the thirteenth information sent from the terminal device in a case where one or more of the following cases are met: the terminal device has not sent the thirteenth information to the first network device; the terminal device establishes or modifies part or all of content of the thirteenth information; the terminal device initiates a service request; a prohibit timer being not running is reported; or part or all of content of the thirteenth information changes.

In some embodiments, the first network device includes a receiving unit, configured to receive fourteenth information sent from the second network device, where the fourteenth information is a response message for a handover request message, and the fourteenth information is determined based on the thirteenth information.

In some embodiments, the fourteenth information includes one or more of: whether the second network device supports access of the terminal device; whether the second network device supports a protocol data unit set (PDU set); or whether the second network device supports transmission of the first data.

In some embodiments, the first network device includes a determining unit, configured to determine whether the second network device is a target network device of the terminal device based on the fourteenth information.

In some embodiments, the first network device further includes an obtaining unit, configured to obtain the thirteenth information before the first network device sends the cell handover request to the second network device, where the thirteenth information is associated with the second network device.

In some embodiments, the first network device obtains the thirteenth information from a core network node, an operation administration and maintenance (OAM), a network device adjacent to the first network device, or the second network device.

In some embodiments, the core network node is one or more of: an application function network element; a user plane function network element; a mobility management function network element; or a session management function network element.

In some embodiments, the first network device obtains the thirteenth information in response to one or more cases as follows: a request from the first network device; an update of the thirteenth information; a periodic update time; establishment of an interface between the second network device and the first network device; establishment of an interface between the second network device and a core network node; and obtainment of the thirteenth information.

In some embodiments, sending, by the first network device, the cell handover request to the second network device, includes: sending, by the first network device, the cell handover request to the second network device based on the thirteenth information.

In some embodiments, in a case where multiple second network devices exist, the first network device does not select a network device that does not support transmission of the first data and/or does not support a PDU set; or the first network device selects a network device that supports transmission of the first data and/or supports the PDU set.

In some embodiments, the thirteenth information includes one or more of the following information: an association relationship of quality of service flows; an association relationship between multiple terminal devices; or whether a PDU set is enabled; where the multiple terminal devices are receivers and/or senders of the first data.

In some embodiments, the first data includes associated multi-modality data flows and/or associated data packets.

In some embodiments, the first network device includes a second sending unit, configured to send to the second network device, a transmission latency of the first data; or sending, by the first network device to the second network device, a transmission latency of a PDU set to which the first data belongs; or send, to the second network device, a transmission latency of data, a data packet or a PDU set associated with the first data.

FIG. 11 is a schematic structural diagram of yet another network device provided in the embodiments of the present disclosure. The network device shown in FIG. 11 may be the second network device mentioned above, and the network device 1100 may include a first receiving unit 1110.

The first receiving unit 1110 is configured to receive a cell handover request sent from a first network device to perform a cell handover process of a terminal device, where the cell handover process is determined based on thirteenth information, the thirteenth information is related to transmission of data with an association relationship, the first network device is a source network device of the terminal device, and the second network device is a candidate target network device of the terminal device.

In some embodiments, a cell handover request message includes the thirteenth information, and the thirteenth information is associated with the terminal device.

In some embodiments, the second network device includes an obtaining unit configured to obtain the thirteenth information before the second network device receives the cell handover request sent from the first network device, or when the second network device receives the cell handover request sent from the first network device, or after the second network device receives the cell handover request sent from the first network device, where the thirteenth information is associated with the terminal device.

In some embodiments, the thirteenth information is obtained by the second network device from a core network node or an operation administration and maintenance (OAM), or the thirteenth information is obtained by the second network device from the first network device.

In some embodiments, the core network node is one or more of: an application function network element; a user plane function network element; a mobility management function network element; and a session management function network element.

In some embodiments, the second network device obtains the thirteenth information in response to one or more of the following cases: a request from the second network device; an update of the thirteenth information; a periodic update time; establishment of an interface between the second network device and the first network device; establishment of an interface between the second network device and a core network node; and obtainment of the thirteenth information.

In some embodiments, the second network device includes a sending unit, configured to send fourteenth information to the first network device, where the fourteenth information is a response message for a handover request message, and the fourteenth information is determined based on the thirteenth information.

In some embodiments, the fourteenth information includes one or more of: whether the second network device supports access of the terminal device; whether the second network device supports a PDU set; or whether the second network device supports transmission of first data.

In some embodiments, the receiving, by the second network device, the cell handover request sent from the first network device, includes: receiving, by the second network device, the cell handover request sent from the first network device, where the cell handover request is determined based on the thirteenth information, and the thirteenth information is associated with the second network device.

In some embodiments, the thirteenth information includes one or more of the following information: an association relationship of quality of service flows; an association relationship between multiple terminal devices; or whether a PDU set is enabled; where the multiple terminal devices are receivers and/or senders of the associated data.

In some embodiments, the first data includes associated multi-modality data flows and/or associated data packets.

In some embodiments, in a case where the terminal device is handed over to the second network device, the second network device includes a second receiving unit, configured to receive the thirteenth information sent from the terminal device, where the thirteenth information is associated with the terminal device.

In some embodiments, the second network device receives or obtains the thirteenth information sent from the terminal device in a case where one or more of the following cases are met: the terminal device receives a cell handover command; the terminal device has not reported the thirteenth information to the first network device; the terminal device has not reported the thirteenth information; the terminal device reports the thirteenth information within a first time before a cell handover; the second network device requests the terminal device to send the thirteenth information; or the terminal device is configured to report the thirteenth information to a target network device after the cell handover.

In some embodiments, in a case where the terminal device is handed over to the second network device, the method further includes: adding, by the second network device, related information of a PDU set to first data/data packet, or adding, by the second network device, packet header information to the first data/data packet, where the first data/packet is some of the first data transmitted by the first network device before the terminal device performs cell handover, the packet header information indicates the related information of the PDU set or indicates the PDU set to which the data packet belongs.

In some embodiments, in a case where a transmission latency of the first data/data packet is greater than or equal to a first threshold, the second network device discards the first data/packet.

In some embodiments, in a case where the transmission latency of the first data/data packet is greater than or equal to the first threshold, the second network device discards all data packets in the PDU set to which the first data/packet belongs, or discards data, a data packet or a PDU set associated with the first data/data packet.

In some embodiments, the second network device receives a transmission latency of first data sent from the first network device or the terminal device; or the second network device receives a transmission latency of a PDU set to which the first data belongs sent from the first network device or the terminal device; or the second network device receives a transmission latency of data, a data packet or a PDU set associated with the first data sent from the first network device or the terminal device.

FIG. 12 is a schematic structural diagram of another terminal device provided in the embodiments of the present disclosure. The terminal device 1200 shown in FIG. 12 may include an execution unit 1210.

The execution unit 1210 is configured to perform a cell handover, where a cell handover process is determined based on thirteenth information, the thirteenth information is related to transmission of first data, and the first data is data with an association relationship.

In some embodiments, the thirteenth information is carried in a request message of the cell handover request message, and the thirteenth information is associated with the terminal device.

In some embodiments, the terminal device includes a first sending unit, configured to send the thirteenth information to a first network device before the terminal device performs cell handover, where the first network device is a source network device before the terminal device performs the cell handover.

In some embodiments, the terminal device sends the thirteenth information to the first network device in a case where one or more of the following cases are met: the terminal device has not sent the thirteenth information to the first network device; the terminal device establishes or modifies part or all of content of the thirteenth information; the terminal device initiates a service request; a prohibit timer being not running is reported; or part or all of content of the thirteenth information changes.

In some embodiments, the thirteenth information includes one or more of the following information: an association relationship of quality of service flows; an association relationship between multiple terminal devices; or whether a protocol data unit set (PDU set) is enabled; where the multiple terminal devices are receivers and/or senders of the first data.

In some embodiments, the first data includes associated multi-modality data flows and/or associated data packets.

In some embodiments, in a case where the terminal device is handed over to a second network device, the terminal device includes a second sending unit, configured to send the thirteenth information to the second network device, where the thirteenth information is associated with the terminal device.

In some embodiments, the terminal device sends the thirteenth information to the second network device in a case where one or more of the following cases are met: the terminal device receives a cell handover command; the terminal device has not reported the thirteenth information to a first network device; the terminal device has not reported the thirteenth information; the terminal device reports the thirteenth information within a first time before the cell handover; the second network device requests the terminal device to send the thirteenth information; and the terminal device is configured to report the thirteenth information to a target network device after the cell handover.

In some embodiments, the terminal device includes a third sending unit, configured to send a transmission latency of the first data to a second network device; or send a transmission latency of a PDU set to which the first data belongs to the second network device; or send a transmission latency of data, a data packet or a PDU set associated with the first data to the second network device.

FIG. 13 is a schematic structural diagram of an apparatus for communication in the embodiments of the present disclosure.

In an optional embodiment, the sending units and the receiving units mentioned above may be a transceiver 1330. The communication device 600, the communication device 700, the terminal device 800, the network device 900, the network device 1000, the network device 1100, and the terminal device 1200 may further include a processor 1310 and a memory 1320, as specifically shown in FIG. 13.

FIG. 13 is a schematic structural diagram of an apparatus for communication in the embodiments of the present disclosure. The dashed lines in FIG. 13 indicate that the unit or module is optional. The apparatus 1300 may be configured to achieve the methods described in the above method embodiments. The apparatus 1300 may be a chip, a terminal device, or a network device.

The apparatus 1300 may include one or more processors 1310. The processor 1310 may support the apparatus 1300 to achieve the methods described in the above method embodiments. The processor 1310 may be a general-purpose processor or a special-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components. The general-purpose processor may be a microprocessor, or the processor may be any conventional processor.

The apparatus 1300 may also include one or more memories 1320. The memory 1320 stores a program, which may be executed by the processor 1310, so that the processor 1310 executes the methods described in the above method embodiments. The memory 1320 may be independent of the processor 1310 or may be integrated into the processor 1310.

The apparatus 1300 may further include a transceiver 1330. The processor 1310 may communicate with other devices or chips through the transceiver 1330. For example, the processor 1310 may transmit and receive data with other devices or chips through the transceiver 1330.

A computer-readable storage medium for storing a program further also provided in the embodiments of the present disclosure. The computer-readable storage medium may be applied to the terminal device or the network device provided in the embodiments of the present disclosure, and the program enables the computer to execute the methods performed by the terminal device or the network device in the embodiments of the present disclosure.

A computer program product is further provided in the embodiments of the present disclosure. The computer program product includes a program. The computer program product may be applied to the terminal device or the network device provided in the embodiments of the present disclosure, and the program enables the computer to execute the methods performed by the terminal device or the network device in the embodiments of the present disclosure.

A computer program is further provided in the embodiments of the present disclosure. The computer program may be applied to the terminal device or the network device provided in the embodiments of the present disclosure, and the computer program enables the computer to execute the methods performed by the terminal device or the network device in the embodiments of the present disclosure.

It will be understood that in the embodiments of the present disclosure, "B corresponding to A" means that B is associated with A, and B may be determined based on A. However, it will also be understood that determining B based on A does not mean determining B merely based on A; B may also be determined based on A and/or other information.

It will be understood that the term "and/or" in this article is merely a description of the association relationship between associated objects, indicating that three relationships may exist. For example, A and/or B may mean the following three cases: A exists alone, A and B exist at the same time, and B exists alone. In addition, the character "/" in this article generally indicates that the associated objects before and after it have a logical "or" relationship.

It will be understood that in the embodiments of the present disclosure, the size of the serial numbers of the processes does not mean the order of execution. The execution order of each process should be determined by its function and internal logic, and should not constitute any limitation on the implementation process of the embodiments of the present disclosure.

In the several embodiments provided in the present disclosure, it will be understood that the disclosed systems, devices, and methods may be implemented in other ways. For example, the device embodiments described above are merely illustrative. For example, the division of the units is merely a logical function division. In actual implementation, there may be other division methods, such as multiple units or components may be combined or integrated into another system, or some features may be ignored or not executed. In addition, the mutual coupling or direct coupling or communication connection shown or discussed may be an indirect coupling or communication connection through some interfaces, devices or units, which may be electrical, mechanical or other forms.

The units described as separate components may or may not be physically separated, and the components shown as units may or may not be physical units, that is, they may be located in one place or distributed over multiple network units. Some or all of the units may be selected according to actual demands to achieve the purpose of the solution in the embodiments.

In addition, functional units in the embodiments of the present disclosure may be integrated into one processing unit, or each unit may exist physically separately, or two or more units may be integrated into one unit.

In above embodiments may be implemented in whole or in part by software, hardware, firmware or any combination thereof. In a case where the above embodiments are implemented by using software, they may be implemented in the form of a computer program product in whole or in part. The computer program product includes one or more computer instructions. When the computer program instructions are loaded and executed on a computer, processes or functions according to the embodiments of the present disclosure are generated in whole or in part. The computer may be a general-purpose computer, a dedicated computer, a computer network, or any other programmable apparatuses. The computer instructions may be stored in a computer-readable storage medium or transmitted from one computer-readable storage medium to another computer-readable storage medium, for example, the computer instructions may be transmitted from one website, computer, server, or data center to another website, computer, server, or data center via wired (e.g., coaxial cable, optical fiber, digital subscriber line (DSL)) or wireless (e.g., infrared, wireless, or microwave) means. The computer-readable storage medium may be any available medium that may be accessed by a computer, or a data storage device, such as including a server or a data center that integrates one or more available media. The available medium may be a magnetic medium (e.g., a floppy disk, a hard disk, a magnetic tape), an optical medium (e.g., a DVD), or a semiconductor medium (e.g., a solid state disk (SSD)).

The above description is only the specific implementation of the present disclosure, but the protection scope of the present disclosure is not limited thereto. Any skilled familiar with this technical field may easily think of changes or substitutions within the technical scope disclosed in the present disclosure, which should be all covered within the protection scope of the present disclosure. Therefore, the protection scope of the present disclosure shall be subjects to the protection scope of the claims.

## Claims

1. A wireless communication method, comprising:
receiving, by a first device, first information sent from a second device, wherein the first information is used to enable or activate a first behavior, or the first information is used to configure a parameter of first data, or the first information is used to determine a transmission resource of the first data, wherein the first data is data with an association relationship, and the first behavior is related to the first data.

2. The method according to claim 1, wherein the first information includes first configuration information, wherein the first configuration information is used to configure a parameter of a data radio bearer (DRB)/logical channel (LCH), or the first configuration information is used to configure a parameter of one or multiple terminal devices.

3. The method according to claim 2, wherein the first data has a mapping relationship with the DRB/LCH, and/or the first data has a mapping relationship with the one or multiple terminal devices.

4. The method according to claim 2 or 3, wherein the first configuration information is used to indicate that the DRB/LCH has a synchronous or collaborative transmission requirement, or the first configuration information is used to identify DRBs/LCHs having an associated or synchronous or collaborative transmission requirement, or the first configuration information is used to identify the multiple terminal devices having an associated, synchronous or collaborative transmission requirement.

5. The method according to any one of claims 2 to 4, wherein the first configuration information is used to indicate an association relationship among DRBs/LCHs with a synchronous or collaborative transmission requirement, or the first configuration information is used to indicate an association relationship among terminal devices with a synchronous or collaborative transmission requirement.

6. The method according to any one of claims 1 to 5, wherein the first information includes a transmission parameter, and the transmission parameter is related to a transmission process of the first data.

7. The method according to claim 6, wherein the first information includes a first transmission parameter and a second transmission parameter, and the first transmission parameter is different from the second transmission parameter.

8. The method according to claim 7, wherein the first transmission parameter is used for a case where synchronous transmission is not activated/not indicated, or a case where a first condition is met; and/or
the second transmission parameter is used for a case where synchronous transmission is activated/indicated, or a case where a second condition is met.

9. The method according to claim 8, wherein the second condition includes one or more conditions as follows:
at least one of: at least one terminal device of multiple associated terminal devices, a terminal device enabling the first behavior, or a terminal device identified as synchronous or associated is configured or exists;
at least one of: at least one LCH/logical channel group (LCG) of multiple associated LCHs/LCGs, an LCH/LCG enabling the first behavior, or an LCH/LCG identified as synchronous or associated is configured or exists;
the first transmission parameter is used for a first duration;
a transmission latency of one of associated DRBs/LCHs, at least one DRB/LCH of multiple associated DRBs/LCHs, a DRB/LCH of the terminal device enabling the first behavior, and a DRB/LCH identified as synchronous or associated meets a first threshold;
a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets a second threshold;
a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a third threshold;
a transmission latency of one of associated terminal devices, at least one terminal device of multiple associated terminal devices, a terminal device enabling the first behavior, and a terminal device identified as synchronous or associated meets a fourth threshold;
a total data volume of one of associated terminal devices, at least one terminal device of multiple associated terminal devices, a terminal device enabling the first behavior, and a terminal device identified as synchronous or associated meets a fifth threshold;
a remaining to-be-transmitted data volume of one of associated terminal devices, at least one terminal device of multiple associated terminal devices, a terminal device enabling the first behavior, and a terminal device identified as synchronous or associated meets a sixth threshold;
a network device indicates to enable or activate the first behavior; or
the network device indicates to use the second transmission parameter.

10. The method according to claim 8 or 9, wherein the first condition includes one or more conditions as follows:
at least one of: at least one terminal device of multiple associated terminal devices, a terminal device enabling the first behavior, or a terminal device identified as synchronous or associated is not configured or does not exist;
at least one of: at least one LCH/LCG of multiple associated LCHs/LCGs, an LCH/LCG enabling the first behavior, or an LCH/LCG identified as synchronous or associated is not configured or does not exist;
the second transmission parameter is used for a second duration;
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a seventh threshold;
a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets an eighth threshold;
a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a ninth threshold;
a transmission latency of one of associated terminal devices, at least one terminal device of multiple associated terminal devices, a terminal device enabling the first behavior, and a terminal device identified as synchronous or associated meets a tenth threshold;
a total data volume of one of associated terminal devices, at least one terminal device of multiple associated terminal devices, a terminal device enabling the first behavior, and a terminal device identified as synchronous or associated meets an eleventh threshold;
a remaining to-be-transmitted data volume of one of associated terminal devices, at least one terminal device of multiple associated terminal devices, a terminal device enabling the first behavior, and a terminal device identified as synchronous or associated meets a twelfth threshold;
a network device indicates not to enable or to deactivate the first behavior; or
the network device indicates to use the first transmission parameter.

11. The method according to any one of claims 7 to 10, wherein
the first transmission parameter and/or the second transmission parameter is for a DRB/LCH or a terminal device; or
the first transmission parameter and/or the second transmission parameter is for multiple DRBs/LCHs; or
the first transmission parameter and/or the second transmission parameter is for multiple terminal devices.

12. The method according to any one of claims 7 to 11, wherein the first transmission parameter and/or the second transmission parameter includes one or more of:
a logical channel priority;
a priority bit rate;
an allowed uplink grant or dynamic grant;
an allowed-configured grant list;
duplication transmission;
repetition transmission;
duplication transmission of LCH;
retransmission;
a tolerated transmission latency; or
a modulation and coding scheme.

13. The method according to claim 12, wherein the uplink grant or the dynamic grant allowed by the first transmission parameter and/or the second transmission parameter is indicated by an identification of the uplink grant or the dynamic grant, or an identification of a DRB/LCH corresponding to the uplink grant or the dynamic grant, or matching information between the uplink grant or dynamic grant and a DRB/LCH, or a correspondence between the uplink grant or dynamic grant and a DRB/LCH.

14. The method according to any one of claims 7 to 13, wherein the first transmission parameter and the second transmission parameter meet one or more conditions as follows:
a logical channel priority in the second transmission parameter is higher than a logical channel priority in the first transmission parameter;
a priority bit rate in the second transmission parameter is greater than a priority bit rate in the first transmission parameter;
a logical channel priority in the second transmission parameter is lower than a logical channel priority in the first transmission parameter, and a tolerated transmission latency in the second transmission parameter is less than a tolerated transmission latency in the first transmission parameter,
allowed-configured grant list in the second transmission parameter are more than allowed-configured grant list in the first transmission parameter;
the second transmission parameter includes an activation indication of a packet data convergence protocol (PDCP);
a number of duplication transmissions in the second transmission parameter is greater than a number of duplication transmissions in the first transmission parameter;
a number of repetition transmissions in the second transmission parameter is greater than a number of repetition transmissions in the first transmission parameter; or
an order of a modulation and coding scheme in the second transmission parameter is less than an order of a modulation and coding scheme in the first transmission parameter.

15. The method according to any one of claims 1 to 14, further comprising:
sending, by the first device, second information to the second device in a case where the first device is a terminal device and the second device is a network device, wherein the second information is used to request a transmission resource, or the second information is used to request transmission of the first data, or the second information is used to indicate a transmission requirement of the first data.

16. The method according to claim 15, wherein the sending, by the first device, the second information to the second device, comprises:
sending, by the first device, the second information to the second device in a case where a third condition is met, wherein the third condition comprises one or more conditions as follows:
at least one of: at least one terminal device of multiple associated terminal devices, a terminal device enabling the first behavior, or a terminal device identified as synchronous or associated is configured or exists;
at least one of: at least one LCH/LCG of multiple associated LCHs/LCGs, an LCH/LCG enabling the first behavior, or an LCH/LCG identified as synchronous or associated is configured or exists;
a first transmission parameter is used for a first duration;
a second transmission parameter is configured or used;
data of one of associated DRBs/LCHs, at least one DRB/LCH of multiple associated DRBs/LCHs, a DRB/LCH of a terminal device enabling the first behavior, and a DRB/LCH identified as synchronous or associated arrives;
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a thirteenth threshold;
a data volume of one of associated DRBs/LCHs, at least one DRB/LCH of multiple associated DRBs/LCHs, a DRB/LCH of a terminal device enabling the first behavior, and a DRB/LCH identified as synchronous or associated meets a fourteenth threshold;
data of one of associated terminal devices, at least one terminal device of multiple associated terminal devices, a terminal device enabling the first behavior, and a terminal device identified as synchronous or associated arrives;
to-be-transmitted data or to-be-transmitted data information from the associated terminal devices is received;
the first device receives third information, wherein the third information is used for a terminal device associated with the first device to request the first device to send the second information;
a transmission latency of one of associated terminal devices, at least one terminal device of multiple associated terminal devices, a terminal device enabling the first behavior, and a terminal device identified as synchronous or associated meets a fifteenth threshold;
a data volume of one of associated terminal devices, at least one terminal device of multiple associated terminal devices, a terminal device enabling the first behavior, and a terminal device identified as synchronous or associated meets a sixteenth threshold; or
the network device indicates to enabled or activate the first behavior.

17. The method according to any one of claims 1 to 16, further comprising:
sending, by the first device, fourth information to the second device, wherein the fourth information is used to indicate a buffer status or a transmission status of the first data.

18. The method according to claim 17, wherein associated logical channels include a first LCH and a second LCH, and the fourth information is used to indicate one or more of:
an association relationship between the first LCH and the second LCH;
an identification of the first LCH or a corresponding DRB;
an identification of the second LCH or a corresponding DRB;
a transmission latency and/or a data volume size of the first LCH; or
a transmission latency and/or a data volume size of the second LCH.

19. The method according to claim 17 or 18, wherein associated logical channels correspond to a first terminal device and a second terminal device, the fourth information is used to indicate one or more of:
an association relationship between the first terminal device and the second terminal device;
an identification of the first terminal device;
an identification of the second terminal device;
identifications of DRBs/LCHs with an association relationship and of the first terminal device;
identifications of DRBs/LCHs with an association relationship and of the second terminal device;
a transmission latency and/or a data volume size of the first terminal device;
a transmission latency and/or a data volume size of the second terminal device;
transmission latencies and/or data volume sizes of logical channels with an association relationship and of the first terminal device; or
transmission latencies and/or data volume sizes of logical channels with an association relationship and of the second terminal device.

20. The method according to any one of claims 1 to 19, further comprising:
discarding, by the first device, some or all of the first data, or discarding, by the first device, some or all of the first data based on the first information, or discarding, by the first device, some or all of the first data in a case where the first behavior is enabled or activated.

21. The method according to any one of claims 1 to 20, further comprising:
sending, by the first device, fifth information to the second device, wherein the fifth information is used for one or more of:
indicating an identification of a data packet that is lost or delayed;
indicating a data packet that is not required to be transmitted or is considered to have been received;
indicating that some or all of the first data are not be able to be transmitted;
requesting that the second device discards some or all of the first data;
indicating an identification of data that is not be able to be transmitted in the first data; or
indicating an identification of data to be discarded in the first data.

22. The method according to any one of claims 1 to 21, wherein the first information includes second configuration information, and the second configuration information is used to configure a DRB/PDCP, or to configure one or multiple terminal devices.

23. The method according to claim 22, wherein the DRB/PDCP has a mapping relationship with the first data, and/or the multiple terminal devices have a mapping relationship with the first data.

24. The method according to claim 22 or 23, wherein
the second configuration information is used to indicate that DRBs/PDCPs have a synchronous or collaborative transmission requirement; or
the second configuration information is used to identify DRBs/PDCPs with an associated or synchronous or collaborative transmission requirement; or
the second configuration information is used to identify the multiple terminal devices with an associated or synchronous or collaborative transmission requirement; or
the second configuration information is used to enable or activate discarding of data packets having an association relationship; or
the second configuration information is used to enable or activate sending/triggering behavior of the first information.

25. The method according to any one of claims 22 to 24, wherein the second configuration information is used to indicate an association relationship among DRBs/PDCPs with a synchronous or collaborative transmission requirement.

26. The method according to any one of claims 22 to 25, further comprising:
sending, by the first device, first indication information to the second device in a case where a fourth condition is met, wherein the fourth condition includes one or more conditions as follows:
an associated data packet is discarded;
a transmission failure indication is received from the second device;
N transmission failure indications are received from the second device;
the transmission failure indication is received from the second device within a third duration;
a successfully transmitted packet data unit (PDU)/ packet data unit set (PDU set) meets a first ratio;
a number of the successfully transmitted PDUs/PDU sets meets a seventeenth threshold;
a PDU/PDU set at a specific position is not transmitted or is not successfully transmitted; or
a PDU/PDU set of a specific type is not transmitted or is not successfully transmitted.

27. The method according to claim 26, wherein associated DRBs/PDCPs include a first data packet and a second data packet, the first indication information is used for one or more of:
indicating identifications of associated terminal devices;
indicating identifications of associated DRBs/PDCPs;
indicating an identification of a data packet that is lost or delayed;
indicating an identification of the first data packet;
indicating an identification of a data packet associated with the first data packet;
indicating an identification of a DRB/PDCP/LCH or a DRB/PDCP/LCH corresponding to the first data packet;
indicating an identification of a DRB/PDCP/LCH or a DRB/PDCP/LCH of a data packet associated with the first data packet;
indicating an identification of a terminal device associated with the first data packet;
indicating an identification of a terminal device corresponding to a data packet associated with the first data packet;
indicating that the first data packet is not required;
indicating that the first data packet and the second data packet are not required;
indicating discarding information of the first data packet;
indicating that a network device discards the first data packet; or
indicating that a network device discards the first data packet and the second data packet.

28. The method according to claim 27, wherein in case where a PDU set or a PDU to which the first data packet belongs is discarded, the first device discards the second data packet.

29. The method according to claim 26, wherein a transmission failure indication is for a data packet, or all data packets in a PDCP/radio link control (RLC)/buffer of a terminal device, or a data packet with a specific identification in the PDCP/RLC/buffer of the terminal device.

30. The method according to any one of claims 26 to 29, wherein the first indication information is discarding indication information for a specific data packet, a terminal device, or a quality of service (QoS) flow/DRB/PDCP/RLC, or a data packet buffered by the terminal device.

31. The method according to any one of claims 1 to 30, further comprising:
activating or deactivating, by the first device, packet-based duplication transmission, or packet-based duplication transmission according to the first information.

32. The method according to claim 31, wherein the first device activates or deactivates duplication transmission of associated data packets, or duplication transmission of the associated data packets according to the first information.

33. The method according to claim 31 or 32, wherein the first device activates duplication transmission in a case where one or more of the following conditions are met:
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets an eighteenth threshold;
a transmission latency of one of associated terminal devices, at least one terminal device of multiple associated terminal devices, a terminal device enabling the first behavior, and a terminal device identified as synchronous or associated meets a nineteenth threshold; or
a network device indicates to enable or activate the first behavior.

34. The method according to any one of claims 31 to 33, further comprising:
deactivating, by the first device, duplication transmission of associated data packets after a fourth duration of activating duplication transmission of the associated data packets for a fourth duration.

35. The method according to any one of claims 31 to 34, wherein duplication transmission is configured for one or more of:
all data packets;
a specific data packet;
each PDU; or
each PDU set.

36. The method according to any one of claims 1 to 35, wherein the first information further comprises sixth information, the sixth information is used to indicate a first transmission resource of a terminal device, and the first transmission resource is used to transmit the first data.

37. The method according to claim 36, wherein the sixth information comprises an identification of the first transmission resource or an identification of a specific DRB/LCH/terminal device.

38. The method according to claim 36 or 37, wherein the sixth information is carried in radio resource control (RRC) configuration and/or downlink control information (DCI) signaling.

39. The method according to any one of claims 36 to 38, wherein the first transmission resource is a configured grant resource or a dynamic grant resource.

40. The method according to any one of claims 36 to 39, wherein the first transmission resource includes one or more transmission resources.

41. The method according to claim 40, wherein in case where the first transmission resource includes multiple transmission resources, the multiple transmission resources are continuous or discontinuous.

42. The method according to any one of claims 36 to 41, wherein configuration information of associated DRBs/PDCPs/LCHs includes a synchronous or collaborative transmission requirement identification, or an association relationship of synchronous or collaborative transmission.

43. The method according to any one of claims 36 to 42, wherein a specific configured grant resource and/or a specific dynamic grant resource is used to transmit data of a specific DRB/LCH/terminal device, or to transmit data of associated DRBs/PDCPs/LCHs.

44. The method according to any one of claims 1 to 43, further comprising:
sending, by the first device, second indication information to the second device in a case where the first device is a terminal device and the second device is a network device, wherein the second indication information is used to request a second transmission resource, and the second transmission resource is used to transmit the first data.

45. The method according to claim 44, wherein the second indication information is used to indicate one or more of:
at least one of: at least one terminal device of multiple associated terminal devices, a terminal device enabling the first behavior, or a terminal device identified as synchronous or associated is configured or exists;
at least one of: at least one LCH/LCG of multiple associated LCHs/LCGs, an LCH/LCG enabling the first behavior, or an LCH/LCG identified as synchronous or associated is configured or exists;
at least one of associated DRBs/LCHs, at least one DRB/LCH of multiple associated DRBs/LCHs, a DRB/LCH of a terminal device enabling the first behavior, and a DRB/LCH identified as synchronous or associated is not transmitted or is not transmitted successfully;
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated;
a to-be-transmitted data volume of one of the associated DRBs/LCHs, at least one DRB/LCH of multiple associated DRBs/LCHs, a DRB/LCH of a terminal device enabling the first behavior, and a DRB/LCH identified as synchronous or associated;
an identification of a DRB/LCH that is not transmitted or is not successfully transmitted in associated DRBs/LCHs; or
an identification of a DRB/LCH associated with the DRB/LCH that is not transmitted or is not successfully transmitted.

46. The method according to claim 44 or 45, wherein the second indication information is carried in media access control signaling or uplink control information.

47. The method according to any one of claims 1 to 46, wherein a transmission resource of a first DRB/LCH/terminal device is used to transmit information or data of a second DRB/LCH/terminal device, wherein the first DRB/LCH is associated with the second DRB/LCH.

48. The method according to claim 47, wherein the transmission resource of the first DRB/LCH/terminal device being used to transmit information or data of the second DRB/LCH/terminal device, comprises:
using one or more transmission occasions in the transmission resource of the first DRB/LCH/terminal device to transmit the information or data of the second DRB/LCH/terminal device in a case where the first DRB/LCH/terminal device has no data to be transmitted and the second DRB/LCH/terminal device has data to be transmitted; or
using a remaining resource to transmit the information or data of the second DRB/LCH/terminal device in a case where the first DRB/LCH/terminal device has data to be transmitted, the second DRB/LCH/terminal device has data to be transmitted, and one or more transmission occasions in the transmission resource of the first DRB/LCH/terminal device include the remaining resource.

49. The method according to claim 48, wherein in a case where the first DRB/LCH/terminal device has data to be transmitted, and the second DRB/LCH/terminal device has data to be transmitted, and the one or more transmission occasions in the transmission resource of the first DRB/LCH/terminal device include the remaining resource, padding is not added, and/or, the remaining resource is used to transmit the information or data of the second DRB/LCH/terminal device.

50. The method according to any one of claims 1 to 49, wherein a priority of the transmission resource or a priority of a grant is determined based on an association relationship of DRBs/LCHs/terminal devices.

51. The method according to claim 50, wherein the priority of the transmission resource is determined based on one or more of:
whether at least one of: at least one terminal device of multiple associated terminal devices, a terminal device enabling the first behavior, or a terminal device identified as synchronous or associated is configured or exists;
whether at least one of: at least one LCH/LCG of multiple associated LCHs/LCGs, an LCH/LCG enabling the first behavior, or an LCH/LCG identified as synchronous or associated is configured or exists;
whether a second transmission parameter is configured or used;
whether the transmission resource carries the first data;
whether the priority of the transmission resource is higher than a twentieth threshold;
whether the transmission resource is a specific transmission resource;
whether a transmission latency of the first data is less than or equal to a twenty-first threshold;
whether a data volume of the first data is greater than or equal to a twenty-second threshold;
whether data that is able to be carried on the transmission resource has an association relationship;
whether a transmission latency of data that is able to be carried on the transmission resource meets a twenty-third threshold; or
whether a to-be-transmitted data volume of data that is able to be carried on the transmission resource meets a twenty-fourth threshold.

52. The method according to any one of claims 1 to 51, wherein a priority of a hybrid automatic repeat-request (HARQ) process is determined based on an association relationship of DRBs/LCHs/terminal devices, or associated HARQ processes are transmitted by using the transmission resource based on the association relationship of the DRBs/LCHs/terminal devices.

53. The method according to claim 52, wherein the priority of the HARQ process is determined based on one or more of:
whether at least one of: at least one terminal device of multiple associated terminal devices, a terminal device enabling the first behavior, or a terminal device identified as synchronous or associated is configured or exists;
whether a second transmission parameter is configured or used;
whether the HARQ process corresponds to at least one of at least one terminal device of multiple associated terminal devices, a terminal device enabling the first behavior, and a terminal device identified as synchronous or associated;
whether the HARQ process corresponds to at least one of at least one LCH/LCG of multiple associated LCHs/LCGs, an LCH/LCG enabling the first behavior, and an LCH/LCG identified as synchronous or associated;
whether the HARQ process corresponds to an LCH/LCG configured with or using the second transmission parameter;
whether the HARQ process corresponds to a terminal device configured with or using the second transmission parameter;
whether the transmission resource carries the first data;
whether a priority of the transmission resource is higher than a twenty-fifth threshold;
whether the transmission resource is a specific transmission resource;
whether the HARQ process corresponds to the first data;
whether a transmission latency of data corresponding to the HARQ process is less than or equal to a twenty-sixth threshold;
whether a data volume corresponding to the HARQ process is greater than or equal to a twenty-seventh threshold;
whether data that is able to be carried in the HARQ process has an association relationship;
whether a transmission latency of data that is able to be carried in the HARQ process meets a twenty-eighth threshold; or
whether a to-be-transmitted data volume of data that is able to be carried in the HARQ process meets a twenty-ninth threshold.

54. The method according to any one of claims 1 to 53, further comprising:
buffering, by the first device, the first data; and
sending, by the first device, the first data to the second device in a case where all of the first data arrive.

55. The method according to any one of claims 1 to 54, further comprising:
sending, by the first device, seventh information to the second device, wherein the seventh information is used to indicate an association relationship between terminal devices, quality of service flows, and DRBs/PDCPs/RLCs/PDUs, or to indicate requirements having the association relationship.

56. The method according to claim 55, wherein the seventh information is used to indicate one or more of:
an associated transmission/a collaborative transmission/a synchronous or collaborative transmission requirement between the terminal devices;
an associated transmission/a collaborative transmission/a synchronous or collaborative transmission requirement of the quality of service flows;
an associated transmission/a collaborative transmission/a synchronous or collaborative transmission requirement between the DRBs/PDCPs/RLCs; or
an associated transmission/a collaborative transmission/a synchronous or collaborative transmission requirement of PDU sessions.

57. The method according to claim 55 or 56, wherein the first device sends the seventh information to the second device in a case where the seventh information changes, and/or the seventh information has not been reported, and/or the seventh information is obtained; or the first device periodically sends the seventh information to the second device.

58. The method according to any one of claims 1 to 57, further comprising:
sending, by the first device, eighth information to the second device, wherein the eighth information is used to indicate configuration information of associated DRBs/LCHs or update information of the configuration information of the associated DRBs/LCHs.

59. The method according to any one of claims 1 to 58, further comprising:
sending, by the first device, ninth information to the second device, wherein the ninth information is related to a first terminal device and/or a second terminal device.

60. The method according to claim 59, wherein the first terminal device and the second terminal device have a mapping relationship with associated DRBs/LCHs, the first device is a first network device corresponding to the first terminal device, and the second device is a second network device corresponding to the second terminal device.

61. The method according to claim 59 or 60, wherein the ninth information includes one or more of:
resource information allocated or scheduled by a first network device for the first terminal device;
suggestion information for a second network device to allocate or schedule a resource for the second terminal device;
RRC signaling configured by a first network device for the first terminal device;
suggestion information for the second network device to configure RRC for the second terminal device;
a mapping relationship between a QoS flow and a DRB/LCH/PDCP configured by a first network device for the first terminal device;
suggestion information for a second network device to configure a mapping relationship between a QoS flow and a DRB/LCH/PDCP for the second terminal device;
at least one of time information, time stamp information and association information of the first terminal device; or
at least one of time information, time stamp information and association information of the second terminal device.

62. The method according to any one of claims 59 to 61, wherein the first device obtains the ninth information from a core network node, a network device, or a high-layer of a terminal device.

63. The method according to any one of claims 59 to 62, wherein the ninth information is information for associated DRBs/LCHs/PDCPs, associated terminal devices, or associated QoS flows, or associated PDU sessions.

64. A wireless communication method, comprising:
sending, by a second device, first information to a first device, wherein the first information is used to enable or activate a first behavior, or the first information is used to configure a parameter of first data, or the first information is used to determine a transmission resource of the first data, wherein the first data is data with an association relationship, and the first behavior is related to the first data.

65. The method according to claim 64, wherein the first information includes first configuration information, wherein the first configuration information is used to configure a parameter of a DRB/LCH, or the first configuration information is used to configure a parameter of one or multiple terminal devices.

66. The method according to claim 65, wherein the first data has a mapping relationship with the DRB/LCH, and/or the first data has a mapping relationship with the one or multiple terminal devices.

67. The method according to claim 65 or 66, wherein the first configuration information is used to indicate that the DRB/LCH has a synchronous or collaborative transmission requirement, or the first configuration information is used to identify DRBs/LCHs having an associated or synchronous or collaborative transmission requirement, or the first configuration information is used to identify multiple terminal devices having an associated, synchronous or collaborative transmission requirement.

68. The method according to any one of claims 65 to 67, wherein the first configuration information is used to indicate an association relationship among DRBs/LCHs with a synchronous or collaborative transmission requirement, or the first configuration information is used to indicate an association relationship among terminal devices with a synchronous or collaborative transmission requirement.

69. The method according to any one of claims 64 to 68, wherein the first information includes a transmission parameter, and the transmission parameter is related to a transmission process of the first data.

70. The method according to claim 69, wherein the first information includes a first transmission parameter and a second transmission parameter, and the first transmission parameter is different from the second transmission parameter.

71. The method according to claim 70, wherein
the first transmission parameter is used for a case where synchronous transmission is not activated/not indicated, or a case where a first condition is met; and/or
the second transmission parameter is used for a case where synchronous transmission is activated/indicated, or a case where a second condition is met.

72. The method according to claim 71, wherein the second condition includes one or more conditions as follows:
at least one of: at least one terminal device of multiple associated terminal devices, a terminal device enabling the first behavior, or a terminal device identified as synchronous or associated is configured or exists;
at least one of: at least one LCH/logical channel group (LCG) of multiple associated LCHs/LCGs, an LCH/LCG enabling the first behavior, or an LCH/LCG identified as synchronous or associated is configured or exists;
the first transmission parameter is used for a first duration;
a transmission latency of one of associated DRBs/LCHs, at least one DRB/LCH of multiple associated DRBs/LCHs, a DRB/LCH of the terminal device enabling the first behavior, and a DRB/LCH identified as synchronous or associated meets a first threshold;
a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets a second threshold;
a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a third threshold;
a transmission latency of one of associated terminal devices, at least one terminal device of multiple associated terminal devices, a terminal device enabling the first behavior, and a terminal device identified as synchronous or associated meets a fourth threshold;
a total data volume of one of associated terminal devices, at least one terminal device of multiple associated terminal devices, a terminal device enabling the first behavior, and a terminal device identified as synchronous or associated meets a fifth threshold;
a remaining to-be-transmitted data volume of one of associated terminal devices, at least one terminal device of multiple associated terminal devices, a terminal device enabling the first behavior, and a terminal device identified as synchronous or associated meets a sixth threshold;
a network device indicates to enable or activate the first behavior; or
the network device indicates to use the second transmission parameter.

73. The method according to claim 71 or 72, wherein the first condition includes one or more conditions as follows:
at least one of at least one terminal device of multiple associated terminal devices, a terminal device enabling the first behavior, and a terminal device identified as synchronous or associated is not configured or does not exist;
at least one of at least one LCH/LCG of multiple associated LCHs/LCGs, an LCH/LCG enabling the first behavior, and an LCH/LCG identified as synchronous or associated is not configured or does not exist;
the second transmission parameter is used for a second duration;
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a seventh threshold;
a total data volume of one of associated DRBs/LCHs, at least one DRB/LCH of multiple associated DRBs/LCHs, a DRB/LCH of a terminal device enabling the first behavior, and a DRB/LCH identified as synchronous or associated meets an eighth threshold;
a remaining to-be-transmitted data volume of one of associated DRBs/LCHs, at least one DRB/LCH of multiple associated DRBs/LCHs, a DRB/LCH of a terminal device enabling the first behavior, and a DRB/LCH identified as synchronous or associated meets a ninth threshold;
a transmission latency of one of associated terminal devices, at least one terminal device of multiple associated terminal devices, a terminal device enabling the first behavior, and a terminal device identified as synchronous or associated meets a tenth threshold;
a total data volume of one of associated terminal devices, at least one terminal device of multiple associated terminal devices, a terminal device enabling the first behavior, and a terminal device identified as synchronous or associated meets an eleventh threshold;
a remaining to-be-transmitted data volume of one of associated terminal devices, at least one terminal device of multiple associated terminal devices, a terminal device enabling the first behavior, and a terminal device identified as synchronous or associated meets a twelfth threshold;
a network device indicates not to enable or to deactivate the first behavior; or
the network device indicates to use the first transmission parameter.

74. The method according to any one of claims 70 to 73, wherein the second transmission parameter and/or the first transmission parameter is for a DRB/LCH or a terminal device; or
the second transmission parameter and/or the first transmission parameter is for multiple DRBs/LCHs; or
the second transmission parameter and/or the first transmission parameter is for multiple terminal devices.

75. The method according to any one of claims 70 to 74, wherein the first transmission parameter and/or the second transmission parameter includes one or more of:
a logical channel priority;
a priority bit rate;
an allowed uplink grant or dynamic grant;
an allowed-configured grant list;
duplication transmission;
repetition transmission;
duplication transmission of LCH;
retransmission;
a tolerated transmission latency; or
a modulation and coding scheme.

76. The method according to claim 75, wherein the uplink grant or the dynamic grant allowed by the first transmission parameter and/or the second transmission parameter is indicated by an identification of the uplink grant or the dynamic grant, or an identification of a DRB/LCH corresponding to the uplink grant or the dynamic grant, or matching information between the uplink grant or dynamic grant and a DRB/LCH, or a correspondence between the uplink grant or dynamic grant and a DRB/LCH.

77. The method according to any one of claims 70 to 76, wherein the first transmission parameter and the second transmission parameter meet one or more conditions as follows:
a logical channel priority in the second transmission parameter is higher than a logical channel priority in the first transmission parameter;
a priority bit rate in the second transmission parameter is greater than a priority bit rate in the first transmission parameter;
the a logical channel priority in the second transmission parameter is lower than the a logical channel priority in the first transmission parameter, and a tolerated transmission latency in the second transmission parameter is less than a tolerated transmission latency in the first transmission parameter,
allowed-configured grant list in the second transmission parameter are more than allowed-configured grant list in the first transmission parameter;
the second transmission parameter includes an activation indication of a PDCP;
a number of duplication transmissions in the second transmission parameter is greater than a number of duplication transmissions in the first transmission parameter;
a number of repetition transmissions in the second transmission parameter is greater than a number of repetition transmissions in the first transmission parameter; and
an order of a modulation and coding scheme in the second transmission parameter is less than an order of a modulation and coding scheme in the first transmission parameter.

78. The method according to any one of claims 64 to 77, further comprising:
in a case where the first device is a terminal device and the second device is a network device, receiving, by the second device, second information sent from the first device, wherein the second information is used to request a transmission resource, or to request transmission of the first data, or the second information is used to indicate a transmission requirement of the first data.

79. The method according to claim 78, wherein the receiving, by the second device, the second information sent from the first device, includes:
receiving, by the second device, the second information sent from the first device in a case where a third condition is met, wherein the third condition comprises one or more conditions as follows:
at least one of: at least one terminal device of multiple associated terminal devices, a terminal device enabling the first behavior, or a terminal device identified as synchronous or associated is configured or exists;
at least one of: at least one LCH/LCG of multiple associated LCHs/LCGs, an LCH/LCG enabling the first behavior, or an LCH/LCG identified as synchronous or associated is configured or exists;
a first transmission parameter is used for a first duration;
a second transmission parameter is configured or used;
data of one of associated DRBs/LCHs, at least one DRB/LCH of multiple associated DRBs/LCHs, a DRB/LCH of a terminal device enabling the first behavior, and a DRB/LCH identified as synchronous or associated arrives;
a transmission latency of one of associated DRBs/LCHs, at least one DRB/LCH of multiple associated DRBs/LCHs, a DRB/LCH of a terminal device enabling the first behavior, and a DRB/LCH identified as synchronous or associated meets a thirteenth threshold;
a data volume of one of associated DRBs/LCHs, at least one DRB/LCH of multiple associated DRBs/LCHs, a DRB/LCH of a terminal device enabling the first behavior, and a DRB/LCH identified as synchronous or associated meets a fourteenth threshold;
data of one of associated terminal devices, at least one terminal device of multiple associated terminal devices, a terminal device enabling the first behavior, and a terminal device identified as synchronous or associated arrives;
to-be-transmitted data or to-be-transmitted data information from the associated terminal devices is received;
the first device receives third information, wherein the third information is used for a terminal device associated with the first device to request the first device to send the second information;
a transmission latency of one of associated terminal devices, at least one terminal device of multiple associated terminal devices, a terminal device enabling the first behavior, and a terminal device identified as synchronous or associated meets a fifteenth threshold;
a data volume of one of associated terminal devices, at least one of the plurality terminal device of associated terminal devices, a terminal device enabling the first behavior, and a terminal device identified as synchronous or associated meets a sixteenth threshold; or
the network device indicates to enabled or activate the first behavior.

80. The method according to any one of claims 64 to 79, further comprising:
receiving, by the second device, fourth information sent from the first device, wherein the fourth information is used to indicate a buffer status or a transmission status of the first data.

81. The method according to claim 80, wherein associated logical channels include a first LCH and a second LCH, the fourth information is used to indicate one or more of:
an association relationship between the first LCH and the second LCH;
an identification of the first LCH or a corresponding DRB;
an identification of the second LCH or a corresponding DRB;
a transmission latency and/or a data volume size of the first LCH; or
a transmission latency and/or a data volume size of the second LCH.

82. The method according to claim 80 or 81, wherein associated logical channels correspond to a first terminal device and a second terminal device, the fourth information is used to indicate one or more of:
an association relationship between the first terminal device and the second terminal device;
an identification of the first terminal device;
an identification of the second terminal device;
identifications of DRBs/LCHs with an association relationship and of the first terminal device;
identifications of DRBs/LCHs with an association relationship and of the second terminal device;
a transmission latency and/or a data volume size of the first terminal device;
a transmission latency and/or a data volume size of the second terminal device;
transmission latencies and/or data volume sizes of logical channels with an association relationship and of the first terminal device; or
transmission latencies and/or data volume sizes of the logical channels with an association relationship and of the second terminal device.

83. The method according to any one of claims 64 to 82, further comprising:
receiving, by the second device, fifth information sent from the first device, wherein the fifth information is used for one or more of:
indicating an identification of a data packet that is lost or delayed;
indicating a packet that is not required to be transmitted or is considered to have been received;
indicating that some or all of the first data are not be able to be transmitted;
requesting that the second device discards some or all of the first data;
indicating an identification of data that is not be able to be transmitted in the first data; or
indicating an identification of data to be discarded in the first data.

84. The method according to any one of claims 64 to 83, wherein the first information includes second configuration information, and the second configuration information is used to configure a DRB/PDCP, or to configure one or multiple terminal devices.

85. The method according to claim 84, wherein the DRB/PDCP has a mapping relationship with the first data, and/or the multiple terminal devices have a mapping relationship with the first data.

86. The method according to claim 84 or 85, wherein
the second configuration information is used to indicate that DRBs/PDCPs have a synchronous or collaborative transmission requirement; or
the second configuration information is used to identify DRBs/PDCPs with an associated or synchronous or collaborative transmission requirement; or
the second configuration information is used to identify the multiple terminal devices with an associated or synchronous or collaborative transmission requirement; or
the second configuration information is used to enable or activate discarding of data packets having an association relationship; or
the second configuration information is used to enable or activate sending/triggering behavior of the first information.

87. The method according to any one of claims 84 to 86, wherein the second configuration information is used to indicate an association relationship among DRBs/PDCPs with a synchronous or collaborative transmission requirement.

88. The method according to any one of claims 84 to 87, further comprising:
receiving, by the second device, first indication information sent from the first device in a case where a fourth condition is met, wherein the fourth condition includes one or more conditions as follows:
an associated data packet is discarded;
a transmission failure indication is received from the second device;
N transmission failure indications are received from the second device;
the transmission failure indication is received from the second device within a third duration;
a successfully transmitted packet data unit (PDU)/ packet data unit set (PDU set) meets a first ratio;
a number of the successfully transmitted PDUs/PDU sets meets a seventeenth threshold;
a PDU/PDU set at a specific position is not transmitted or is not successfully transmitted; or
a PDU/PDU set of a specific type is not transmitted or is not successfully transmitted.

89. The method according to claim 88, wherein associated DRBs/PDCPs include a first data packet and a second data packet, the first indication information is used for one or more of:
indicating identifications of associated terminal devices;
indicating identifications of associated DRBs/PDCPs;
indicating an identification of a data packet that is lost or delayed;
indicating an identification of the first data packet;
indicating an identification of a data packet associated with the first data packet;
indicating an identification of a DRB/PDCP/LCH or a DRB/PDCP/LCH corresponding to the first data packet;
indicating an identification of a DRB/PDCP/LCH or DRB/PDCP/LCH of a data packet associated with the first data packet;
indicating an identification of a terminal device associated with the first data packet;
indicating an identification of a terminal device corresponding to a data packet associated with the first data packet;
indicating that the first data packet is not required;
indicating that the first data packet and the second data packet are not required;
indicating discarding information of the first data packet;
indicating that a network device discards the first data packet; or
indicating that a network device discards the first data packet and the second data packet.

90. The method according to claim 88, wherein the transmission failure indication is for a data packet, or all data packets in a PDCP/RLC/ buffer of a terminal device, or a data packet with a specific identification in the PDCP/RLC/buffer of the terminal device.

91. The method according to any one of claims 88 to 90, wherein the first indication information is discarding indication information for a specific data packet, a terminal device, or a QoS flow/DRB/PDCP/RLC, or a data packet buffered by the terminal device.

92. The method according to any one of claims 64 to 91, wherein the first information further comprises sixth information, the sixth information is used to indicate a first transmission resource of a terminal device, and the first transmission resource is used to transmit the first data.

93. The method according to claim 92, wherein the sixth information comprises an identification of the first transmission resource or an identification of a specific DRB/LCH/terminal device.

94. The method according to claim 92 or 93, wherein the sixth information is carried in radio resource control (RRC) configuration and/or DCI signaling.

95. The method according to any one of claims 92 to 94, wherein the first transmission resource is a configured grant resource or a dynamic grant resource.

96. The method according to any one of claims 92 to 95, wherein the first transmission resource includes one or more transmission resources.

97. The method according to claim 96, wherein in case where the first transmission resource includes the multiple transmission resources, the multiple transmission resources are continuous or discontinuous.

98. The method according to any one of claims 92 to 97, wherein configuration information of associated DRBs/PDCPs/LCHs includes a synchronous or collaborative transmission requirement identification, or an association relationship of synchronous or collaborative transmission.

99. The method according to any one of claims 92 to 98, wherein a specific configured grant resource and/or a specific dynamic grant resource is used to transmit data of a specific DRB/LCH/terminal device, or to transmit data of associated DRBs/PDCPs/LCHs.

100. The method according to any one of claims 64 to 99, further comprising:
receiving, by the second device, second indication information sent from the first device in a case where the first device is a terminal device and the second device is a network device, wherein the second indication information is used to request a second transmission resource, and the second transmission resource is used to transmit the first data.

101. The method according to claim 100, wherein the second indication information is used to indicate one or more of:
at least one of: at least one terminal device of multiple associated terminal devices, a terminal device enabling the first behavior, or a terminal device identified as synchronous or associated is configured or exists;
at least one of: at least one LCH/LCG of multiple associated LCHs/LCGs, an LCH/LCG enabling the first behavior, or an LCH/LCG identified as synchronous or associated is configured or exists;
at least one of associated DRBs/LCHs, at least one LCH/LCG of multiple associated DRBs/LCHs, a DRB/LCH of a terminal device enabling the first behavior, and a DRB/LCH identified as synchronous or associated is not transmitted or is not transmitted successfully;
a transmission latency of one of associated DRBs/LCHs, at least one LCH/LCG of multiple associated DRBs/LCHs, a DRB/LCH of a terminal device enabling the first behavior, and a DRB/LCH identified as synchronous or associated;
a to-be-transmitted data volume of one of the associated DRBs/LCHs, at least one DRB/LCH of multiple associated DRBs/LCHs, a DRB/LCH of a terminal device enabling the first behavior, and a DRB/LCH identified as synchronous or associated;
an identification of a DRB/LCH that is not transmitted or is not successfully transmitted in associated DRBs/LCHs; or
an identification of a DRB/LCH associated with the DRB/LCH that is not transmitted or is not successfully transmitted.

102. The method according to any one of claim 100 or 101, wherein the second indication information is carried in media access control signaling or uplink control information.

103. The method according to any one of claims 64 to 102, wherein a transmission resource of a first DRB/LCH/terminal device is used to transmit information or data of a second DRB/LCH/terminal device, wherein the first DRB/LCH is associated with the second DRB/LCH.

104. The method according to claim 103, wherein the transmission resource of the first DRB/LCH/terminal device being used to transmit information or data of the second DRB/LCH/terminal device, comprises:
using one or more transmission occasions in the transmission resource of the first DRB/LCH/terminal device to transmit the information or data of the second DRB/LCH/terminal device in a case where the first DRB/LCH/terminal device has no data to be transmitted and the second DRB/LCH/terminal device has data to be transmitted; or
using a remaining resource to transmit the information or data of the second DRB/LCH/terminal device in a case where the first DRB/LCH/terminal device has data to be transmitted, the second DRB/LCH/terminal device has data to be transmitted, and one or more transmission occasions in the transmission resource of the first DRB/LCH/terminal device include the remaining resource.

105. The method according to claim 104, wherein in a case where the first DRB/LCH/terminal device has data to be transmitted, and the second DRB/LCH/terminal device has data to be transmitted, and the one or more transmission occasions in the transmission resource of the first DRB/LCH/terminal device include the remaining resource, padding is not added, and/or, the remaining resource is used to transmit the information or data of the second DRB/LCH/terminal device.

106. The method according to any one of claims 64 to 105, wherein a priority of the transmission resource or a priority of a grant is determined based on an association relationship of DRBs/LCHs/terminal devices.

107. The method according to claim 106, wherein the priority of the transmission resource is determined based on one or more of:
whether at least one of: at least one terminal device of multiple associated terminal devices, a terminal device enabling the first behavior, or a terminal device identified as synchronous or associated is configured or exists;
whether at least one of: at least one LCH/LCG of multiple associated LCHs/LCGs, an LCH/LCG enabling the first behavior, or an LCH/LCG identified as synchronous or associated is configured or exists;
whether a second transmission parameter is configured or used;
whether the transmission resource carries the first data;
whether the priority of the transmission resource is higher than a twentieth threshold;
whether the transmission resource is a specific transmission resource;
whether a transmission latency of the first data is less than or equal to a twenty-first threshold;
whether a data volume of the first data is greater than or equal to a twenty-second threshold;
whether data that is able to be carried on the transmission resource has an association relationship;
whether a transmission latency of data that is able to be carried on the transmission resource meets a twenty-third threshold; or
whether a to-be-transmitted data volume of data that is able to be carried on the transmission resource meets a twenty-fourth threshold.

108. The method according to any one of claims 64 to 107, wherein a priority of a HARQ process is determined based on an association relationship of DRBs/LCHs/terminal devices, or associated HARQ processes are transmitted by using the transmission resource based on the association relationship of the DRBs/LCHs/terminal devices.

109. The method according to claim 108, wherein the priority of the HARQ process is determined based on one or more of:
whether at least one of: at least one terminal device of multiple associated terminal devices, a terminal device enabling the first behavior, or a terminal device identified as synchronous or associated is configured or exists;
whether a second transmission parameter is configured or used;
whether the HARQ process corresponds to at least one of at least one terminal device of multiple associated terminal devices, a terminal device enabling the first behavior, and a terminal device identified as synchronous or associated;
whether the HARQ process corresponds to at least one of at least one LCH/LCG of multiple associated LCHs/LCGs, an LCH/LCG enabling the first behavior, and an LCH/LCG identified as synchronous or associated;
whether the HARQ process corresponds to an LCH/LCG configured with or using the second transmission parameter;
whether the HARQ process corresponds to a terminal device configured with or using the second transmission parameter;
whether the transmission resource carries the first data;
whether a priority of the transmission resource is higher than a twenty-fifth threshold;
whether the transmission resource is a specific transmission resource;
whether the HARQ process corresponds to the first data;
whether a transmission latency of data corresponding to the HARQ process is less than or equal to a twenty-sixth threshold;
whether a data volume corresponding to the HARQ process is greater than or equal to a twenty-seventh threshold;
whether data that is able to be carried in the HARQ process has an association relationship;
whether a transmission latency of data that is able to be carried in the HARQ process meets a twenty-eighth threshold; or
whether a to-be-transmitted data volume of data that is able to be carried in the HARQ process meets a twenty-ninth threshold.

110. The method according to any one of claims 64 to 109, further comprising:
receiving, by the second device, the first data sent from the first device;
buffering, by the second device, the first data; and
sending, by the second device, the first data to a high-layer in a case where all of the first data arrive.

111. The method according to any one of claims 64 to 110, further comprising:
receiving, by the second device, seventh information sent from the first device, wherein the seventh information is used to indicate an association relationship between terminal devices, quality of service flows, and DRBs/PDCPs/RLCs/PDUs, or to indicate requirements having the association relationship.

112. The method according to claim 111, wherein the seventh information is used to indicate one or more of:
an associated transmission/a collaborative transmission /a synchronous or collaborative transmission requirement between the terminal devices;
an associated transmission/a collaborative transmission/a synchronous or collaborative transmission requirement of the quality of service flows;
an associated transmission/a collaborative transmission/a synchronous or collaborative transmission requirement between the DRBs/PDCPs/RLCs; or
an associated transmission/a collaborative transmission/a synchronous or collaborative transmission requirement of PDU sessions.

113. The method according to claim 111 or 112, wherein the second device receives the seventh information sent from the first device in a case where the seventh information changes, and/or the seventh information has not been reported, and/or the seventh information is obtained; or the second device periodically receives the seventh information sent from the first device.

114. The method according to any one of claims 64 to 113, further comprising:
receiving, by the second device, eighth information sent from the first device, wherein the eighth information is used to indicate configuration information of associated DRBs/LCHs or update information of the configuration information of the associated DRBs/LCHs.

115. The method according to any one of claims 64 to 114, further comprising:
receiving, by the second device, ninth information sent from the first device, wherein the ninth information is related to a first terminal device and/or a second terminal device.

116. The method according to claim 115, wherein the first terminal device and the second terminal device have a mapping relationship with associated DRBs/LCHs, the first device is a first network device corresponding to the first terminal device, and the second device is a second network device corresponding to the second terminal device.

117. The method according to claim 115 or 116, wherein the ninth information includes one or more of:
resource information allocated or scheduled by a first network device for the first terminal device;
suggestion information for a second network device to allocate or schedule a resource for the second terminal device;
RRC signaling configured by a first network device for the first terminal device;
suggestion information for the second network device to configure RRC for the second terminal device;
a mapping relationship between a QoS flow and a DRB/LCH/PDCP configured by a first network device for the first terminal device;
suggestion information for a second network device to configure a mapping relationship between a QoS flow and a DRB/LCH/PDCP for the second terminal device;
at least one of time information, time stamp information and association information of the first terminal device; or
at least one of time information, time stamp information and association information of the second terminal device.

118. The method according to any one of claims 115 to 117, wherein in a case where the second device is a second network device, the second device determines one or more of the following information of the second terminal device based on the ninth information:
whether the first behavior is enabled;
resource scheduling or allocation information;
configured RRC signaling;
a mapping relationship between a QoS flow and a DRB/LCH/PDCP; or
association information of the second terminal device.

119. The method according to any one of claims 115 to 118, wherein the ninth information is information for associated DRBs/LCHs/PDCPs, associated terminal devices, or associated QoS flows, or associated PDU sessions.

120. A wireless communication method, comprising:
receiving, by a terminal device, tenth information sent from a network device, where the tenth information is used to indicate configuration information of packet-based packet data convergence protocol (PDCP) data duplication transmission.

121. The method according to claim 120, wherein the tenth information is used to indicate one or more of:
an importance level of activatable data packet-based PDCP data duplication transmission corresponding to an initial state;
a protocol data unit set (PDU set) importance level using the configuration information;
an importance level of a data packet using packet-based PDCP data duplication transmission;
indicating that a data packet meeting a specific PDU set importance level uses data packet-based PDCP data duplication transmission; or
indicating that a data packet or a PDU set greater than or equal to a first importance level uses data packet-based PDCP data duplication transmission.

122. The method according to claim 120 or 121, wherein if the tenth information comprises the configuration information of packet-based PDCP data duplication transmission, the tenth information is used to indicate whether packet-based/PDU set-based PDCP data duplication transmission is enabled, or the tenth information is used to indicate an initial state of packet-based/PDU set-based PDCP data duplication transmission.

123. The method according to any one of claims 120 to 122, wherein the tenth information is configuration information for the terminal device, and/or the tenth information is configuration information for a data radio bearer (DRB) /PDCP.

124. The method according to any one of claims 120 to 123, wherein the tenth information is carried in a radio resource control (RRC) signaling, and/or the tenth information is carried in PDCP configuration information.

125. The method according to any one of claims 120 to 124, further comprising:
receiving, by the terminal device, eleventh information sent from the network device, wherein the eleventh information is used to indicate to activate or deactivate packet-based PDCP data duplication transmission.

126. The method according to claim 125, wherein the eleventh information is carried in downlink control information (DCI), a medium access control signaling, or a RRC signaling.

127. The method according to claim 125 or 126, wherein the eleventh information is a control signaling for the terminal device, all DRBs, or one or more DRBs.

128. The method according to any one of claims 125 to 127, wherein the eleventh information comprises a logical channel identification (LCID), and the LCID is used to identify or recognize the eleventh information.

129. The method according to any one of claims 125 to 128, wherein the eleventh information comprises PDCP duplication transmission activation/deactivation indication information for a PDU set, or PDCP activation/deactivation indication information for a data packet, or PDCP duplication transmission activation/deactivation indication information for a PDU.

130. The method according to any one of claims 125 to 129, further comprising:
receiving, by the terminal device, twelfth information sent from the network device, wherein the twelfth information is used to indicate to activate or deactivate DRB-based or RLC-based PDCP data duplication transmission.

131. The method according to claim 130, wherein in a case where the terminal device receives the eleventh information and the twelfth information, the terminal device uses packet-based PDCP data duplication transmission or DRB-based or RLC-based PDCP data duplication transmission; or, the terminal device determines a duplication transmission strategy to be used based on an importance level of a data packet.

132. The method according to claim 131, wherein the terminal device determining the duplication transmission strategy to be used based on the importance level of the data packet, includes:
a data packet greater than or equal to a second importance level uses all first transmission resources for duplication transmission, and a data packet less than or equal to the second importance level uses some of the first transmission resources for duplication transmission; or
a data packet greater than or equal to a third importance level uses all the first transmission resources for duplication transmission, and a data packet less than or equal to the third importance level does not perform duplication transmission; or
a data packet greater than or equal to a fourth importance level uses some of the first transmission resources for duplication transmission, and a data packet less than or equal to the fourth importance level does not perform duplication transmission; or
a data packet greater than or equal to a second importance level determines a duplication transmission strategy of the data packet based on the eleventh information, and a data packet less than or equal to the second importance level does not perform duplication transmission; or
a data packet greater than or equal to a third importance level determines a duplication transmission strategy of the data packet based on the eleventh information, and the data packet less than or equal to the third importance level does not perform duplication transmission;
a data packet greater than or equal to a fourth importance level determines a duplication transmission strategy of the data packet based on the eleventh information, and a data packet less than or equal to the fourth importance level does not perform duplication transmission; or
a data packet greater than or equal to a second importance level determines the duplication transmission strategy of the data packet based on the eleventh information, and a data packet less than or equal to the second importance level determines a duplication transmission strategy of the data packet based on the twelfth information; or
a data packet greater than or equal to a third importance level determines the duplication transmission strategy of the data packet based on the eleventh information, and a data packet less than or equal to the third importance level determines a duplication transmission strategy of the data packet based on the twelfth information; or
a data packet greater than or equal to a fourth importance level determines the duplication transmission strategy of the data packet based on the eleventh information, and the data packet less than or equal to the fourth importance level determines a duplication transmission strategy of the data packet based on the twelfth information; or
a data packet greater than or equal to a second importance level determines the duplication transmission strategy of the data packet based on the twelfth information, and a data packet less than or equal to the second importance level determines the duplication transmission strategy of the data packet based on the eleventh information; or
a data packet greater than or equal to a third importance level determines the duplication transmission strategy of the data packet based on the twelfth information, and a data packet less than or equal to the third importance level determines the duplication transmission strategy of the data packet based on the eleventh information; or
a data packet greater than or equal to a fourth importance level determines the duplication transmission strategy of the data packet based on the twelfth information, and a data packet less than or equal to the fourth importance level determines the duplication transmission strategy of the data packet based on the eleventh information.

133. The method according to any one of claims 125 to 132, wherein the eleventh information includes one or more of:
a DRB identification;
an LCH identification;
an importance level of a data packet; or
an identification of an LCH used by a data packet of a specific importance level.

134. A wireless communication method, comprising:
sending, by a network device, tenth information to a terminal device, wherein the tenth information is used to indicate configuration information of packet-based packet data convergence protocol (PDCP) data duplication transmission.

135. The method according to claim 134, wherein the tenth information is used to indicate one or more of:
an importance level of activatable packet-based PDCP data duplication transmission corresponding to an initial state;
a protocol data unit set (PDU set) importance level using the configuration information;
an importance level of a data packet using packet-based PDCP data duplication transmission;
indicating that a data packet meeting a specific PDU set importance level uses packet-based PDCP data duplication transmission; or
indicating that a data packet or a PDU set greater than or equal to a first importance level uses packet-based PDCP data duplication transmission.

136. The method according to claim 134 or 135, wherein if the tenth information comprises the configuration information of packet-based PDCP data duplication transmission, the tenth information is used to indicate whether packet-based/PDU set-based PDCP data duplication transmission is enabled, or the tenth information is used to indicate an initial state of packet-based/PDU set-based PDCP data duplication transmission.

137. The method according to any one of claims 134 to 136, wherein the tenth information is configuration information for the terminal device, and/or the tenth information is configuration information for a data radio bearer (DRB) /PDCP.

138. The method according to any one of claims 134 to 137, wherein the tenth information is carried in a radio resource control (RRC) signaling, and/or the tenth information is carried in PDCP configuration information.

139. The method according to any one of claims 134 to 138, further comprising:
sending, by the network device, eleventh information to the terminal device, wherein the eleventh information is used to indicate to activate or deactivate packet-based PDCP data duplication transmission.

140. The method according to claim 139, wherein the eleventh information is carried in downlink control information (DCI), a medium access control signaling, or a RRC signaling.

141. The method according to claim 139 or 140, wherein the eleventh information is a control signaling for the terminal device, all DRBs, or one or more DRBs.

142. The method according to any one of claims 139 to 141, wherein the eleventh information comprises a logical channel identification (LCID), and the LCID is used to identify or recognize the eleventh information.

143. The method according to any one of claims 139 to 142, wherein the eleventh information comprises PDCP duplication transmission activation/deactivation indication information for a PDU set, or PDCP activation/deactivation indication information for a data packet, or PDCP duplication transmission activation/deactivation indication information for a PDU.

144. The method according to any one of claims 139 to 143, further comprising:
sending, by network device, twelfth information to the terminal device, wherein the twelfth information is used to indicate to activate or deactivate DRB-based or RLC-based PDCP data duplication transmission.

145. The method according to any one of claims 139 to 144, wherein the eleventh information includes one or more of:
a DRB identification;
an LCH identification;
an importance level of a data packet; or
an identification of an LCH used by a data packet of a specific importance level.

146. A wireless communication method, comprising:
sending, by a first network device, a cell handover request to a second network device to perform a cell handover process of a terminal device, wherein the cell handover process is determined based on thirteenth information, wherein the thirteenth information is related to transmission of first data, and the first data is data with an association relationship, the first network device is a source network device of the terminal device, and the second network device is a candidate target network device of the terminal device.

147. The method according to claim 146, wherein a cell handover request message includes the thirteenth information, and the thirteenth information is associated with the terminal device.

148. The method according to claim 147, wherein before sending, by the first network device, the cell handover request to the second network device, the method further comprises:
receiving, by the first network device, the thirteenth information sent from the terminal device or a core network node.

149. The method according to claim 148, wherein the core network node is one or more of:
an application function network element;
a user plane function network element;
a mobility management function network element; and
a session management function network element.

150. The method according to claim 148 or 149, wherein the first network device receives the thirteenth information sent from the terminal device in a case where one or more of the following cases are met:
the terminal device has not sent the thirteenth information to the first network device;
the terminal device establishes or modifies part or all of content of the thirteenth information;
the terminal device initiates a service request;
a prohibit timer being not running is reported; or
part or all of content of the thirteenth information changes.

151. The method according to any one of claims 146 to 150, further comprising:
receiving, by the first network device, fourteenth information sent from the second network device, wherein the fourteenth information is a response message for a handover request message, and the fourteenth information is determined based on the thirteenth information.

152. The method according to claim 151, wherein the fourteenth information includes one or more of:
whether the second network device supports access of the terminal device;
whether the second network device supports a protocol data unit set (PDU set); or
whether the second network device supports transmission of the first data.

153. The method according to claim 151 or 152, further comprising:
determining, by the first network device, whether the second network device is a target network device of the terminal device based on the fourteenth information.

154. The method according to claim 146, wherein before sending, by the first network device, the cell handover request to the second network device, the method further comprises:
obtaining, by the first network device, the thirteenth information, wherein the thirteenth information is associated with the second network device.

155. The method according to claim 154, wherein the first network device obtains the thirteenth information from a core network node, an operation administration and maintenance (OAM), a network device adjacent to the first network device, or the second network device.

156. The method according to claim 155, wherein the core network node is one or more of:
an application function network element;
a user plane function network element;
a mobility management function network element; or
a session management function network element.

157. The method according to any one of claims 154 to 156, wherein the first network device obtains the thirteenth information in response to one or more cases as follows:
a request from the first network device;
an update of the thirteenth information;
a periodic update time;
establishment of an interface between the second network device and the first network device;
establishment of an interface between the second network device and a core network node; or
obtainment of the thirteenth information.

158. The method according to any one of claims 154 to 157, wherein sending, by the first network device, the cell handover request to the second network device, comprises:
sending, by the first network device, the cell handover request to the second network device based on the thirteenth information.

159. The method according to any one of claims 146 to 158, wherein in a case where multiple second network devices exist, the first network device does not select a network device that does not support transmission of the first data and/or does not support a PDU set; or
the first network device selects a network device that supports transmission of the first data and/or supports the PDU set.

160. The method according to any one of claims 146 to 159, wherein the thirteenth information includes one or more of the following information:
an association relationship of quality of service flows;
an association relationship between multiple terminal devices; or
whether a PDU set is enabled;
wherein the multiple terminal devices are receivers and/or senders of the first data.

161. The method according to any one of claims 146 to 160, wherein the first data comprises associated multi-modality data flows and/or associated data packets.

162. The method according to any one of claims 146 to 161, further comprising:
sending, by the first network device to the second network device, a transmission latency of the first data; or
sending, by the first network device to the second network device, a transmission latency of a PDU set to which the first data belongs; or
sending, by the first network device to the second network device, a transmission latency of data, a data packet or a PDU set associated with the first data.

163. A wireless communication method, comprising:
receiving, by a second network device, a cell handover request sent from a first network device to perform a cell handover process of a terminal device, wherein the cell handover process is determined based on thirteenth information, the thirteenth information is related to transmission of data with an association relationship, the first network device is a source network device of the terminal device, and the second network device is a candidate target network device of the terminal device.

164. The method according to claim 163, wherein a cell handover request message includes the thirteenth information, and the thirteenth information is associated with the terminal device.

165. The method according to claim 163, wherein before receiving, by the second network device, the cell handover request sent from the first network device, or when receiving, by the second network device, the cell handover request sent from the first network device, or after receiving, by the second network device, the cell handover request sent from the first network device, the method further comprises:
obtaining, by the second network device, the thirteenth information, wherein the thirteenth information is associated with the terminal device.

166. The method according to claim 165, wherein the thirteenth information is obtained by the second network device from a core network node or an operation administration and maintenance (OAM), or the thirteenth information is obtained by the second network device from the first network device.

167. The method according to claim 166, wherein the core network node is one or more of:
an application function network element;
a user plane function network element;
a mobility management function network element; and
a session management function network element.

168. The method according to any one of claims 165 to 167, wherein the second network device obtains the thirteenth information in response to one or more of the following cases:
a request from the second network device;
an update of the thirteenth information;
a periodic update time;
establishment of an interface between the second network device and the first network device;
establishment of an interface between the second network device and a core network node; and
obtainment of the thirteenth information.

169. The method according to any one of claims 163 to 168, further comprising:
sending, by the second network device, fourteenth information to the first network device, wherein the fourteenth information is a response message for a handover request message, and the fourteenth information is determined based on the thirteenth information.

170. The method according to claim 169, wherein the fourteenth information includes one or more of:
whether the second network device supports access of the terminal device;
whether the second network device supports a PDU set; or
whether the second network device supports transmission of first data.

171. The method according to claim 163, wherein the receiving, by the second network device, the cell handover request sent from the first network device, comprises:
receiving, by the second network device, the cell handover request sent from the first network device, wherein the cell handover request is determined based on the thirteenth information, and the thirteenth information is associated with the second network device.

172. The method according to any one of claims 163 to 171, wherein the thirteenth information includes one or more of the following information:
an association relationship of quality of service flows;
an association relationship between multiple terminal devices; or
whether a PDU set is enabled;
wherein the multiple terminal devices are receivers and/or senders of the associated data.

173. The method according to any one of claims 163 to 172, wherein the first data comprises associated multi-modality data flows and/or associated data packets.

174. The method according to claim 163, wherein in a case where the terminal device is handed over to the second network device, the method further comprises:
receiving, by the second network device, the thirteenth information sent from the terminal device, wherein the thirteenth information is associated with the terminal device.

175. The method according to claim 174, wherein the second network device receives or obtains the thirteenth information sent from the terminal device in a case where one or more of the following cases are met:
the terminal device receives a cell handover command;
the terminal device has not reported the thirteenth information to the first network device;
the terminal device has not reported the thirteenth information;
the terminal device reports the thirteenth information within a first time before a cell handover;
the second network device requests the terminal device to send the thirteenth information; or
the terminal device is configured to report the thirteenth information to a target network device after the cell handover.

176. The method according to any one of claims 163 to 175, wherein in a case where the terminal device is handed over to the second network device, the method further comprises:
adding, by the second network device, related information of a PDU set to first data/data packet, or adding, by the second network device, packet header information to the first data/data packet, wherein the first data/packet is some of the first data transmitted by the first network device before the terminal device performs cell handover, the packet header information indicates the related information of the PDU set or indicates the PDU set to which the data packet belongs.

177. The method according to claim 176, wherein in a case where a transmission latency of the first data/data packet is greater than or equal to a first threshold, the second network device discards the first data/packet.

178. The method according to claim 177, wherein in a case where the transmission latency of the first data/data packet is greater than or equal to the first threshold, the second network device discards all data packets in the PDU set to which the first data/packet belongs, or discards data, a data packet or a PDU set associated with the first data/data packet.

179. The method according to any one of claims 163 to 178, wherein:
the second network device receives a transmission latency of first data sent from the first network device or the terminal device; or
the second network device receives a transmission latency of a PDU set to which the first data belongs sent from the first network device or the terminal device; or
the second network device receives a transmission latency of data, a data packet or a PDU set associated with the first data sent from the first network device or the terminal device.

180. A wireless communication method, comprising:
performing, by a terminal device, a cell handover, wherein a cell handover process is determined based on thirteenth information, the thirteenth information is related to transmission of first data, and the first data is data with an association relationship.

181. The method according to claim 180, wherein the thirteenth information is carried in a request message of the cell handover, and the thirteenth information is associated with the terminal device.

182. The method according to claim 181, wherein before performing, by the terminal device, the cell handover, the method further comprises:
sending, by the terminal device, the thirteenth information to a first network device, wherein the first network device is a source network device before the terminal device performs the cell handover.

183. The method according to claim 182, wherein the terminal device sends the thirteenth information to the first network device in a case where one or more of the following cases are met:
the terminal device has not sent the thirteenth information to the first network device;
the terminal device establishes or modifies part or all of content of the thirteenth information;
the terminal device initiates a service request;
a prohibit timer being not running is reported; or
part or all of content of the thirteenth information changes.

184. The method according to any one of claims 180 to 183, wherein the thirteenth information includes one or more of the following information:
an association relationship of quality of service flows;
an association relationship between multiple terminal devices; or
whether a protocol data unit set (PDU set) is enabled;
wherein the multiple terminal devices are receivers and/or senders of the first data.

185. The method according to any one of claims 180 to 184, wherein the first data includes associated multi-modality data flows and/or associated data packets.

186. The method according to claim 180, wherein in a case where the terminal device is handed over to a second network device, the method further comprises:
sending, by the terminal device, the thirteenth information to the second network device, wherein the thirteenth information is associated with the terminal device.

187. The method according to claim 186, wherein the terminal device sends the thirteenth information to the second network device in a case where one or more of the following cases are met:
the terminal device receives a cell handover command;
the terminal device has not reported the thirteenth information to a first network device;
the terminal device has not reported the thirteenth information;
the terminal device reports the thirteenth information within a first time before the cell handover;
the second network device requests the terminal device to send the thirteenth information; and
the terminal device is configured to report the thirteenth information to a target network device after the cell handover.

188. The method according to any one of claims 180 to 187, further comprising:
sending, by the terminal device, a transmission latency of the first data to a second network device; or
sending, by the terminal device, a transmission latency of a PDU set to which the first data belongs to the second network device; or
sending, by the terminal device, a transmission latency of data, a data packet or a PDU set associated with the first data to the second network device.

189. A communication device, wherein the device is a first device, and the device comprises:
a receiving unit, configured to receive first information sent from a second device, wherein the first information is used to enable or activate a first behavior, or the first information is used to configure a parameter of first data, or the first information is used to determine a transmission resource of the first data, the first data is data with an association relationship, and the first behavior is related to the first data.

190. A communication device, wherein the device is a second device, and the device comprises:
a sending unit, configured to send first information to a first device, wherein the first information is used to enable or activate a first behavior, or the first information is used to configure a parameter of first data, or the first information is used to determine a transmission resource of the first data, the first data is data with an association relationship, and the first behavior is related to the first data.

191. A terminal device, comprising:
a receiving unit, configured to receive tenth information sent from a network device, wherein the tenth information is used to indicate configuration information of packet-based packet data convergence protocol (PDCP) data duplication transmission.

192. A network device, comprising:
a sending unit, configured to send tenth information to a terminal device, wherein the tenth information is used to indicate configuration information of packet-based packet data convergence protocol (PDCP) data duplication transmission.

193. A network device, wherein the network device is a first network device, and the network device comprises:
a sending unit, configured to send a cell handover request to a second network device to perform a cell handover process of a terminal device, wherein the cell handover process is determined based on thirteenth information, the thirteenth information is related to transmission of first data, and the first data is data with an association relationship, the first network device is a source network device of the terminal device, and the second network device is a candidate target network device of the terminal device.

194. A network device, wherein the network device is a second network device, and the network device comprises:
a receiving unit, configured to receive a cell handover request sent from a first network device to perform a cell handover process of a terminal device, wherein the cell handover process is determined based on thirteenth information, the thirteenth information is related to transmission of data with an association relationship, the first network device is a source network device of the terminal device, and the second network device is a candidate target network device of the terminal device.

195. A terminal device, comprising:
an execution unit, configured to perform a cell handover, wherein a cell handover process is determined based on thirteenth information, the thirteenth information is related to transmission of first data, and the first data is data with an association relationship.

196. A terminal device, comprising a memory and a processor, wherein the memory is configured to store a program, and the processor is configured to call the program in the memory to execute the method according to any one of claims 1 to 63, 64 to 119, 120 to 133, and 180 to 188.

197. A network device, comprising a memory and a processor, wherein the memory is configured to store a program, and the processor is configured to call the program in the memory to execute the method according to any one of claims 1 to 63, 64 to 119, 134 to 145, 146 to 162, and 163 to 179.

198. An apparatus, comprising a processor configured to call a program from a memory to execute the method according to any one of claims 1 to 63, 64 to 119, 120 to 133, and 180 to 188.

199. An apparatus, comprising a processor configured to call a program from a memory to execute the method according to any one of claims 1 to 63, 64 to 119, 134 to 145, 146 to 162, and 163 to 179.

200. A chip, comprising a processor configured to call a program from a memory, to enable a device equipped with the chip to execute the method according to any one of claims 1 to 63, 64 to 119, 120 to 133, and 180 to 188.

201. A chip, comprising a processor configured to call a program from a memory to enable a device equipped with the chip to execute the method according to any one of claims 1 to 63, 64 to 119, 134 to 145, 146 to 162, and 163 to 179.

202. A computer-readable storage medium storing a program thereon, wherein the program enables a computer to execute the method according to any one of claims 1 to 63, 64 to 119, 120 to 133, and 180 to 188.

203. A computer-readable storage medium storing a program thereon, wherein the program enables a computer to execute the method according to any one of claims 1 to 63, 64 to 119, 134 to 145, 146 to 162, and 163 to 179.

204. A computer program product, comprising a program, wherein the program enables a computer to execute the method according to any one of claims 1 to 63, 64 to 119, 120 to 133, and 180 to 188.

205. A computer program product, comprising a program, wherein the program enables a computer to execute the method according to any one of claims 1 to 63, 64 to 119, 134 to 145, 146 to 162, and 163 to 179.

206. A computer program, wherein the computer program enables a computer to execute the method according to any one of claims 1 to 63, 64 to 119, 120 to 133, and 180 to 188.

207. A computer program, wherein the computer program enables a computer to execute the method according to any one of claims 1 to 63, 64 to 119, 134 to 145, 146 to 162, and 163 to 179.
